# EUROPEAN PATENT SPECIFICATION

(11) **EP 1 608 516 B1**
(45) Date of publication and mention of the grant of the patent: **24.08.2011**
(21) Application number: 04720250.2
(22) Date of filing: 12.03.2004
(51) Int. Cl.: B41J 11/00, B41J 2/01, B41M 5/00, C09D 11/00

(54) **INK SET, AND IMAGE FORMING PROCESS, IMAGE FORMING APPARATUS, CARTRIDGE AND RECORD USING THE SAME**
TINTENSATZ UND BILDERZEUGUNGSVERFAHREN, BILDERZEUGUNGSVORRICHTUNG, PATRONE SOWIE AUFZEICHNUNG DAMIT
ENSEMBLE POUR ENCRE, PROCEDE DE FORMATION D'IMAGE, APPAREIL DE FORMATION D'IMAGE, CARTOUCHE ET REPRODUCTION LES UTILISANT

(30) Priority: 14.03.2003 JP 2003069672; 14.07.2003 JP 2003196256; 07.11.2003 JP 2003379032; 07.11.2003 JP 2003379028; 07.11.2003 JP 2003379025
(43) Date of publication of application: 28.12.2005
(73) Proprietor: Ricoh Company, Ltd., Tokyo 143-8555 (JP)
(72) Inventor: ADACHI, Hiroshi, Midori-ku, Kanagawa 226-0013 (JP); FURUKAWA, Juichi, Atsugi-shi, Kanagawa 243-0012 (JP)
(74) Representative: Barz, Peter
(86) International application number: PCT/JP2004/003381
(87) International publication number: WO 2004/080723

(56) References cited:
- EP-A- 1 022 151
- EP-A- 1 090 966
- EP-A1- 1 099 733
- EP-A1- 1 125 760
- EP-A1- 1 197 533
- EP-A2- 1 099 731
- EP-A2- 1 106 658
- JP-A- 2003 048 367

## Description

### Technical Field

The present invention relates to an ink-jet image recording system. More specifically, it relates to a two-component ink set for absorbable or nonabsorbable recording media, which avoids feathering and color bleed and can produce glossy images with high density and color saturation and to an image forming process, image forming apparatus, cartridge and record using the ink set.

### Background Art

The ink-jet recording system, in which an image is recorded using droplets of ink containing a colorant, is advantageous in its simple printing mechanism without noise. However, image recording according to the ink-jet recording system invites feathering and color bleed when used in combination with an absorbable recording medium, such as a fibrous recording medium, which absorbs the recording liquid. More specifically, the colorant in the recording liquid irregularly permeates into between fibers of the recording medium, thus deforming the outline of recorded characters to a feather shape (feathering). When inks of different colors are printed on a recording medium in adjacent portions, the color inks are mixed to make the boundary between the colors unclear (color bleed).

To solve these problems, the combination use of a treating liquid that reacts with an ink has been proposed.

For example, Japanese Patent (JP-B) No. 2711098 discloses a recording process in which a treating liquid containing a quaternary ammonium salt or amine salt is reacted with an ink containing a water-soluble dye. JP-B No. 2667401 discloses a recording process in which a treating liquid containing a compound having two or more cationic groups in its molecule is reacted with an ink containing anionic dye. Japanese Patent Application Laid-Open (JP-A) No. 2001-199149 discloses an image forming process in which an ink and a liquid composition are mixed to react a colorant in the ink with fine particles in the liquid composition to thereby allow the fine particles to adsorb the colorant on their surface, and the resulting particles are then aggregated. JP-A No. 2002-201385 discloses an image forming process in which a treating liquid containing cationic fine particles and a cationic substance different the fine particles is reacted with an ink to thereby allow the fine particles to adsorb or possess the colorant on their surface.

These techniques can make the colorant aggregate and are somewhat effective to reduce feathering and color bleed as compared with conventional ink jet systems using an ink alone. However, they have the following disadvantages, respectively.

For example, the use of a quaternary ammonium salt as a reacting agent as in JP-B No. 2711098 invites the diffusion of the colorant, since aggregates with large sizes are not formed. The use of polyallylamine as a reacting agent as in JP-B No. 2667401 also invites the diffusion of the colorant, since the amount of the polyallylamine should be decreased to prevent an increased viscosity of the treating liquid, and the aggregates are thereby formed slowly. Accordingly, these techniques cannot enable the colorant to aggregate at a sufficiently high speed and improve the image quality only to some extent.

In the mechanism in which the fine particles adsorb the colorant in the form of monomolecule, and the resulting adsorbent forms an aggregate as disclosed in JP-A No. 2001-199149, the fine particles and the colorant must be thoroughly mixed to allow all of the colorant to aggregate, and it takes a long time for the colorant and the fine particles to be mixed thoroughly. In fact, the colorant begins to flow before all the colorant aggregates, or the ink that is substantially not related to the reaction flows out to thereby invite feathering and/ or color bleed. In addition, the colorant aggregates slowly, and thereby an unreacted ink (undried ink) remains on the print for some time, thus often inviting stain of the hand or image defects when the print is touched by the hand. The colorant or the fine particles with a large particle size must move around aggregates and be mixed and reacted. In this procedure, the movement of the colorant and/ or the fine particles is inhibited by their steric hindrance, thus decreasing the reaction rate. In addition, the technique disclosed in JP-A No. 2001-199149 produces an image by homogeneously mixing the colorant and fine particles, thereby the entire colorant does not remain on the surface of the recording medium and most of which penetrates into the recording medium. Thus, sufficient image density and color saturation may not be obtained. This is also true in the technique disclosed in JP-A No. 2002-201385.

In addition, the processes of using an ink in combination with a treating liquid that reacts with the ink are still insufficient in gloss of the resulting prints and in printing on nonabsorbable media.

Initially, the gloss of the prints will be described below. Insufficient gloss of prints formed by ink-jet printing is one of reasons that users familiar with prints formed by offset printing, photogravure prints or electrophotographic prints feel uncomfortable with prints formed by ink-jet printing and consider them insufficient in quality. In particular, photographic images and other images that impress the sense of viewers must have sufficient gloss to add a quality appearance to them and to thereby make the viewers (users) feel high quality. However, conventional ink-jet prints are difficult to have sufficient gloss. The ink-jet recording system fixes the colorant basically by allowing the ink containing the colorant to permeate into the recording medium, a layer mainly comprising the colorant is not formed on the outer surface of the recording medium, and fibers of the recording medium (paper) are exposed from the surface thereof and irregularly reflects incident light, thus reducing the gloss.

Proposals have therefore been made to increase the gloss of a print even according to the ink-jet recording system. For example, JP-A No. 2002-256166 discloses an ink containing a microcapsulated pigment. However, the size of the microcapsulated pigment used in the technique is too small to remain on the surface of the recording medium and the pigment penetrates thereinto. Thus, fibers of the recording medium (paper) are exposed from the surface thereof and often irregularly reflect the incident light. The technique cannot therefore produce sufficiently glossy prints.

JP-A No. 2001-039006 discloses a recording process in which a print is coated with a coating composition containing a resin emulsion. However, this technique requires a specific surface treatment, must equip a complicated printer and invites high cost due to large amounts of the coating composition to be consumed.

Next, the printing on nonabsorbable media will be described.

There is great demand for printing on nonabsorbable recording media that hardly absorb inks, such as plastics, resin films, metals, glass and materials for oil painting, in addition to printing on paper. Printing on these nonabsorbable recording media can give prints with higher added value and is important. However, printing on such a nonabsorbable medium according to a conventional ink-jet recording system invites bleed of characters and colors and thus leads to significantly deteriorated image quality, because the medium does not absorb the ink.

As possible solutions to this problem, JP-A No. 2001-115067 discloses a recording process in which ultraviolet rays are applied to an ink containing photoreactive fine polymer particles, and JP-A No. 2001-262022 discloses a recording process in which heat is applied to an ink containing a thermosetting agent.

However, according to these techniques, there is a time lag between the application of the ink to a recording medium and the application of ultraviolet rays or heat to the ink. Thus, the processes do not significantly improve the image quality, must equip an ultraviolet irradiator or heater and require a larger-sized complicated apparatus.

Other possible solutions to print high-quality images on nonabsorbable media, JP-A No. 2001-030616 discloses an ink-jet recording process in which an ink containing a resin emulsion having a lowest film-forming temperature of 20°C or higher is reacted with a treating liquid, and JP-A No. 2002-225414 discloses a recording process in which an ink containing resin emulsion particles is reacted with a treating liquid composition containing a reacting agent and cationic fine polymer particles.

However, according to the process disclosed in JP-A No. 2001-030616, it takes a long time for the colorant and fine particles to be mixed thoroughly, and the unreacted colorant begins to flow. Thus, the flowable colorant flows into depressions in a nonabsorbable recording medium with a rough surface, thus inviting rough outlines of thin lines. The technique disclosed in JP-A No. 2002-225414 shows still insufficient reactivity to produce images with good quality in nonabsorbable recording media.

EP-A2-1099731 relates to an ink set and an image forming method related thereto comprising a step of reacting a droplet of an aqueous ink with a liquid composition on a recording medium, the ink containing a coloring material and the liquid composition containing fine particles reactive with the coloring material, wherein the process comprises that the coloring material reacts with the fine particles in a liquid comprised of the droplet and the liquid composition, the coloring material is adsorbed onto surfaces of the fine particles and the fine particles which have adsorbed the coloring material aggregate with each other. Similar ink sets and image forming methods are also described in EP-A1-1099733. EP-A2-1106658, EP-A1-1197533, and JP-A-2003-048367.

EP-A-1090966 describes an ink set for use in an ink-jet recording method for recording a color image on a recording medium using four ink colors or more, each ink comprises a coloring material and a liquid medium, wherein any combination of two different inks causes aggregation of the coloring material by a chemical reaction on mutual contact on a recording medium.

EP-A-1022151 relates to an ink jet recording method comprising the step of depositing an ink composition and a first liquid containing at least polymeric fine particles onto a recording medium to perform printing, wherein the ink composition is deposited onto the recording medium and, thereafter, the first liquid is deposited onto the recording medium where the ink composition has been deposited.

### Disclosure of Invention

Under these circumstances, an object of the present invention is to provide an ink set that produces a deep, colorful, sharp and glossy print in exact accordance with an original while effectively preventing feathering and color bleed on whichever of absorbable recording media and nonabsorbable recording media (including nonabsorbable recording media with rough surfaces). Another object of the present invention is to provide an image forming process, image recording apparatus and print (record) using the ink set.

After intensive investigations to achieve the above objects, the present inventors have found that a deep, colorful and glossy print (record) can be produced while preventing feathering and color bleed by using an ink set including a treating liquid composition containing fine particles so configured that their dispersion is kept or broken by an external factor, and a recording liquid composition containing a colorant so configured that its dispersion or dissolution is kept or broken by the external factor, allowing the treating liquid composition and the recording liquid composition on a recording medium to change their conditions to thereby aggregate separately without the colorant being substantially mixed with the fine particles. The conditions of the treating liquid composition and the recording liquid composition on the recording medium can be changed by ejecting droplets of the treating liquid composition and the recording liquid composition respectively by ink-jet system onto the recording medium (absorbable or nonabsorbable recording medium) and bringing the individual droplets in contact with each other, or by non-contact action such as electromagnetic waves or heat.

The present invention will be illustrated below.

Specifically, the present invention provides, in a first aspect, an ink set containing at least one treating liquid composition containing fine particles being so configured that their dispersion is kept or broken by an external factor; and at least one recording liquid composition containing a colorant being so configured that its dispersion or dissolution is kept or broken by the external factor, wherein the colorant is one of anionic and cationic, and the fine particles are one of anionic and cationic, wherein a charge of the fine particles is opposite from a charge of a colorant, and the fine particles and the colorant are suitable aggregate separately on a recording medium as a result of the break of their dispersion and/or dissolution without the colorant being substantially mixed with the fine particles so that a layer formed from the fine particles and another layer formed from the colorant are formed separately, to thereby form an image.

The recording liquid composition and treating liquid composition constituting the ink set are preferably aqueous liquids.

The ink set according to the first aspect of the present invention can immediately form layers of the fine particles and of the colorant separately on whichever of an absorbable recording medium and a nonabsorbable recording medium (inclusive of a nonabsorbable recording medium with a rough surface). It can therefore sufficiently prevent feathering and color bleed, can produce a deep, colorful and glossy image with good drying property and image-fixing properties and can thereby produce a high-quality print (record). By selecting the timings that the fine particles and the colorant are exposed to the external factor to cause their aggregation, an image can be formed at any desired time. In addition, by using the fine particles, the ink set can produce a highly glossy record.

The colorant in the recording liquid composition preferably contains one of an anionic group and a cationic group or has one of an anionic-containing compound and a cationic-containing compound on its surface with or without the interposition of another substance.

The fine particles in the treating liquid composition preferably contain one of an anionic group and a cationic group or have one of an anionic-containing compound and a cationic-containing compound on their surface with or without the interposition of another substance.

The colorant has, an opposite charge to that of the fine particles. Specifically, when the fine particles are anionic, the colorant is cationic, and vice versa.

The ink set having one of the above configurations uses an anionic or cationic recording liquid composition and a treating liquid composition having an opposite charge to the recording liquid composition and can thereby immediately form a thick layer essentially containing the colorant on a recording medium. Thus, it can further sufficiently prevent feathering and color bleed, can be dried and fixed satisfactorily, can produce a further deep, colorful and glossy image and can produce a high-quality print (record). More specifically, by allowing the component (fine particles) reactive with the colorant to have an opposite charge to the colorant, an aggregate layer with a stone-wall structure can be formed at the interface between the recording liquid composition and the treating liquid composition to thereby prevent the colorant from penetrating into the recording medium. The resulting recorded image has a further higher density and color saturation.

The contact between the treating liquid composition and the recording liquid composition may cause the external factor to break the dispersion and/ or dissolution of the treating liquid composition and the recording liquid composition.

The external factor is preferably a pH change. Thus, a clear image can be produced without application of extra energy such as heat.

When the treating liquid composition and the recording liquid composition are discharged from an ink-jet head and are superimposed onto the recording medium to form a record, a recorded area in the record preferably has a layer substantially containing the colorant and another layer substantially containing the fine particles, separately.

The layer substantially containing the colorant and the layer substantially containing the fine particles preferably independently have a thickness of 0.01 µm to 10 µm.

The ink set having the above configuration can satisfactorily reproduce a thin line even on a nonabsorbable recording medium, can be dried and fixed satisfactorily and can produce a record with a high image density and color saturation.

The colorant and the fine particles preferably independently have an average particle diameter of 10 nm to 200 nm.

By controlling the colorant and the fine particles to have an average particle diameter of 10 nm to 200 nm, respectively, ions migrate more smoothly and accelerate their aggregation. Thus, the ink set can be stably discharged, can satisfactorily reproduce a thin line even on a nonabsorbable recording medium, can be dried and fixed satisfactorily and can produce a record with a high image density and color saturation.

The difference in pH between the treating liquid composition and the recording liquid composition is preferably 2 or more.

The ink set having the above configuration can further effectively prevent feathering and color bleed, can further satisfactorily reproduce a thin line even on a nonabsorbable recording medium, can be dried and fixed satisfactorily and can produce a record with a high image density and color saturation.

The recording liquid composition preferably has an absolute value of its zeta potential of 5 mV to 90 mV. The resulting recording liquid composition can be stored more stably.

The recording liquid composition preferably has pH of 8.5 to 12.0. Thus, the recording liquid composition becomes less corrosive with respect to a metal to be in contact with the recording liquid composition.

The treating liquid composition preferably has an absolute value of its zeta potential of 5 mV to 90 mV. The resulting treating liquid composition can be stored more stably.

The treating liquid composition preferably has pH of 2.0 to 6.5. Thus, the treating liquid composition becomes less corrosive with respect to a metal to be in contact with the treating liquid composition.

The treating liquid composition preferably further contains 0.001% by weight to 10% by weight of an antifoaming agent. Thus, the treating liquid composition can be discharged more stably.

The present invention provides, a second aspect an image forming process using an ink set according to claim 1 which process contains the steps of:
contacting the treating liquid composition with the recording liquid composition;
causing condition changes in the treating liquid composition and the recording liquid composition as a result of the contact;
causing the fine particles to aggregate as a result of the condition change; and
causing the colorant to aggregate as a result of the condition change.

Thus, a condition change such as pH change or solubility change caused by the external factor causes the fine particles and the colorant to aggregate separately, and the colorant aggregates to form a layer on one side of the interface between the two components without being substantially mixed with the fine particles. Accordingly, the colorant efficiently remains on one side of the recording medium (e.g., on the aggregate of the fine particles) to produce a high-quality record with a high image density and color saturation.

The aggregation of the fine particles in the treating liquid composition is preferably a result of a surface potential change of the fine particles; and the aggregation of the colorant in the recording liquid composition is preferably a result of a surface potential change of the colorant.

According to this configuration, the fine particles and the colorant immediately aggregate separately as a result of their surface potential changes. Thus, the process can produce a further deep and colorful image without feathering and color bleed and can thereby produce a high-quality record.

In the image forming process, a layer substantially containing the fine particles is preferably formed as a result of the aggregation of the fine particles; and a layer substantially containing the colorant is preferably formed as a result of the aggregation of the colorant.

According to this configuration, a layer containing the fine particles and another layer containing the colorant are formed separately, and the colorant aggregates to form the layer on one side of the interface between the two components without being substantially mixed with the fine particles. Accordingly, the colorant further efficiently remains on one side of the recording medium (e.g., on the aggregate of the fine particles) to thereby produce a high-quality record with a further higher image density and color saturation.

In the image forming process, the layer essentially containing the fine particles is preferably formed as a result of the aggregation of the fine particles; and the layer essentially containing the colorant is preferably formed as a result of the aggregation of the colorant, in addition to the aggregation of the fine particles in the treating liquid composition as a result of a surface potential change of the fine particles; and the aggregation of the colorant in the recording liquid composition as a result of a surface potential change of the colorant.

According to this configuration, the surface potentials of the fine particles and of the colorant change and a layer containing the fine particles and another layer containing the colorant are formed separately. Thus, the process can produce a further deep and colorful image while preventing feathering and color bleed and can thereby produce a high-quality record.

The condition changes are preferably caused by ionic migration between the treating liquid composition and the recording liquid composition.

By allowing ions to migrate, the colorant and the fine particles separately aggregate at higher speed to thereby form thicker layers of the colorant and of the fine particles. The process can produce a further glossy image with better drying properties and can yield a high-quality record.

The condition changes are preferably caused by ionic migration between the treating liquid composition and the recording liquid composition, in addition to the aggregation of the fine particles in the treating liquid composition as a result of a surface potential change of the fine particles; and aggregation of the colorant in the recording liquid composition as a result of a surface potential change of the colorant

In addition to the ionic migration to accelerate the aggregation speed, the surface potentials of the fine particles and of the colorant change to thereby further accelerate the aggregation speed. Thus, the process can further satisfactorily reproduce a thin line even on a nonabsorbable recording medium.

The aggregate formed from the fine particles preferably fixes to the recording medium; and the aggregate formed from the colorant preferably fixes to one of the recording medium and the aggregate formed from the fine particles, in addition to the aggregation of the fine particles in the treating liquid composition as a result of a surface potential change of the fine particles; and aggregation of the colorant in the recording liquid composition as a result of a surface potential change of the colorant.

Thus, an aggregate of the colorant and another aggregate of the fine particles are fixed onto the recording medium satisfactorily, and the resulting record has further higher image-fixing properties without flake off of the recording layer even when rubbed by fingers.

The present invention further provides, in a third aspect, an image forming apparatus comprising the set of cartridges according to claim 23, wherein the image forming apparatus comprises a housing unit for housing the set of cartridges ; and a discharging unit for discharging the treating liquid composition and the recording liquid composition separately.

In the image forming apparatus, the image may be formed on the recording medium by the steps of contacting the treating liquid composition with the recording liquid composition; causing condition changes in the treating liquid composition and the recording liquid composition as a result of the contact; causing the fine particles in the treating liquid composition to aggregate as a result of the condition change; and causing the colorant in the recording liquid composition to aggregate as a result of the condition change.

By using the image forming apparatus according to the third aspect of the present invention, a high-quality image can be formed according to the image forming process.

Preferably, the discharge device is an ink-jet recording head.

By using such an ink-jet recording head, the apparatus can produce a record with a further fine and precise image.

The ink-jet recording head may discharge the compositions by thermal energy.

Thus, the apparatus can produce a record with an image of a higher resolution.

The present invention also provides, in a fourth aspect, a cartridge to be housed in a housing unit of an image forming apparatus, comprising the inkset of claim 1 wherein a first cartridge comprises a tank housing the treating liquid composition , and a second cartridge comprises a tank housing the recording liquid composition.

By using this cartridge, an image forming apparatus can be downsized, can be maintained further easily and reliably, which parts can be easily replaced. Thus, the image forming apparatus can be run at lower cost and can produce an image with more stable quality.

In addition and advantageously, the present invention provides a record comprising a recording medium and an image formed by an ink set according to claim 1 , wherein the image has a layer essentially containing the fine particles and another layer essentially containing the colorant, separately.

The image may be formed by using an ink set containing at least one treating liquid composition containing fine particles being so configured that their dispersion is kept or broken by an external factor; and at least one recording liquid composition containing a colorant being so configured that its dispersion or dissolution is kept or broken by the external factor, wherein the dispersion and/or dissolution of the treating liquid composition and the recording liquid composition is broken to cause them to aggregate separately on a recording medium without the colorant being substantially mixed with the fine particles to thereby form the image.

In the record, the layer substantially containing the fine particles may be formed by the steps of contacting the treating liquid composition with the recording liquid composition, causing a condition change in the treating liquid composition as a result of the contact, and causing the fine particles to aggregate as a result of the condition change, and the layer substantially containing the colorant may be formed by the steps of contacting the recording liquid composition with the treating liquid composition, causing a condition change in the recording liquid composition as a result of the contact, and causing the colorant to aggregate as a result of the condition change.

According to these configurations, the colorant and the fine particles aggregate separately due to condition changes such as pH change or solubility change caused by the external factor, and thereby the colorant forms an aggregate layer on one side of the interface between the two components without the colorant being substantially mixed with the fine particles. Accordingly, the colorant efficiently remains on one side of the recording medium (e.g., on the aggregate of the fine particles) to thereby produce a high-quality record with a further higher image density and color saturation.

In the record, the layer essentially containing the fine particles is formed by the processes of contacting the treating liquid composition with the recording liquid composition, causing a condition change in the treating liquid composition as a result of the contact, causing a change in surface potential of the fine particles as a result of the condition change, and causing the fine particles to aggregate as a result of the surface potential change, and the layer substantially containing the colorant may be formed by the steps of contacting the recording liquid composition with the treating liquid composition, causing a condition change in the recording liquid composition as a result of the contact, causing a change in surface potential of the colorant as a result of the condition change, and causing the colorant to aggregate as a result of the surface potential change.

Thus, the fine particles and the colorant immediately aggregate separately as a result of their surface potential changes. The resulting record can have an image with a further higher density and color saturation while avoiding feathering and color bleed.

The layer essentially containing the fine particles may be formed by the steps of contacting the treating liquid composition with the recording liquid composition, causing ionic migration between the recording liquid composition and the treating liquid composition as a result of the contact, causing a condition change in the treating liquid composition as a result of the ionic migration, and causing the fine particles to aggregate as a result of the condition change, and the layer essentially containing the colorant may be formed by the steps of contacting the recording liquid composition with the treating liquid composition, causing ionic migration between the treating liquid composition and the recording liquid composition as a result of the contact, causing a condition change in the recording liquid composition as a result of the ionic migration, and causing the colorant to aggregate as a result of the condition change.

The ionic migration further accelerates the aggregation speed, and a thick layer of the colorant and another thick layer of the fine particles can be immediately formed. Thus, the resulting record can be dried further satisfactorily and has a higher gloss.

The layer essentially containing the fine particles may be formed by the steps of contacting the treating liquid composition with the recording liquid composition, causing ionic migration between the recording liquid composition and the treating liquid composition as a result of the contact, causing a condition change in the treating liquid composition as a result of the ionic migration, causing a change in surface potential of the fine particles as a result of the condition change, and causing the fine particles to aggregate as a result of the surface potential change, and the layer essentially containing the colorant may be formed by the steps of contacting the recording liquid composition with the treating liquid composition, causing ionic migration between the treating liquid composition and the recording liquid composition as a result of the contact, causing a condition change in the recording liquid composition as a result of the ionic migration, causing a change in surface potential of the colorant as a result of the condition change, and causing the colorant to aggregate as a result of the surface potential change.

According to the above configuration, the ionic migration to accelerate the aggregation speed, and, in addition, the surface potentials of the fine particles and of the colorant change to thereby further accelerate the aggregation speed. Thus, a thin line in the record can be further satisfactorily reproduced even on a nonabsorbable recording medium.

According to the image forming process of the present invention, an ink set containing at least one treating liquid composition including fine particles being so configured that their dispersion is kept or broken by an external factor, and at least one recording liquid composition including a colorant being so configured that its dispersion or dissolution is kept or broken by the external factor is used. The external factor includes, for example, contact of substances or ultraviolet ray irradiation to cause a pH change or solubility change. The treating liquid composition and the recording liquid composition are ejected as droplets separately by ink-jet system onto an absorbable or nonabsorbable recording medium. Thus, the droplets of the treating liquid composition and of the recording liquid composition are brought into contact with each other to cause the fine particles and the colorant to aggregate separately without the colorant being substantially mixed with the fine particles, to form an image. Thus, a deep, colorful and glossy print (record) can be produced while preventing feathering and color bleed.

The image forming apparatus of ink-jet system containing a cartridge separately housing the treating liquid composition and the recording liquid composition can be used in the image forming process. Thus, together with the outstanding properties of the ink set, a further deep, colorful and glossy image can be effectively produced and a sharp and clear record in exact accordance with an original can be provided.

By using the cartridge separately housing the treating liquid composition and the recording liquid composition in the image forming apparatus, the image forming apparatus can be downsized, can be maintained easily and reliably, which parts can be easily replaced. Thus, the image forming apparatus can be run at lower cost and can produce an image with more stable quality.

Further objects, features and advantages of the present invention will become apparent from the following description of the preferred embodiments with reference to the attached drawings.

### Brief Description of Drawings

FIG.1 is a schematic diagram of examples of image forming steps using the ink set and image forming process according to an embodiment of the present invention, in which the contact between substances causes pH changes of the treating liquid composition and recording liquid composition;
FIG. 2 is a schematic diagram of examples of image forming steps using the ink set and image forming process according to another embodiment of the present invention, in which the contact between substances causes ionic migration or salting out, which in turn causes a pH change or solubility change of the treating liquid composition and recording liquid composition;
FIG. 3 is a schematic diagram of examples of image forming steps using the ink set and image forming process according to still another embodiment of the present invention, in which ultraviolet rays are applied to cause a photo-induced acid generator to generate an acid, which acid causes a pH change;
FIG. 4 is a schematic diagram of an example of conventional techniques;
FIGS. 5A and 5B illustrate the difference in image formation (line width) between a conventional process (FIG. 5A) and the image forming process of the present invention (FIG. 5B) upon printing a thin line on a smooth nonabsorbable recording medium;
FIGS. 6A and 6B illustrate the difference in image formation (jaggies) between the conventional process (FIG. 6A) and the image forming process of the present invention (FIG. 6B) upon printing a thin line on a nonabsorbable recording medium with a rough surface;
FIG. 7 is a schematic perspective view of an example of an image forming apparatus as an embodiment of the present invention;
FIG. 8 is a schematic perspective view of an example of an image forming apparatus equipped with an ultraviolet irradiator (high-pressure mercury lamp) as another embodiment of the present invention;
FIG. 9 is a schematic sectional view of an example of a set of discharge nozzles of a recording head for use in a carriage of the image forming apparatus of FIG. 7;
FIG. 10 is a schematic sectional view of another example of a set of discharge nozzles of a recording head for use in a carriage of the image forming apparatus of FIG. 7;
FIG.11 is a schematic perspective view of an example of a cartridge for housing the treating liquid composition or recording liquid composition for use in the image forming apparatus of the present invention;
FIG. 12 is a schematic elevational view in section of an inner configuration of the cartridge of FIG.11;
FIG. 13 is a scanning-transmission electron micrograph of a record according to Example B-1 relating to the present invention;
FIG. 14 is another scanning-transmission electron micrograph of the record according to Example B-1;
FIG. 15 is still another scanning-transmission electron micrograph of the record according to Example B-1;
FIG. 16A, 16B, 16C and 16D are mapping images of elemental analysis of the record according to Example B-1;
FIG.17A and 17B are energy dispersive X-ray fluorescence spectrometeric (EDX) photographs of the record according to Example B-1; and
FIG. 18 is a transmission electron micrograph (TEM) of a cross section of a black solid image of a record according to Example A-1.

### Best Mode for Carrying Out the Invention

Initially, the image forming process using the ink set of the present invention will be schematically illustrated.

According to the present invention, an image is formed in the following manner. A treating liquid composition containing fine particles so configured that its dispersion is kept or broken by an external factor is brought into contact with, on a recording medium, a recording liquid composition containing a colorant so configured that its dispersion or dissolution is kept or broken by the external factor. Thus, the treating liquid composition and the recording liquid composition change their conditions. The fine particles and the colorant aggregate separately without the colorant being substantially mixed with the fine particles to thereby form the image.

The phrase "an external factor" as used herein means the action of a substance brought into contact with the treating liquid composition or recording liquid composition, the non-contact action of, for example, electromagnetic waves such as ultraviolet rays or heat, or the like. As a result of the action, physical or chemical conditions of the compositions, such as pH, temperature or pressure, change. The phrase "changes its condition(s)" means that the treating liquid composition or recording liquid composition changes its condition(s) as a result of the external factor on the treating liquid composition or recording liquid composition. The conditions to be changed include, for example, pH, solubility, temperature, and pressure. The phrase "without the colorant being substantially mixed with the fine particles" means that most of the fine particles in the treating liquid composition are not mixed with most of the colorant in the recording liquid composition. This state can be observed, for example, as a layer formed from the fine particles and another layer formed from the colorant separately in cross section of the resulting print.

According to the present invention, an image can be formed by, for example, ejecting a droplet of the treating liquid composition and a droplet of the recording liquid composition to a recording medium by ink-jet system, bringing the droplets into contact with each other (external factor: the action of contact between substances) to thereby change the conditions (pH or solubility change) due to ionic migration or salting out. Thus, the fine particles in the treating liquid composition and the colorant in the recording liquid composition aggregate separately without the colorant being substantially mixed with the fine particles. Alternatively, an image can be formed by applying a droplet of, for example, the recording liquid composition onto a recording medium, irradiating the droplet with ultraviolet rays, allowing a photo-induced acid generator to generate an acid to cause condition changes (e.g., pH change) to thereby aggregate the fine particles and the colorant separately without the colorant being substantially mixed with the fine particles.

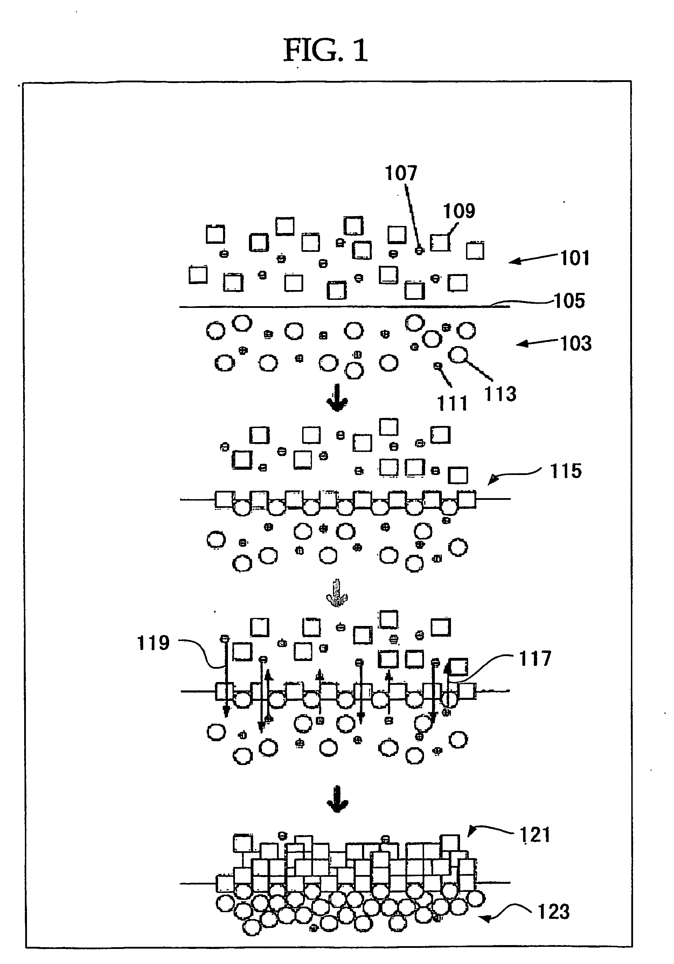

An embodiment of the mechanism will be described with reference to FIG.1. In this embodiment, the external factor is the contact between substances, i.e., the contact between the treating liquid composition 103 and recording liquid composition 101, and the condition change is a pH change. The droplet of the treating liquid composition 103 and that of the recording liquid composition 101 can be applied to the recording medium in any order. In the example below, the droplet of the treating liquid composition 103 is applied first.

To stably disperse the fine particles 113 therein, the treating liquid composition 103 preferably comprises an acid or base as a pH adjusting agent. In the following example, the treating liquid composition 103 comprises an acid 111. Likewise, the recording liquid composition 101 preferably comprises a base or acid as a pH. adjusting agent to stably disperse the colorant therein. In the following example, the recording liquid composition 101 comprises a base 107.

The droplet of the treating liquid composition 103 is applied onto the recording medium (not shown) first, and then the droplet of the recording liquid composition 101 is applied onto the droplet of the treating liquid composition 103 to thereby allow the two compositions in contact with each other. In the vicinity of the interface 105 between the treating liquid composition 103 and the recording liquid composition 101, the acid 111 as a pH adjusting agent and the fine particles 113 diffuse from the treating liquid composition 103 into the recording liquid composition 101 due to concentration gradient. Likewise, the base 107 as a pH adjusting agent and the colorant 109 diffuse from the recording liquid composition 101 into the treating liquid composition 103 due to concentration gradient.

Thus, in the vicinity of the interface 105, pH changes by the acid 111 and base 107 diffusion, and the systems of the treating liquid composition 103 and of the recording liquid composition 101 are neutralized to thereby break the dispersion or dissolution of the fine particles 113 in the treating liquid composition 103 and the colorant 109 in the recording liquid composition 101. As a result of the break, an aggregated layer 115 containing a single aggregate of the fine particles 113 or colorant 109 alone or a mixed aggregate of the fine particles 113 with colorant 109 (hereinafter may be referred to as "primary aggregate") is initially formed in the vicinity of the interface.

Viewing the phenomenon more microscopically, in the treating liquid composition 103 in the vicinity of the interface 105, the base 107 migrated from the recording liquid composition 101, as shown by the arrow 119, neutralizes a cationic species (e.g., a proton) on the surface of fine particles 113, decreases its surface charge and eliminates the repulsive force in-between the fine particles 113 to thereby break their dispersion. Thus, the fine particles 113 aggregate to form a layer 123 consisting essentially of the fine particles 113. The "cationic species on the surface of fine particles" means and includes, for example, the case when the surface of fine particles is directly covered with an ionic species such as proton, the case when the fine particles themselves have a cationic group, and the case when the surface of fine particles covered with a compound having a cationic group with or without the interposition of a dispersant or surfactant. The "layer consisting essentially of the fine particles" as used herein means a layer mainly comprising the fine particles, which may further comprise a trace amount of the colorant and/ or other components.

The acid 111 migrated from the treating liquid composition 103, as shown by the arrow 117, is adsorbed by the colorant 109, neutralizes an anionic group of the colorant 109, decreases the surface charge thereof and eliminates the repulsive force between the colorant 109 to thereby break the dispersion. Thus, the colorant particles aggregate to form a layer 121 consisting essentially of the colorant 109. The "anionic group of the colorant" means and includes the case when the surface of colorant is covered with a compound containing an anionic group with or without the interposition of a dispersant or surfactant. The "layer consisting essentially of the colorant" as used herein means a layer mainly comprising the colorant, which may further include a trace amount of the fine particles and/or other components. The general outline of these image forming processes is shown in FIG.1.

The image forming process includes the processes of contacting the treating liquid composition 103 with the recording liquid composition 101, bringing pH change to the treating liquid composition 103 and recording liquid composition 101 as a result of the contact, causing the fine particles 113 to aggregate as a result of the pH change, and causing the colorant 109 to aggregate as a result of the pH change.

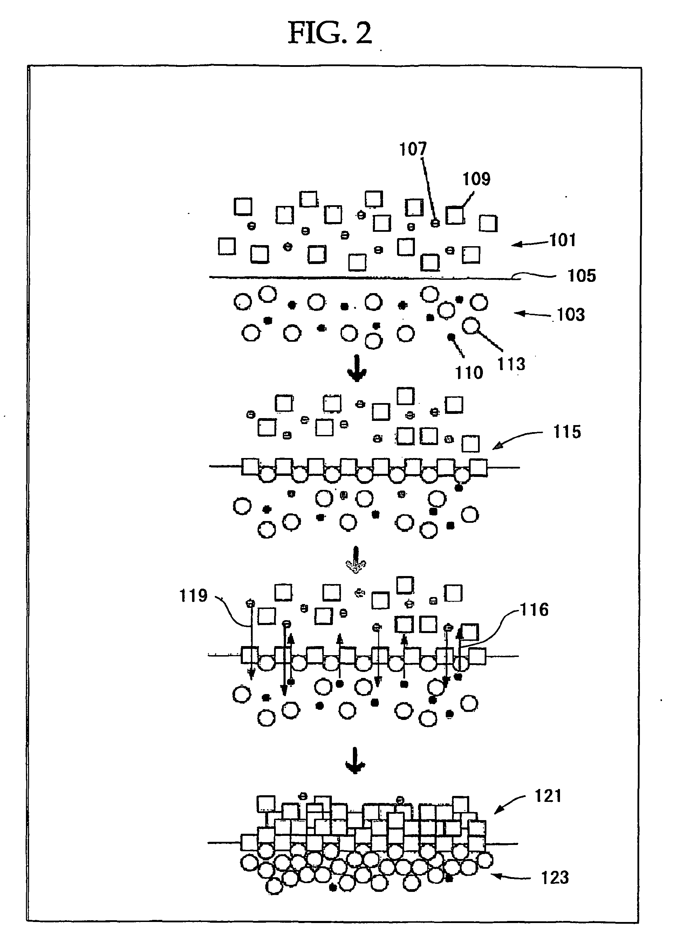

FIG. 2 illustrates another embodiment. In this embodiment, the external factor is the contact between substances with each other (the contact between the treating liquid composition 103 and the recording liquid composition 101), and the condition change is pH change and solubility decrease due to salting out. The treating liquid composition 103 in this embodiment further comprises a salt (NaCl) 110 in addition to the fine particles 113, and the recording liquid composition 101 further comprises a base 107 as a pH adjusting agent to stably disperse the colorant 109 therein. The droplet of the treating liquid composition 103 and that of the recording liquid composition 101 can be applied to the recording medium in any order. In the example below, the droplet of the treating liquid composition 103 is applied first.

The droplet of the treating liquid composition 103 is applied onto the recording medium (not shown) first, and then the droplet of the recording liquid composition 101 is applied onto the droplet of the treating liquid composition 103 to thereby bring the two compositions into contact with each other. In the vicinity of the interface 105 between the treating liquid composition 103 and the recording liquid composition 101, the salt (NaCl) 110 and the fine particles 113 diffuse from the treating liquid composition 103 into the recording liquid composition 101 due to concentration gradient. Likewise, the base 107 as a pH adjusting agent and the colorant 109 diffuse from the recording liquid composition 101 into the treating liquid composition 103 due to concentration gradient. Thus, a primary aggregate layer 115 is formed in the vicinity of the interface 105.

Through the primary aggregate layer 115, the ions (base 107) and salt (NaCl) 110 further migrate as shown by the arrows 119 and 116, respectively. Thus, the dispersion is rapidly broken as a result of ion concentration change and the solubility decreases due to salting out to thereby accelerate the aggregation in the recording liquid composition 101. Separately, the dispersion in the treating liquid composition 103 is rapidly broken by pH change to thereby accelerate the aggregation. The fine particles 113 and the colorant 109 aggregate separately without the colorant 109 being substantially mixed with the fine particles 113, forming a layer 123 consisting essentially of the fine particles 113 and a layer 121 consisting essentially of the colorant 109. The general outline of the image forming process is schematically shown in FIG. 2.

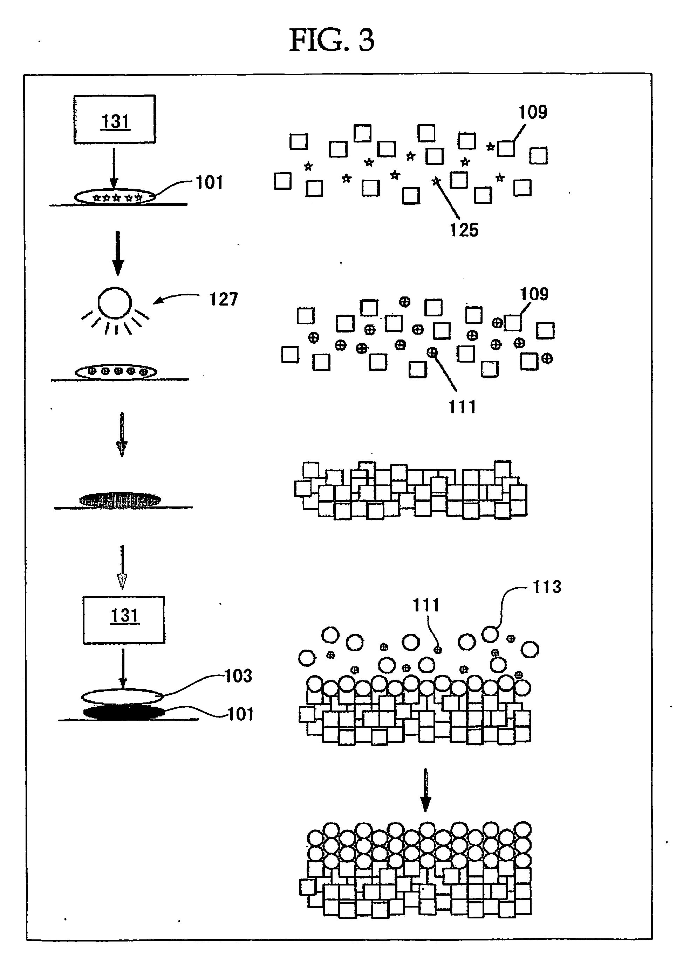

FIG. 3 schematically illustrates still another embodiment in which a non-contact external factor of ultraviolet ray irradiation 127 causes the condition change.

The recording liquid composition 101 used herein comprises a photo-induced acid generator 125 that generates an acid 111 upon irradiation with ultraviolet rays 127. The treating liquid composition 103 can comprise whichever of an acid or base. In the embodiment of FIG. 3, the treating liquid composition comprises an acid 111.

Initially, the recording liquid composition 101 is applied by printhead 131 to the recording medium and an acid 111 is generated upon irradiation of ultraviolet rays 127. Thus, the pH of the recording liquid composition 101 changes to cause rapid break of dispersion to thereby allow the colorant 109 to aggregate. Next, the treating liquid composition 103 is applied onto the recording liquid composition 101, and the fine particles 113 of, for example, silica begin to aggregate in the vicinity of the interface between the two layers. Subsequently, water permeates to change the concentrations of components, thus causing rapid break of dispersion to thereby allow the fine particles 113 to aggregate. When the treating liquid composition 103 contains a base, the dispersion is broken by pH change due to ionic migration of both the recording liquid composition 101 and the treating liquid composition 103 to thereby accelerate the aggregation of the fine particles 113. The general outline of the image forming process is schematically illustrated in FIG. 3.

In the initial stage when the treating liquid composition and the recording liquid composition constituting the ink set of the present invention come into contact with each other, a layer of aggregate (primary aggregate) is formed in the vicinity of the interface between the two compositions. The formed primary aggregate layer prevents most of the colorant and fine particles in the droplets from migrating into each other. Thus, the colorant and the fine particles aggregate separately without the colorant being substantially mixed with the fine particles, and an aggregate layer consisting essentially of the colorant and another aggregate layer consisting essentially of the fine particles are formed separately.

For example, the acid in the treating liquid composition and the base in the recording liquid composition have small sizes and can easily pass through gaps in the primary aggregate layer and rapidly diffuse through the aggregate layer into another layer. By the diffusion of the ions (ionic migration), the residual fine particles and colorant are neutralized to thereby have decreased surface potentials. Thus, the dispersion or dissolution of these components is broken, and all the fine particles aggregate, and all the colorant particles aggregate separately. The aggregation occurs and completes immediately as a result of the diffusion of ions, and the entire system completely aggregates before the colorant begins to flow in the image forming process of the present invention. Thus, the colorant and the fine particles aggregate separately without the colorant being substantially mixed with the fine particles and thereby yield an aggregate layer comprising the colorant and another aggregate layer consisting essentially of the fine particles.

The thickness of the treating liquid composition layer and the recording liquid composition layer is important. If these layers have a thickness exceeding a certain level, an unreacted layer begins to flow before the pH change as a result of ionic migration extends into the entire layer. Once the unreacted layer begins to flow, the colorant bleeds out, thus causing feathering and/or color bleed. If the colorant migrates into the recording medium as a result of the flow, the image density decreases. If the fine particles migrate into the recording medium, the gloss decreases. While depending on the discharge conditions, the volume of each ink droplet discharged from an ink-jet discharge head is generally from about 0.1 to about 100 picoliters and the number of droplets per unit area is generally from about 1x10⁴ to about 1x10⁷ per square centimeter. For keeping good image quality, the layer consisting essentially of the fine particles and the layer consisting essentially of the colorant in cross section of the resulting record each have a thickness of preferably 10 µm or less and more preferably 4 µm or less.

The aggregation reaction finishes in a shorter time with a decreasing thickness of these layers, but an excessively decreased thickness may invite other problems. If the layer of the treating liquid composition has an excessively small thickness, the layer cannot feed sufficient amounts of ions to aggregate the entire layer of the colorant. The pH change is thus too small to aggregate the colorant in the Recording liquid composition completely. As a result, the colorant flows, thus leading to feathering, color bleed, and decreased density and gloss of images. If the layer of the recording liquid composition has an excessively small thickness, the absolute amount of the colorant is insufficient, leading to a decreased image density. For keeping good image quality, the layer consisting essentially of the colorant and the layer consisting essentially of the fine particles in the cross section of the resulting record each have a thickness of preferably 0.01 µm or more and more preferably 0.1 µm or more.

The sizes (dimensions) of the colorant and fine particles are also important. If these components each have an excessively small size, the primary aggregate layer may have smaller gaps to thereby prevent ions from passing therethrough. If the ions are prevented from passing, the acid in the treating liquid composition and the base in the recording liquid composition diffuse more slowly and do not reach the treating liquid composition and recording liquid composition in portions far from the aggregate layer rapidly. Under these conditions, the surface potentials of the fine particles and the colorant decrease more slowly, and the dispersion or dissolution is broken more slowly. As a result, the colorant begins to flow before the colorant completely aggregates, thus inviting feathering and/ or color bleed.

After intensive investigations, the present inventors have found that the colorant particles and the fine particles each preferably have an average particle diameter of 10 nm or more, Thus, the acid and base can diffuse into the entire system rapidly without preventing from passing through the primary aggregate layer to thereby avoid feathering, color bleed and other image quality defects.

The acid and base can pass through the primary aggregate layer more easily with an increasing average particle diameter of the colorant and the fine particles. However, an excessively large average particle diameter may invite clogging of the discharge head. To avoid this, the colorant particles and the fine particles each preferably have an average particle diameter of 200 nm or less.

Briefly, the colorant particles and the fine particles each preferably have an average particle diameter of 10 nm or more and 200 nm or less for better image quality and more stable discharge. Thus, clear images without feathering and color bleed can be stably produced without clogging of discharge heads.

The difference in pH between the treating liquid composition and recording liquid composition is also important. If the difference is insufficient, the acid and/or base diffuses in an insufficient amount. Under these conditions, the surface potentials of the fine particles and the colorant decrease more slowly, and the dispersion or dissolution is broken incompletely. As a result, part of the colorant and/or fine particles remains dispersed or dissolved and flows with the vehicle, thus inviting feathering and/ or color bleed.

The present inventors have found that the difference in pH between the treating liquid composition and the recording liquid composition is preferably 2 or more for feeding the acid and base in sufficient amounts to the entire system and thus avoiding feathering, color bleed and other image quality defects.

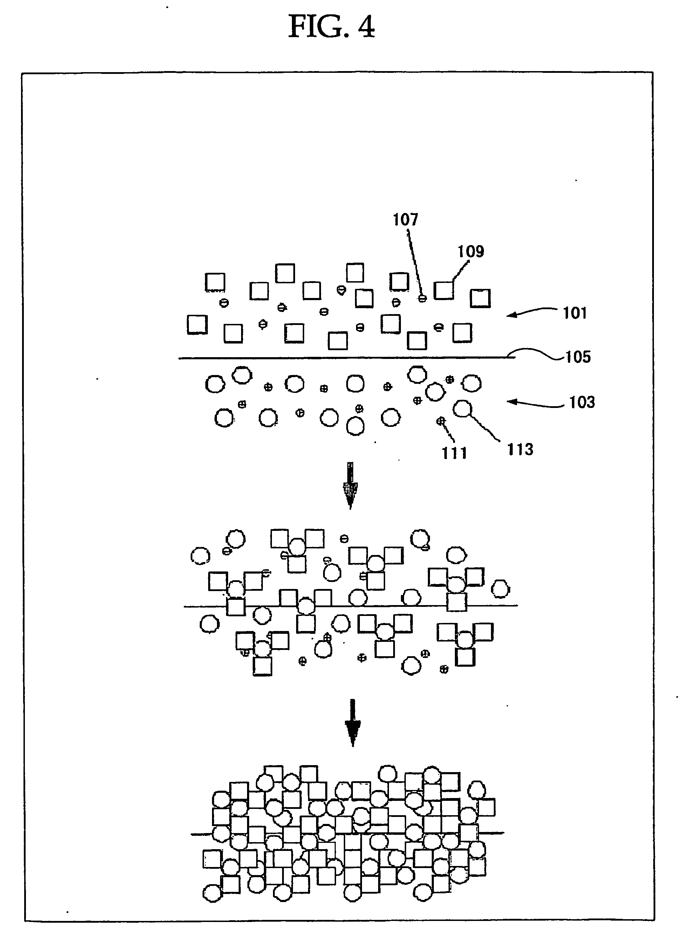

The image forming process of the present invention can thus prevent feathering and color bleed and can produce prints with a high image density and color saturation, since the colorant does not migrate into the recording medium and the fibers of paper are not exposed from the surface of the recording medium. The process solves the problems in the conventional image forming process as disclosed in aforementioned JP-A No. 2001-199149 in which an ink and a liquid composition are mixed to react a colorant in the ink with fine particles in the liquid composition to thereby allow the fine particles to adsorb the colorant on their surface, and the resulting particles then aggregate (FIG. 4).

Specifically, with reference to FIG. 4, this conventional image forming process contacts an ink (recording liquid composition 101) with a liquid composition (treating liquid composition 103), in which the ink 101 contains a base 107 and a colorant (pigment) 109 and the liquid composition 103 contains an acid 111 and fine particles (silica) 113. Upon contact, the pigment 109 adsorbs silica 113, and then aggregates.

The image forming process of the present invention can form the layer of the colorant on the primary aggregate layer and can thereby place the colorant completely on the surface of the recording medium to thereby increase the density and color saturation of the resulting image. In addition, the process can ensure not only the primary aggregate layer but also the colorant thereon to aggregate reliably without flowing in a horizontal direction (in-plane direction) and can form a thick colorant layer. Thus, the print has a smooth colorant layer on its surface completely covering the fibers of paper and can be highly glossy.

In addition, the image forming process of the present invention can produce a clear image even when the image is printed on a nonabsorbable recording medium that does not absorb the vehicle. In the process, an aggregate layer of the colorant on one side (e.g., upper side) of the primary aggregate layer and another aggregate layer of the fine particles on the other side are formed immediately to form a firm film to thereby yield the clear image.

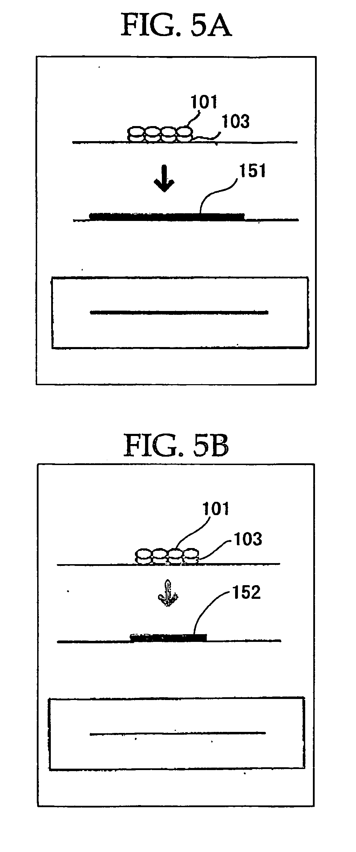

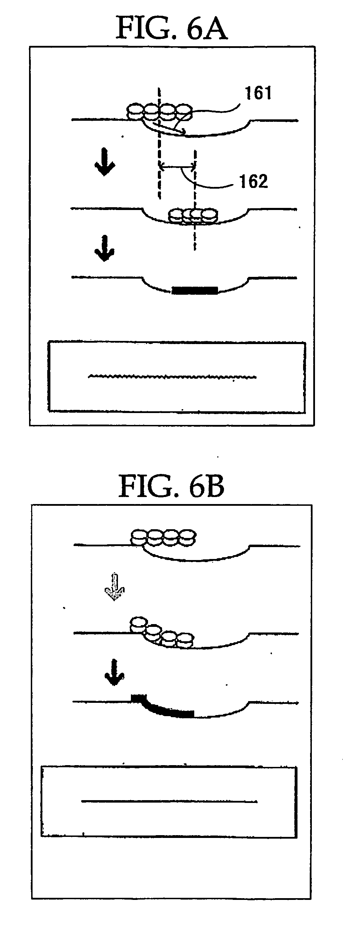

The process can produce such a clear image without feathering and/ or color bleed even on a nonabsorbable recording medium. In the process, the fine particles and the colorant in the entire system immediately aggregate separately due to a condition change caused by the external factor. Examples of such condition changes are pH change due to ionic migration, solubility decrease (salting out) due to migration of salt, ion formation and pH change due to ultraviolet ray irradiation (non-contact external factor). In particular in a nonabsorbable recording medium with a rough surface, an ink applied according to the conventional techniques migrates into depressions of the recording medium and fails to produce a thin line image with smooth outline. The resulting thin line image often has jaggies. In contrast, the image forming process of the present invention can satisfactorily reproduce a smooth thin line without jaggies, since the entire colorant and fine particles aggregate separately in a very short time. FIGS. 5A, 5B, 6A and 6B schematically illustrate the differences (in line width and jaggies) in image formation between the conventional process (FIGS. 5A and 6A) and the image forming process of the present invention (FIGS. 5B and 6B) upon printing a thin line on a smooth nonabsorbable recording medium (FIGS. 5A and 5B) and printing a thin line on a rough nonabsorbable recording medium (FIGS. 6A and 6B).

Referring to FIGS. 5A and 5B, a thin line is printed on a smooth nonabsorbable recording medium by the conventional process (FIG. 5A) and the process of the present invention (FIG. 5B). While both processes use an ink set of a recording liquid composition 101 and a treating liquid composition 103, the image fixing speed of the conventional ink set is slower than that of the present invention and therefore the conventional ink set spreads out in the direction of line width before it fixes. Accordingly, the resulting line width 151 of the conventional process is broader than the line width 152 of the process of the present invention.

With reference to FIGS. 6A and 6B, which schematically show how a line is printed on a rough nonabsorbable recording medium, in either case a few drops of an ink set is printed on the edge of a depression (concave) of the recording medium. Again, since the ink set of the conventional process fixes rather slowly, the drops of the conventional ink set, which is of little viscosity, starts to drift towards the lower part of the concave and then fixes there, resulting in a displacement 162 from its original position. In contrast, the ink set of the present invention stays where it has been printed initially and fixes at that position. As a result, the printed line of the conventional process becomes jagged whereas that of the present invention is straight.

Next, the treating liquid composition and the recording liquid composition for use in the ink set of the present invention will be illustrated in detail below, but the following description is not intended to limit the scope of the present invention.

Initially, an anionic or cationic recording liquid composition and an anionic or cationic treating liquid composition for use in the present invention are defined as follows.

From the viewpoint of electric charge, the entire recording liquid composition or treating liquid composition itself is neutral.

The "anionic or cationic recording liquid composition" as used herein means a recording liquid composition containing a colorant having an anionic or cationic group, one containing a colorant directly coated with a compound having an anionic or cationic group, or one containing a colorant coated with a compound having an anionic or cationic group with the interposition of, for example, a dispersant or surfactant, in which the group is capable of behaving as an anionic group or cationic group in the recording liquid composition. The "anionic or cationic treating liquid composition" as used herein has a similar meaning as above.

The treating liquid composition and recording liquid composition will be illustrated in further detail below.

### Treating liquid composition

The fine particles in the treating liquid composition preferably have, if any, an opposite charge to that of the colorant in the recording liquid composition. Thus, cationic fine particles or anionic fine particles are selected depending on the charge of the colorant.

The term "cationic fine particles" as used herein means fine particles having a positive zeta potential. The properties of the surface of fine particles in a disperse system are discussed under consideration of an electrical double layer at the interface between the dispersoid and dispersed medium. The electricas double layer is practically replaced with a zeta potential determined from, for example, electrophoretic mobility. The zeta potential is significantly affected by the concentration of H⁺ ions at the interface, and accordingly the surface properties of the fine particles are largely affected by pH of the treating liquid composition. In contrast, the anionic fine particles are fine particles having a negative zeta potential. The zeta potential is significantly affected by the concentration of OH- ions at the interface, and the surface properties of the fine particles are largely affected by pH of the treating liquid composition.

The cationic fine particles for use in the present invention preferably have a zeta potential of +5 to +90 mV for producing glossy images with good reproducibility of thin line without feathering and color bleed. Likewise, the anionic fine particles for use in the present invention preferably have a zeta potential of -5 to -90 mV for producing glossy images with good reproducibility of thin line without feathering and color bleed.

The treating liquid composition should have an appropriate pH to ensure the fine particles to be dispersed stably and to avoid corrosion of members with which the treating liquid composition comes in contact.

The fine particles for use in the present invention are not limited in their materials and can be whichever of organic fine particles, inorganic fine particles and composite organic-inorganic fine particles. They can have any shape such as spherical shape, a string of beads or irregular form.

The concentration of the fine particles in the treating liquid composition can be appropriately set depending on the types of the substances to be used and is preferably from 0.1% by weight to 40 % by weight, more preferably from 1% by weight to 30 % by weight, and further preferably from 3 % by weight to 15 % by weight to achieve the objects of the present invention.

If the concentration is less than 0.1 % by weight, the viscosity may not be increased due to aggregation even in contact with the recording liquid composition. As a result, the colorant in the recording liquid composition may not be sufficiently fixed (may not sufficiently aggregate) and may flow out, thus inviting feathering and/or color bleed. If it exceeds 40% by weight, the treating liquid composition may have an excessively high viscosity and may inhibit stable discharge. In addition, the fine particles in a concentration exceeding 40% by weight may often precipitate in the vicinity of nozzles of the head. To prevent this, a large amount of a humectant must be added to the treating liquid composition. However, a large amount of the humectant makes the treating liquid composition have an excessively high viscosity, thus inviting unstable discharge.

Examples of the organic fine particles are fine particles of polystyrenes, styrene-acrylic copolymers, poly(methyl methacrylate)s, melamine resins, epoxy resins, silicone resins, benzoguanamine resins, polyamide resins, fluorine-containing resins, and polymers prepared by emulsion polymerization of α,β-unsaturated ethylenic monomers.

The inorganic fine particles are roughly classified as inorganic salts (e.g., calcium carbonate) and as inorganic oxides (e.g., silica (SiO₂)).

Examples of the inorganic salts include, but are not limited to, calcium carbonate, calcium nitrate, calcium chloride, calcium sulfate, aluminum nitrate, aluminum chloride, aluminum sulfate and iron sulfate.

In an aqueous treating liquid composition, calcium carbonate, calcium nitrate, iron sulfate or other inorganic fine particles having a low solubility in water are preferably used for better dispersion. These inorganic fine particles are preferably subjected to cationization for further higher adsorptivity and aggregation property. They can be cationized with a cationization agent according to a conventional procedure disclosed in, for example, JP-A No. 10-129113 or No.11-20301.

Examples of the inorganic fine particles are fine particles of cationized silica (SiO₂), alumina (Al₂O₃), alumina hydrate, titania, zirconia, boria, silica-boria, ceria, magnesia, silica-magnesia, calcium carbonate, magnesium carbonate, zinc oxide and hydrotalcite.

Examples of cationic organic fine particles include, but are not limited to, cationic emulsions and latices of styrene-acrylic acid copolymers, styrene-acrylic ester copolymers, styrene-methacrylic ester copolymers, SBR latex and other conjugated diene copolymers, ethylene-vinyl acetate copolymers and other vinyl copolymers, and cationized products of melamine beads and plastic pigments.

Among the inorganic fine particles, cationic silica is typically preferred for high reactivity (rapid aggregation of fine particles caused by pH change in the treating liquid composition). Any silica having a cationized surface can be used herein.

The surface of silica can be cationized, for example, by physically or chemically introducing a cationic compound to the surface of silica directly or indirectly. For example, the surface can be chemically cationized by coupling silanol groups of silica with an amino compound or treating silica with an amino compound. The surface can be physically cationized by mixing silica with a cationic compound in a solvent to allow the silica to physically adsorb the cationic compound and removing the solvent.

Examples of anionic silica for use as a core in the physical adsorption of the cationic compound by the silica surface are ST-ZL, ST-20, ST-30, ST-40, ST-C, ST-N, ST-O, ST-S, ST-50, ST-20L, ST-OL, ST-XS, ST-YL, ST-XL, ST-UP and ST-OUP (trade names, available from Nissan Chemical Industries, Ltd.), Cataloid SI-350 and SI-500 (trade names, available from Du Pont Company), Nipgel AY-220, AY-420 and AY-460 (trade names, available from Tosoh Silica Corporation).

Without being limited to the above examples, any of silica having a cationized surface can be used in the present invention.

The inorganic fine particles are also commercially available, for example, as a cationized silica under the trade name of ST-AK from Nissan Chemical Industries, Ltd.; as alumina under the trade names of Alumina Sol 100, 200 and 520 from Nissan Chemical Industries, Ltd.; as titanium oxide under trade names of Titania Series from Idemitsu Kosan Co., Ltd. Some of these fine particles are available as aqueous dispersions.

The fine particles for use in the present invention may also be any of cationic composite organic-inorganic fine particles.

Such cationic composite organic-inorganic fine particles can be prepared by allowing inorganic fine particles to adsorb a cationic organic compound on their surface or allowing organic fine particles to adsorb a cationic inorganic compound on their surface.

For example, composite organic-inorganic fine particles coated with a cationic polymer can be prepared by dispersing inorganic fine particles in a medium such as water and gradually adding a solution of a cationic polymer in water or water-soluble organic solvent to the dispersion.

Examples of the cationic polymer are polyallylamines, polyvinylamines, polyimines, polyvinylpyrrolidones, polyethyleneimines, polyvinylpyridines, aminoacetalated poly(vinyl alcohol)s, ionene polymers, polyvinylimidazoles, poly(vinylbenzyl phosphonium)s, polyalkylarylammonium, polyamidines, polyaminesulfones, cationic starch and other polymers.

If fine particles alone have low dispersion stability, they can be used in combination with a cationic or anionic compound.

Examples of the cationic compound are polyallylamines, polyaminesulfones, polyvinylamines, chitosan, and fully or partially neutralized products of these substances with an acid such as hydrochloric acid or acetic acid; partially cationized compounds derived from nonionic polymeric compounds, such as copolymers of vinylpyrrolidone with an aminoalkyl alkylate quaternary salt and copolymers of acrylamide with an aminomethylacrylamide quaternary salt; primary, secondary and tertiary amine salt compounds and amino acid-type amphoteric compounds. Each of these compounds can be used alone or in combination.

Examples of the anionic compound are poly(vinyl alcohol)s and polyvinylcarbazoles.

To improve the scratch resistance of the print, the treating liquid composition may further comprise a resinous component within ranges not deteriorating its storage stability and discharge stability. Examples of the resinous components are water-soluble polymers, emulsions and latices.

For better gloss, the amount of the fine particles in the treating liquid composition is preferably 10% by weight or more and more preferably 15% by weight or more based on the total weight of the treating liquid composition. The use of fine particles in an amount less than 10% by weight may not sufficiently effectively improve the image quality. Two or more types of fine particles can be used in combination.

To prevent clogging of nozzles of the recording head due to drying of the composition, the treating liquid composition preferably comprises a water-soluble organic solvent. Such water-soluble organic solvents include humectants and wetting agents.

Examples of the humectants are ethylene glycol, diethylene glycol, triethylene glycol, tetraethylene glycol, polyethylene glycol, propylene glycol, 1,3-butanediol, 1,3-propanediol, 2-methyl-1,3-propanediol, 1,4-butanediol, 1,5-pentanediol, 1,6-hexanediol, glycerol, 1,2,6-hexanetriol, 2-ethyl-1,3-hexanediol, 1,2,4-butanetriol, 1,2,3-butanetriol, petriol (3-methyl-1,3,5-pentanetriol) and other polyhydric alcohols; ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monomethyl ether, propylene glycol monoethyl ether and other polyhydric alcohol alkyl etehrs; ethylene glycol monopenyl ether, ethylene glycol monobenzyl ether and other polyhydric alcohol aryl ethers; N-methyl-2-pyrrolidone, N-hydroxyethyl-2-pyrrolidone, 2-pyrrolidone, 1,3-dimethylimidazolidinone, ε-caprolactam and other nitrogen-containing heterocyclic compounds; formamide, N-methylformamide, N,N-dimethylformamide and other amides; monoethanolamine, diethanolamine, triethanolamine, monoethylamine, diethylamine, triethylamine and other amines; dimethyl sulfoxide, sulfolane, thiodiethanol and other sulfur-containing compounds; propylene carbonate, ethylene carbonate, and γ-butyrolactone. With water, each of these solvents can be used alone or in combination.

The wetting agents are used for improving wettability between the treating liquid composition and the recording medium and controlling the penetration rate. Compounds represented by following Formulae (I), (II), (III) and (IV) are preferred as the wetting agent. More specifically, polyoxyethylene alkylphenyl ether surfactants of Formula (I), acetylene glycol surfactants of Formula (II), polyoxyethylene alkyl ether surfactants of Formula (III), and polyoxyethylene polyoxypropylene alkyl ether surfactants of Formula (IV) can reduce the surface tension of the treating liquid composition and improve the wettability to thereby increase the penetration rate. 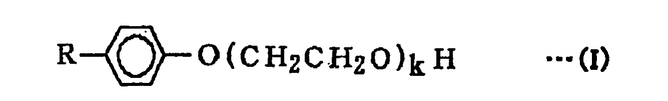 Wherein R represents a linear or branched hydrocarbon chain having 6 to 14 carbon atoms; and k represents an integer of 5 to 20. 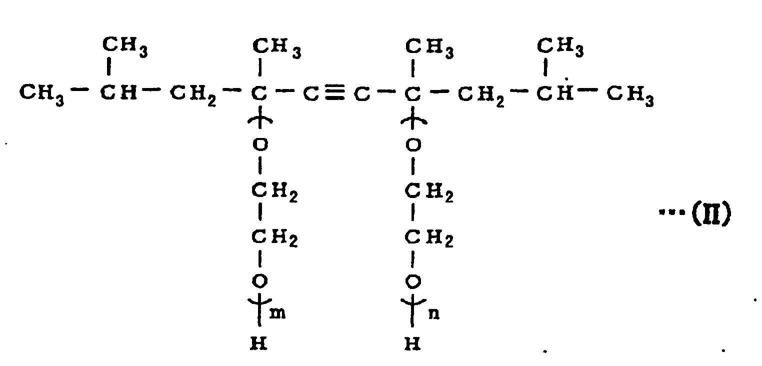 Wherein m and n are each an integer of 20 or less, and the total of m and n is more than 0 and equal to or less than 40.

R-(OCH₂CH₂)nH (III)

Wherein R represents a linear or branched hydrocarbon chain having 6 to 14 carbon atoms; and k represents an integer of 5 to 20. 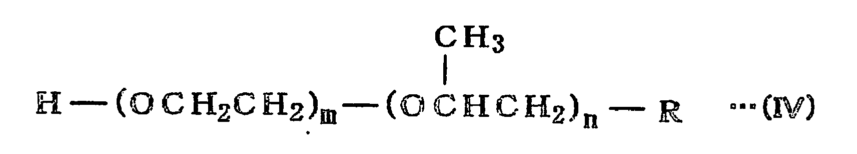 Wherein R represents a hydrocarbon chain having 6 to 14 carbon atoms; and m and n are each an integer of 20 or less.

In addition to the compounds of Formulae (I), (II), (III) and (IV), the wetting agents also include diethylene glycol monophenyl ether, ethylene glycol monophenyl ether, ethylene glycol monoallyl ether, diethylene glycol monophenyl ether, diethylene glycol monobutyl ether, propylene glycol monobutyl ether, tetraethylene glycol chlorophenyl ether and other alkyl and aryl ethers of polyhydric alcohols, polyoxyethylene-polyoxypropylene block copolymers and other nonionic surfactants, fluorine-containing surfactants, ethanol, 2-propanol and other lower alcohols, of which diethylene glycol monobutyl ether is preferred.

The average particle diameter of the fine particles is preferably 1000 nm or less and more preferably 500 nm or less for further stable discharge. Fine particles having an average particle diameter exceeding 1000 nm may often invite clogging in the discharge head, thus causing discharge failure. The average particle diameter can be determined with an optical particle size distribution analyzer and is indicated as the particle diameter at 50% particles by number.

The fine particles are dispersed in a vehicle mainly comprising water to constitute the treating liquid composition. In the dispersing procedure, a deflocculant is preferably used for stabilizing the dispersion. The deflocculant serves to form an electrical double layer on the surface of charged particles, which electrical double layer has electrostatic repulsion and prevents the particles from gathering with each other to thereby stabilize the dispersion.

The cationic fine particles are positively charged in neutral to acidic ranges, and an acid is used as the deflocculant. The treating liquid composition containing such an acid preferably has pH of 2 to 7 at around 25°C for better storage stability and adsorptivity for the anionic compound of the cationic fine particles. The pH is more preferably from 3 to 6 for effectively preventing corrosion of the recording head over a long period of storage and for better scratch resistance of the print.

The treating liquid composition preferably has pH of 2 to 7 at around 25°C. The acid used herein works to ionize the surface of the cationic fine particles, to increase the surface potential to thereby improve the dispersion stability of the fine particles in the composition. In addition, it serves to improve adsorptivity for the anionic compound in the ink (recording liquid composition) of the cationic fine particles and to control the viscosity of the treating liquid composition. The acid for use herein is not specifically limited and can be freely selected from the following inorganic acids, organic acids and other acids, as long as it can yield the desired pH, zeta potential, dispersibility of the fine particles and other properties in combination with the cationic fine particles.

Examples of such inorganic acids are hydrochloric acid, sulfuric acid, sulfurous acid, nitric acid, nitrous acid, phosphoric acid, boric acid and carbonic acid. Examples of organic acids are carboxylic acids, sulfonic acids and amino acids. Such carboxylic acids include, for example, formic acid, acetic acid, chloroacetic acid, dichloroacetic acid, trichloroacetic acid, fluoroacetic acid, trimethylacetic acid, methoxyacetic acid, mercaptoacetic acid, lactic acid, glycolic acid, propionic acid, butyric acid, valeric acid, caproic acid, caprylic acid, capric acid, lauric acid, myristic acid, palmitic acid, stearic acid, oleic acid, linolic acid, linolenic acid, cyclohexanecarboxylic acid, phenylacetic acid, benzoic acid, o-toluic acid, m-toluic acid, p-toluic acid, o-chlorobenzoic acid, m-chlorobenzoic acid, p-chlorobenzoic acid, o-bromobenzoic acid, m-bromobenzoic acid, p-bromobenzoic acid, o-nitrobenzoic acid, m-nitrobenzoic acid, p-nitrobenzoic acid, oxalic acid, malonic acid, succinic acid, glutaric acid, adipic acid, tartaric acid, maleic acid, fumaric acid, citric acid, phthalic acid, isophthalic acid, terephthalic acid, salicylic acid, p-hydroxybenzoic acid, anthranilic acid, m-aminobenzoic acid, p-aminobenzoic acid, o-methoxybenzoic acid, m-methoxybenzoic acid and p-methoxybenzoic acid. Examples of the sulfonic acids are benzenesulfonic acid, methylbenzenesulfonic acid, ethylbenzenesulfonic acid, dodecylbenzenesulfonic acid, 2,4,6-trimethylbenzenesulfonic acid, 2,4-dimethylbenzenesulfonic acid, 5-sulfosalicylic acid, 1-sulfonaphthalene, 2-sulfonaphthalene, hexanesulfonic acid, octanesulfonic acid, and dodecanesulfonic acid. Examples of the amino acids are glycine, alanine, valine, α-aminobutyric acid, γ-aminobutyric acid, β-alanine, taurine, serine, ε-amino-n-caproic acid, leucine, norleucine and phenylalanine.

Each of these acids can be used alone or in combination in the treating liquid composition. Among them, acids having a primary dissociation constant pka of 5 or less in water are preferred for more stable dispersion and better adsorptivity for the anionic compound of the cationic fine particles. Examples of such acids are hydrochloric acid, nitric acid, sulfuric acid, phosphoric acid, acetic acid, formic acid, oxalic acid, lactic acid, citric acid, maleic acid and malonic acid.

The weight ratio of the cationic fine particles to the acid in the treating liquid composition is preferably from 200:1 to 5:1, and more preferably from 150:1 to 8:1 for more stable dispersion and better adsorptivity for the anionic compound in the ink (recording liquid composition) of the cationic fine particles.

The anionic fine particles are negatively charged in neutral to acidic ranges, and a base is used as the deflocculant. The treating liquid composition containing such a base preferably has pH of 7 to 12 at around 25°C for better storage stability and adsorptivity for the cationic compound of the anionic fine particles. The pH is more preferably from 8 to 11 for effectively preventing corrosion of the recording head over a long period of storage and for better scratch resistance of the print.

The treating liquid composition in this case preferably has pH of 7 to 12 at around 25°C. The base used herein works to ionize the surface of the anionic fine particles, to increase the surface potential to thereby improve the dispersion stability of the fine particles in the treating liquid composition. In addition, it serves to improve adsorptivity for the cationic compound in the ink (recording liquid composition) of the anionic fine particles and to control the viscosity of the treating liquid composition. The base for use herein is not specifically limited and can be freely selected, for example, from the following inorganic compounds and organic compounds, as long as it can yield the desired pH, zeta potential, dispersibility of the fine particles and other properties in combination with the anionic fine particles.

Examples of the bases are sodium hydroxide, lithium hydroxide, sodium carbonate, ammonium carbonate, ammonia, sodium acetate, ammonium acetate, morpholine, as well as alkanolamines such as monoethanolamine, diethanolamine, triethanolamine, ethylmonoethanolamine, n-butylmonoethanolamine, dimethylethanolamine, diethylethanolamine, ethyldiethanolamine, n-butyldiethanolamine, di-n-butylethanolamine, monoisopropanolamine, diisopropanolamine and triisopropanolamine. Among them, bases having a primary dissociation constant pkb of 5 or less in water are preferred for more stabe dispersion and better adsorptivity for the cationic compound of the anionic fine particles .

The weight ratio of the anionic fine particles to the base in the treating liquid composition is preferably from 200:1 to 5:1, and more preferably from150:1 to 8:1 for more stabe dispersion and better adsorptivity for the cationic compound of the anionic fine particles.

The treating liquid composition can be prepared, for example, by the following process. Basically, the fine particles, water and a deflocculant are mixed to yield a dispersion. Where necessary, a water-soluble solvent is added, and the mixture is deflocculated in a deflocculating machine. Examples of the deflocculating machine are high-speed and high-shear rotary agitating deflocculating machine, dissolver, colloid mill, homogenizer and ultrasonic deflocculating machine, which may be commercially available under the trade names of T. K. AUTO HOMO MIXER and T. K. HOMOMIC LINE FLOW from Tokushu Kika Kogyo Co., Ltd., Ultra-homomixer and NNK Colloidmill from Nippon Seiki Seisakusho Co., Ltd. The number of revolutions in deflocculation may be set according to the type and structure of the deflocculating machine and is preferably from 500 rpm to 10000 rpm, and more preferably from 2000 rpm to 8000 rpm. The deflocculation is preferable performed at 5°C to 100° C for 0.01 to 48 hours, while varying depending on the type and structure of the deflocculating machine.

The treating liquid composition may further comprise any of cationic surfactants such as quaternary ammonium salts, pyridinium salts and imidazoline compounds. Examples of such cationic surfactants are lauryltrimethylammonium chloride, lauryldimethylbenzylammonium chloride, benzyltributylammonium chloride, benzalkonium, chloride, cetylpyridinium chloride and 2-heptadecenylhydroxyethylimidazoline.

The cationic surfactants work to reduce the surface tension and increase the wettability with the recording medium to thereby rapidly form the fine particle layer and to aggregate the anionic colorant, thus effectively improving the image quality.

The surface tension of the treating liquid composition is preferably from 20 to 60 mN/m and more preferably from 30 to 50 mN/m for better wettability to the recording medium and satisfactory granulation of the droplets.

The visicosity of the treating liquid composition is preferably from 1.0 to 20.0 cP and more preferably from 3.0 to 10.0 cP for further stable discharge.

The pH of the treating liquid composition is preferably from 3 to 11, and more preferably from 3 to 6 or from 8 to 11 for further stable dispersion of the fine particles.

### Recording liquid composition

Next, the recording liquid composition for use in the ink set of the present invention will be described.

The colorant for use in the recording liquid composition can be any of dyes, pigments or mixtures of a dye and a pigment. When the fine particles in the treating liquid composition are cationic, the colorant in the recording medium is preferably anionic, i.e., opposite charge to thereby electrically neutrarize and induce aggregation. When the fine particles are anionic, the colorant is preferably cationic.

Pigments as the colorant are more preferred than dyes. More specifically, a pigment being dispersed can more effectively induce aggregation when its electric charge is neutralized and more effectively improves the image quality than a dye being dissolved.

The concentration of the colorant in the recording liquid composition can be appropriately set depending on the types of substances to be used and is preferably from 0.1 % by weight to 40% by weight, more preferably from 1% by weight to 30% by weight and further preferably from 3 % by weight to 15 % by weight

A colorant in a concentration less than 0.1% by weight may invite decreased image density. In contrast, a colorant in a concentration exceeding 40% by weight may invite the recording liquid composition to have an excessively high viscosity, thus leading to unstable discharge. In addition, a colorant in a concentration exceeding 40% by weight may often precipitate in the vicinity of nozzles of the head. To prevent this, a large amount of a humectant must be added to the recording liquid composition. However, a large amount of the humectant makes the recording liquid composition have an excessively high viscosity, thus deteriorating stable discharge.

The pigments for use in the recording liquid composition are not specifically limited and include, for example, the following pigments.

Carbon black for use in a black pigment ink (recording liquid composition) includes, but is not limited to, furnace carbon black and channel carbon black. Such carbon black preferably has a primary particle diameter of 15 to 40 nm, a specific surface area determined by the BET method of 50 to 300 m²/g, a DBP oil absorption of 40 to 150 ml/100-g, a volatile content of 0.5% to 10% and pH of 2 to 9.

Such black pigments are commercially available, for example, under the trade names of No. 2300, No. 900, MCF 88, No. 40, No. 52, MA7, MA8 and No. 2200B from Mitsubishi Chemical Corporation; RAVEN 1255 from Colombian Carbon Company; REGAL 400R, REGAL 660R and MOGUL L from Cabot Corporation GA; Color Black FW1, Color Black FW18, Color Black S170, Color Black S150, Printex 35 and Printex U from Degussa AG. Resin-coated pigments can also be used herein.

Color pigments for use as the colorant in the recording liquid composition can be whichever of organic pigments and inorganic pigments. Specific examples are as follows.

Examples of the organic pigments are azo, phthalocyanine, anthraquinone, quinacridone, dioxazine, indigo, thioindigo, perylene, isoindolenone, aniline black, azomethine, Rhodamine B lake, and carbon black pigments. Examples of the inorganic pigments are iron oxide, titanium oxide, calcium, carbonate, barium sulfate, aluminum hydroxide, barium yellow, Prussian blue, cadmium red, chrome yellow, and metal powders.

The pigment can be used in combination with a pigment dispersant for more stable dispersion.

As an anionic pigment dispersant, any water-soluble resin having an anionic group and being capable of stably dispersing the pigment in water or a water-soluble medium can be used. Such an anionic pigment dispersant preferably has a weight-average molecular weight of 1,000 to 30,000 and more preferably 3,000 to 15,000.

Examples of the anionic pigment dispersant are block copolymers, graft copolymers and random copolymers, or salts thereof, comprising two or more of monomers such as styrene, styrene derivatives, vinylnaphthalene, vinylnaphthalene derivatives, aliphatic alcohol esters of α,β-ethylenically unsaturated carboxylic acids and other hydrophobic monomers, as well as acrylic acid and derivatives thereof, maleic acid and derivatives thereof, itaconic acid and derivatives thereof, and fumaric acid and derivatives thereof.

These resins are alkali-soluble resins which are soluble in an aqueous solution of a base. Examples of the anionic pigment dispersant also include homopolymers comprising a hydrophilic monomer or salts thereof, as well as poly(vinyl alcohol)s, carboxymethyl cellulose, naphthalenesulfonic acid fomaldehyde condensate and other water-soluble resins. However, the use of an alkali-solule resin further reduces the viscosity of the dispersion and facilitates the dispersing. The amount of the water-soluble resin is preferably from 0.1% by weight to 5% by weight based on the total weight of the ink (recording liquid composition).

As a cationic pigment dispersant, polymers prepared by polymerization of a cationic monomer as mentioned below are preferred. The molecular weight of the polymers is preferably 2000 or more. The cationic monomers for use herein are quaternary compounds derived from the monomers exemplified below. The monomers can be converted into such quaternary compounds, for example, by treating with methyl chloride, dimethyl sulfate, benzyl chloride or epichlorohydrin according to a conventional procedure.

Examples of the monomers are N,N-dimethylaminoethyl methacrylate [CH₂=C(CH₃)-CONH-CH₂CH₂N(CH₃)₂], N,N-dimethylaminoethyl acrylate [CH₂=CH-CONH-CH₂CH₂N(CH₃)₂]. N,N-dimethylaminoacrylamide [CH₂=CH-CON(CH₃)₂], N,N-dimethylaminomethacrylamide:[CH₂=C(CH₃)-CON(CH₃)₂], N,N-dimethylaminopropylacrylamide [CH₂=CH-CONH-C₃H₆N(CH₃)₂], andN,N-dimethylaminopropylmethacrylamide [CH₂=C(CH₃)-CONH-C₃H₆N(CH₃)₂].

The water-soluble resin for use as the pigment dispersant may further comprise a hydrophobic monomer for better affinity for the pigment. Examples of the hydrophobic monomer are styrene, α-methylstyrene, vinyltoluene and other styrenes, and alkyl esters of (meth)acrylic acid.

Examples of the alkyl esters of (meth)acrylic acid are methyl (meth)acrylate, ethyl (meth)acrylate, propyl (meth)acrylate, isopropyl (meth)acrylate, n-butyl (meth)acrylate, sec-butyl (meth)acrylate, tert-buthyl (meth)acrylate, 2-methylbutyl (meth)acrylate, 2-ethylbutyl (meth)acrylate, 3-methylbutyl (meth)acrylate, 1,3-dimethylbutyl (meth)acrylate, pentyl (meth)acrylate, 3-methylpentyl (meth)acrylate, hexyl (meth)acrylate, 2-ethylhexyl (meth)acrylate, heptyl (meth)acrylate, octyl (meth)acrylate, nonyl (meth)acrylate, 2-ethoxyethyl acrylate, 3-ethoxypropyl acrylate, 2-ethoxybutyl acrylate, 3-ethoxybutyl acrylate, 3-ethoxybutyl acrylate and dimethylaminoethyl acrylate. Examples of an alcohol component for forming a halfester are methanol, ethanol and propanol. The resin may further comprise another monomer such as (meth)acrylamide, 1-methyllol(meth)acrylamide and diacetoneacrylamide. In this connection, self-dispersible pigments that can be stably dispersed without a pigment dispersant can also be used in the present invention.

Among the self-dispersible pigments, an anionic self-dispersible pigment is a pigment having at least one anionic hydrophilic group on its surface with or without the interposition of another atomic group. Examples of such anionic hydrophilic groups are as follows. The other atomic group through which the anionic hydrophilic group is combined includes, for example, an alkyl group having one to twelve carbon atoms, substituted or unsubstituted phenyl group or substituted or unsubstituted naphthyl group.
-COOM, -SO₃M, -SO₂NH₂, -PO₃HM, -PO₃M₂

Wherein M prepresents hydrogen atom, an alkali metal or ammonium.

The anionic carbon black having the hydrophilic group on its surface shows excellent dispersibility in water due to the repulsion of its ion (anion) and can be dispersed stably in an aqueous ink (recording liquid composition) without the addition of a dispersant.

A cationic self-dispersible pigment is a pigment having at least one cationic hydrophilic group on its surface with or without the interposition of another atomic group.

Examples of the cationic hydrophilic group in such a cationic carbon black include, but are not limited to, the following quaternary ammonium groups.

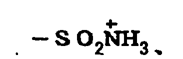

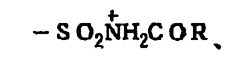

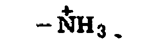

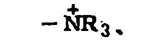

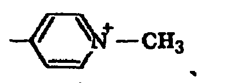

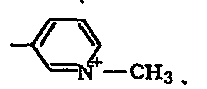

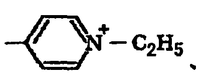

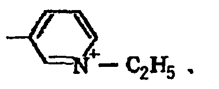

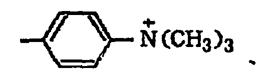

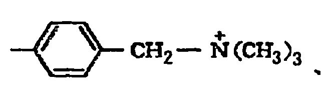

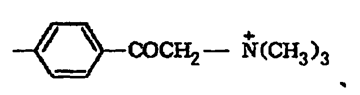

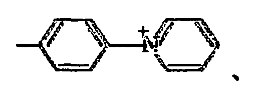

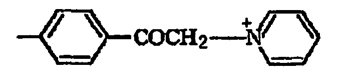

In the above formulae, R represents a linear or branched alkyl group having one to twelve carbon atoms, substituted or unsubstituted phenyl group, or substituted or unsubstituted naphthyl group.

The counter ion for the cationic group may be, for example, NO₃⁻ or CH₃COO⁻.

By taking N-ethylpyridyl goup having the following structure formula as an example of the hydrophilic goup, the cationic self-dispersible carbon black having such a hydrophilic group can be prepared by treating carbon black with 3-amino-N-ethylpyridinium bromide.

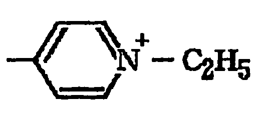

The cationic carbon black having the hydrophilic group on its surface shows excellent dispersibility in water due to the repulsion of its ion (cation) and can be dispersed stably in an aqueous ink (recording liquid composition) without the addition of a dispersant.

Water-soluble dyes for use in the present invention include acidic dyes (anionic dyes), direct dyes, basic dyes (cationic dyes), reactive dyes and edible dyes (food dyes) as classified by the Color Index system, which have excellent water resistance and light resistance.

Each of these dyes can be used in combination with each other or in combination with other colorants such as pigments within ranges not deteriorating the advantages of the present invention. Examples of dyes are as follows.
(a) Examples of the acidic dyes are:
   Color Index Number (C. I.) Acid Yellow 17,23,42,44,79 and 142;
   C. I. Acid Red 1, 8, 13, 14, 18, 26, 27, 35, 37, 42, 52, 82, 87, 89, 92, 97, 106,111,114,115,134,186,249,254 and 289;
   C. I. Acid Blue 9, 29, 45, 92 and 249;
   C. I. Acid Black 1, 2, 7, 24, 26 and 94.
(b) Examples of the food dyes are:
   C. I. Food Yellow 3 and 4;
   C. I. Food Red 7, 9 and 14;
   C. I. Food Black 1 and 2.
(c) Examples of the direct dyes are:
   C. I. Direct Yellow 1, 12, 24, 26, 33, 44, 50, 86,120,132,142 and 144;
   C. I. Direct Red 1, 4, 9,13,17, 20, 28, 31, 39, 80, 81, 83, 89, 225 and 227;
   C. I. Direct Orange 26, 29, 62 and 102;
   C. I. Direct Blue 1, 2, 6, 15, 22, 25, 71, 76, 79, 86, 87, 90, 98, 163, 165, 199 and 202;
   C. I. Direct Black 19, 22, 32, 38, 51, 56, 71, 74, 75, 77,154,168 and 171.
(d) Examples of the basic dyes are:
   C. I. Basic Yellow 1, 2, 11, 13, 14, 15, 19, 21, 23, 24, 25, 28, 29, 32, 36, 40, 41, 45, 49, 51, 53, 63, 64, 65, 67, 70, 73, 77, 87 and 91;
   C. I. Basic Red 2, 12, 13, 14, 15, 18, 22, 23, 24, 27, 29, 35, 36, 38, 39, 46, 49, 51, 52, 54, 59, 68, 69, 70, 73, 78, 82, 102, 104, 109 and 112;
   C. I. Basic Blue 1, 3, 5, 7, 9, 21, 22, 26, 35, 41, 45, 47, 54, 62, 65, 66, 67, 69, 75, 77, 78, 89, 92, 93,105,117,120,122,124,129,137,141,147 and 155;
   C. I. Basic Black 2 and 8.
(e) Examples of the reactive dyes are:
   C.I. Reactive Black 3, 4, 7,11,12 and 17;
   C.I. Reactive Yellow 1, 5, 11, 13, 14, 20, 21, 22, 25, 40, 47, 51, 55, 65 and 67;
   C.I. Reactive Red 1, 14, 17, 25, 26, 32, 37, 44, 46, 55, 60, 66, 74, 79, 96 and 97;
   C. I. Reactive Blue 1, 2, 7,14,15, 23, 32, 35, 38, 41, 63, 80 and 95.

The recording liquid composition preferably further comprises a water-soluble organic solvent in addition to the colorant, for the purpose of adjusting the physical properties of the recording liquid composition desirably and preventing clogging of recording head nozzles. Such water-soluble organic solvents include humectants and wetting agents.

The humectant is added to prevent the clogging of recording head nozzles. Examples of the humectants are ethylene glycol, diethylene glycol, triethylene glycol, tetraethylene glycol, polyethylene glycol, propylene glycol, 1,3-butanediol, 1,3-propanediol, 2-methyl-1,3-propanediol, 1,4-butanediol, 1,5-pentanediol, 1,6-hexanediol, glycerol, 1,2,6-hexanetriol, 2-ethyl-1,3-hexartediol, 1,2,4-butanetriol, 1,2,3-butanetriol, petrol (3-methyl-1,3,5-pentanetriol) and other polyhydric alcohols; ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monomethyl ether, propylene glycol monoethyl ether and other polyhydric alcohol alkyl etehrs; ethylene glycol monopenyl ether, ethylene glycol monobenzyl ether and other polyhydric alcohol aryl ethers; N-methyl-2-pyrrolidone, N-hydroxyethyl-2-pyrrolidone, 2-pyrrolidone, 1,3-dimethylimidazolidinone, ε-caprolactam and other nitrogen-containing heterocyclic compounds; formamide, N-methylformamide, N,N-dimethylformamide and other amides; monoethanolamine, diethanolamine, triethanolamine, monoethylamine, diethylamine, triethylamine and other amines; dimethyl sulfoxide, sulfolane, thiodiethanol and other sulfur-containing compounds; propylene carbonate, ethylene carbonate, and γ-butyrolactone. With water, each of these humectants can be used alone or in combination.

The wetting agents are used for improving wettability between the treating liquid composition and the recording medium and controlling the penetration rate. Compounds represented by aforementioned Formulae (I), (II), (III) and (IV) are preferred as the wetting agent. More specifically, polyoxyethylene alkylphenyl ether surfactants of Formula (I), acetylene glycol surfactants of Formula (II), polyoxyethylene alkyl ether surfactants of Formula (III), and polyoxyethylene polyoxypropylene alkyl ether surfactants of Formula (IV) can reduce the surface tension of the treating liquid composition and improve the wettability to thereby increase the penetration rate.

In addition to the compounds of Formulae (I), (II), (III) and (IV), the wetting agents also include diethylene glycol monophenyl ether, ethylene glycol monophenyl ether, ethylene glycol monoallyl ether, diethylene glycol monophenyl ether, diethylene glycol monobutyl ether, propylene glycol monobutyl ether, tetraethylene glycol chlorophenyl ether and other alkyl and aryl ethers of polyhydric alcohols, polyoxyethylene-polyoxypropylene block copolymers and other nonionic surfactants, fluorine-containing surfactants, ethanol, 2-propanol and other lower alcohols, of which diethylene glycol monobutyl ether is preferred.

The surface tension of the recording liquid composition is preferably from 20 to 60 mN/m and more preferably from 30 to 50 mN/m for better wettability with the recording medium and satisfactory granulation of the droplets.

The visicosity of the recording liquid composition is preferably from 1.0 to 20.0 cP and more preferably from 3.0 to 10.0 cP for further stable discharge.

The pH of the recording liquid composition is preferably from 3 to 11, and more preferably from 6 to 10 for preventing corrosion of metal members to be in contact with the composition.

The treating liquid composition and recording liquid composition may further comprise any of antiseptic-antimold agents for preventing growth of microorganisms and for increasing storage stability and image quality stability.

Examples of such antiseptic-antimold agents are benzotriazole, sodium dehydroacetate, sodium sorbate, sodium 2-pyridinethiol-1-oxide, isothiazoline compounds, sodium benzoate and sodium pentachlorophenol.

The treating liquid composition and recording liquid composition may each further comprise an anticorrosive for preventing corrosion of the head and other metals to be in contact with the composition by forming a coating film thereon. Examples of the anticorrosive are acidic sulfites, sodium thiosulfate, ammonium thiodiglycolate, diisopropylammonium nitrite, pentaerythritol tetranitrate and dicyclohexylammonium nitrite.

The treating liquid composition and recording liquid composition may each further comprise an antioxidant. Such antioxidants are roughly classified as radical acceptor antioxidants which feed proton to the resulting radical peroxide to stabilize, and peroxide separation antioxidants which convert hydroperoxide into a stable alcohol.

Typical examples of the radical acceptor antioxidants are phenolic compounds and amine compounds. Examples of the phenolic compounds are hydroquinone, gallates and other compounds;
2,6-di-tert-butyl-p-cresol, stearyl-β-(3,5-di-tert-butyl-4-hydroxyphenyl)propionate, 2,2'-methylenebis(4-methyl-6-tert-butylphenol), 2,2'-methylenebis(4-ethyl-6-tert-butylphenol), 4,4'-thiobis(3-methyl-6-tert-butylphenol), 1,1,3-tris(2-methyl-4-hydroxy-5-tert-butylphenyl)butane, 1,3,5-trimethyl-2,4,6-tris(3,5-di-tert-4-hydroxybenzyl)benzene, tris(3,5-di-tert-butyl-4-hydroxybenzyl)isocyanurate, tetrakis[methylene-3-(3',5'-di-tert-butyl-4-hydroxyphenyl)propionate]met hane and other hindered phenolic compounds. Examples of the amine compounds are N,N'-diphenyl-p-phenylenediamine, phenyl-β-naphthylamine, phenyl-α-naphthylamine, N,N'-β-naphthyl-p-phenylenediamine, N,N'-diphenylethylenediamine, phenothiazine, N,N'-di-sec-butyl-p-phenylenediamine and 4,4'-tetramethyl-diaminodiphenylmethane.

Typical examples of the peroxide separation antioxidants are sulfur compounds and phosphorus compounds. Examples of the sulfur compounds are dilauryl thiodipropionate, distearyl thiodipropionate, laurylstearyl thiodipropionate, dimyristyl thiodipropionate, distearyl β,β'-thiodibutyrate, 2-mercaptobenzimidazole and dilauryl sulfide. Examples of the phosphorus compounds are triphenyl phosphite, trioctadecyl phosphite, tridecyl phosphite, trilauryl trithiophosphite, diphenylisodecyl phosphite, trinonylphenyl phosphite and distearylpentaerythritol phosphite.

The treating liquid composition and recording liquid composition may each further comprise a pH adjuster as mentioned above. Examples of the pH adjuster are lithium hydroxide, sodium hydroxide, potassium hydroxide and other alkali metal hydroxides; ammonium hydroxide, quaternary ammonium hydroxides, quaternary phosphonium hydroxides; lithium carbonate, sodium carbonate, potassium carbonate and other alkali metal carbonates; diethanolamine, triethanolamine and other amines; boric acid, hydrochloric acid, nitric acid sulfuric acid, acetic acid and other acids.

The treating liquid composition and recording liquid composition may further comprise a potential aicd or base such as a photo-induced acid generator or photo-induced base generator which generates an acid or base upon irradiation with ultraviolet rays.

The image forming apparatus for recording images using the ink set and image forming process of the present invention will be illustrated with reference to the drawings.

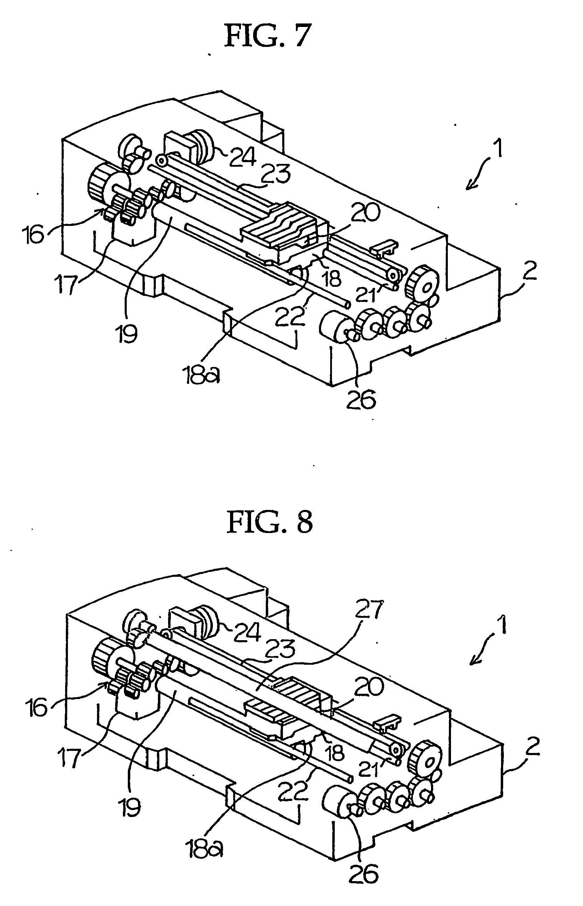

FIG. 7 is a perspecitve view of a schematic configuration of an image forming apparatus as an embodiment of the present invention. With reference to FIG. 7, each of cartridges 20 houses the treating liquid composition and the recording liquid compositions respectively and is housed in a carriage 18. More specifically, the cartridges 20 each house one of the treating liquid composition and the recording liquid compositions of individual colors, in which the individual compositions are separated with each other. The treating liquid composition and recording liquid compositions are fed from the cartridges 20 to a recording head 18a of the carriage 18. In FIG. 7, the recording head 18a faces downward and the head plane is not seen.

The recording head 18a of the carriage 18 moves by a timing belt 23 while being guided by guide shafts 21 and 22. The timing belt 23 is driven by a main scanning motor 24. A recording medium is arranged by a platen 19 so as to face the recording head 18a. FIG. 7 also illustrates a gear mechanism 16, a secondary scanning motor 17 and another main scanning motor 26.

FIG. 8 is a perspective view of a schematic configuration of an image forming apparatus having an ultraviolet irradiator (high-pressure mercury lamp) as another embodiment of the present invention.

The basic configuration of this apparatus is the same as in the apparatus of FIG. 7, except for using a high-pressure mercury lamp 27 as an ultraviolet irradiator. More specifically, as in the apparatus of FIG. 7, the recording head 18a of the carriage 18 moves by a timing belt 23 while being guided by guide shafts 21 and 22. The timing belt 23 is driven by a main scanning motor 24. In this procedure, the high-pressure mercury lamp 27 arranged above the carriage 18 applies ultraviolet rays to the surface of the recording medium to be printed. Upon the arrival of the recording liquid composition at the recording medium, the ultraviolet rays are applied to induce photoreaction. The non-contact external factor (ultraviolet irradiation) causes the condition change. The recording medium is arranged by a platen 19 so as to face the recording head 18a. FIG. 8 also illustrates a gear mechanism 16, a secondary scanning motor 17 and another main scanning motor 26.

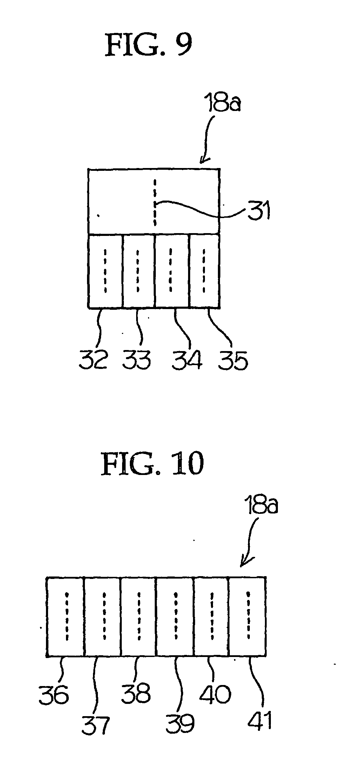

FIG. 9 is a schematic enlarged view of the nozzles of the recording head 18a shown in FIGS. 7 and 8.

For example, a nozzle 31 for discharging the treating liquid composition is arranged in a vertical direction. Nozzles 32, 33, 34 and 35 discharge yellow, magenta, cyan and black recording liquid compositions, respectively, corresponding to the cartridges therein.

FIG. 10 shows another configuration of the recording head, in which all the nozzles are arranged in line. In FIG.10, for example, nozzles 36 and 41 discharge the treating liquid composition. Nozzles 37, 38,39 and 40 discharge yellow, magenta, cyan and black recording liquid compositions, respectively, corresponding to the cartridges therein.
The recording head 18a having this configuration is equipped with the nozzles for discharging the treating liquid composition at both horizontal ends and can print in both directions of its movement with the guidance of the guide shafts 21 and 22. More specifically, the recording head 18a can apply the treating liquid composition first to the recording medium and then apply the color recording liquid compositions thereonto, or vise vista, in both directions. This can reduce difference in image density between the two moving directions of the recording head 18a.

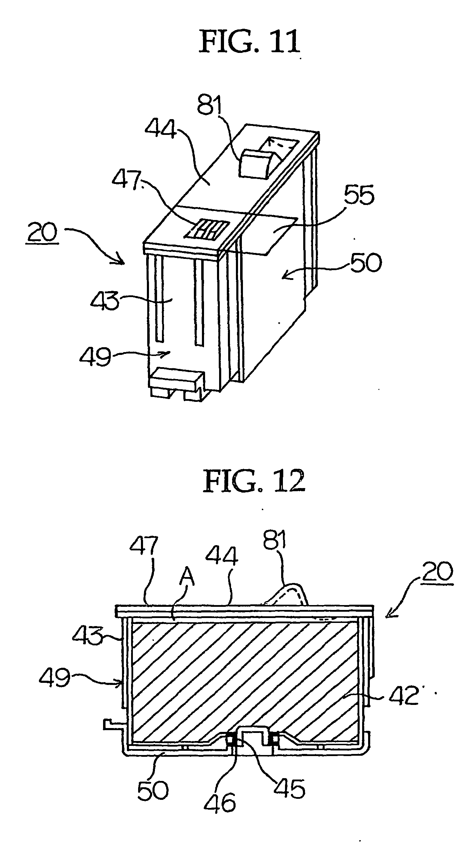

Each cartridge in the image forming apparatus can be replaced for another treating liquid composition or recording liquid composition. The cartridges may be integrated with the recording head 18a. FIGS. 11 and 12 are each a schematic perspective view and schematic elevational view in section of a cartridge capable of housing the treating liquid composition or recording liquid composition of the present invention. The cartridge shown in FIGS.11 and 12 can house whichever of the treating liquid composition and the recording liquid compositions.

With reference to FIGS. 11 and 12, the cartridge 20 comprises a cartridge cabinet 49 housing a liquid absorber 42 which absorbs one of the recording liquid compositions and treating liquid composition. The liquid absorber 42 is porous and includes the absorbed recording liquid composition or treating liquid composition. The cartridge cabinet 49 comprises a case 43 having a wide top opening, and an upper lid member 44 on the top opening. A is a clearance. The upper lid member 44 has an air release port 47 with a sealant 55, and a projection 81 for attachment and detachment of the cartridge. The case 43 of the cartridge cabinet 49 has a liquid supply port for feeding each composition to the recording head 18a. A sealing 46 is engaged in the inner periphery of the liquid supply port 45. The cartridge cabinet 49 equips a cap member 53 for plugging the liquid supply port 45 in order to prevent the leakage of the liquid (composition) before the cartridge is attached to the image forming apparatus.

In the present invention, it is most preferred that the each recording head 18a ejects one of the recording liquid compositions and treating liquid composition by ink-jet recording system so as to the individual droplets of the compositions are superimposed at one position. However, the present invention is not limited to this configuration. For example, the present invention also encompasses a configuration in which the treating liquid composition is applied intermittently and the recording liquid compositions are superimposed on the enlarged treating liquid composition due to bleeding, and a configuration in which the treating liquid composition is applied only to the outline of an image and the recording liquid compositions are superimposed partially thereon.

The cross section of the record of the present invention formed by using the ink set, image forming process and image forming apparatus of the present invention can be determined by slicing the record into thin sections using a sharp cutter such as microtome and observing the thin sections with a transmission electron microscope (TEM) as a transmission electron micrograph. Alternatively, a scanning electron microscope (SEM) can be used instead of the transmission electron microscope (TEM).

A striped pattern in density will be observed in the cross section of the record upon observation with a transmission electron microscope (TEM). This striped pattern is further quantitatively determined using an element analyzer such as energy dispersive X-ray fluorescence spectrometer (EDX) or electron probe microanalyzer (EPMA). Thus, the presence of a layer substantially or mainly comprising the fine particles and another layer substantially or mainly comprising the colorant is verified.

More specifically, the fine particles in the layer consisting essentially of the fine particles or the colorant in the layer consisting essentially of the colorant can be quantitatively analyzed by the use of the analyzer. For example, when an energy dispersive X-ray fluorescence spectrometer (EDX) is used, the spectrum of the record shows peaks corresponding to individual constitutive elements. The height of a peak corresponds to the abundance of the element. The precise abundance of each element can be determined using a calibration curve. The terms "substantially" or "consisting essentially of" as used herein mean a state in which most of the fine particles in the treating liquid composition are not mixed with most of the colorant in the recording liquid composition and includes a state in which they are somewhat mixed at the interface between the two liquids. The fine particles or the colorant occupies preferably 70% or more and more preferably 80% or more of the layer in question for further effective improvement of the image quality.

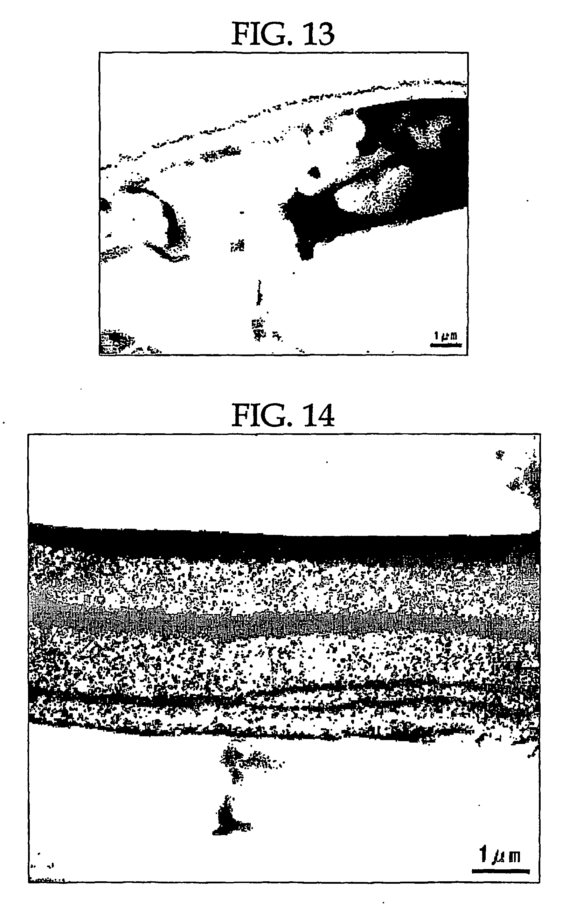

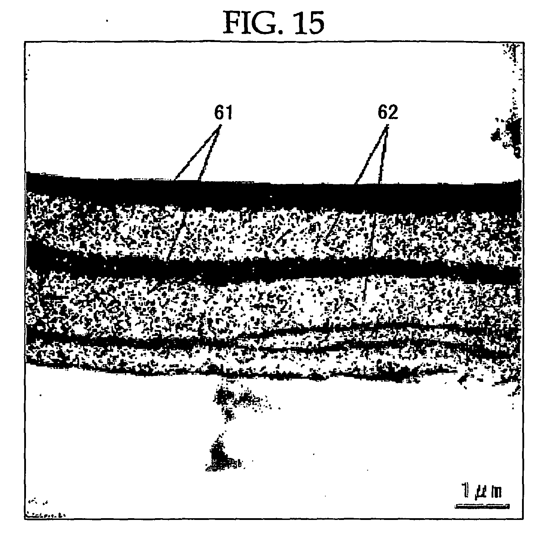

The cross section of the record can be observed by cutting a black solid portion of the record and photographing the cross section with a transmission electron microscope (TEM). Examples of such transmission electron micrographs are shown in FIGS. 13 and 14. FIG. 13 is a sectional transmission electron micrograph of a record formed by one-pass printing in which the ink-jet recording head is scanned once. FIG. 14 is a sectional transmission electron micrograph of a record formed by multi-pass printing in which the ink-jet recording head is scanned plural times. These figures show a striped pattern in density. By further analyzing with an energy dispersive X-ray fluorescence spectrometer (EDX) as shown in FIGS. 15 to 17, it is verified that a high-density portion is the layer of treating liquid composition (layer of aggregate of the fine particles) and a low-density portion is the layer of the recording liquid composition (layer of aggregate of the colorant).

The present invention will be illustrated in further detail with reference to several examples and comparative examples below, which are not intended to limit the scope of the present invention.

### Example A .

Treating liquid compositions and recording liquid compositions for constituting ink sets according to the present invention, and those according to comparative examples each having the following formulations were prepared. All parts in the formulations are by weight unless otherwise specified, and the total amount of each compositions 100 parts by weight.

### <Treating liquid composition 1>

| | |
|---|---|
| Cationic colloidal silica (SNOW TEX AK; Nissan Chemical Industries, Ltd.) | 15 parts |
| 2-Pyrrolidone | 12.5 parts |
| Diethylene glycol | 12.5 parts |
| Octanediol | 1.0 part |
| Cationic surfactant (Cation G50; Sanyo Chemical Industries, Ltd.) | 2.0 parts |
| Benzotriazole | 1.0 part |
| Antiseptic-antimold agent (PROXEL LV(s); Avecia Ltd.) | 0.2 part |
| Water | balance |

The above composition was adjusted to pH 4.3 with acetic acid before use.

### <Treating liquid composition 2>

| | |
|---|---|
| Titanium oxide (Titania IT-S; Idemitsu Kosan Co., Ltd.) | 15 parts |
| 2-pyrrolidone | 12.5 parts |
| Diethylene glycol | 12.5 parts |
| Octanediol | 1.0 part |
| Cationic surfactant (Cation G50; Sanyo Chemical Industries, Ltd.) | 2.0 parts |
| Benzotriazole | 1.0 part |
| Antiseptic-antimold agent (PROXEL LV(s); Avecia Ltd.) | 0.2 part |
| Water | balance |

The above composition was adjusted to pH 3.8 with acetic acid before use.

### <Treating liquid composition 3>

| | |
|---|---|
| Alumina (Alumina Sol 520; Nisssan Chemical Industries, Ltd.) | 15 parts |
| 2-Pyrrolidone | 12.5 parts |
| Diethylene glycol | 12.5 parts |
| Octanediol | 1.0 part |
| Cationic surfactant (Cation G50; Sanyo Chemical Industries, Ltd.) | 2.0 parts |
| Benzotriazole | 1.0 part |
| Antiseptic-antimold agent (PROXEL LV(s); Avecia Ltd.) | 0.2 part |
| Water | balance |

The above composition was adjusted to pH 3.9 with acetic acid before use.

### <Treating liquid composition 4>

| | |
|---|---|
| Anionic colloidal silica (SNOW TEX 20; Nissan Chemical Industries, Ltd.) | 15 parts |
| 2-Pyrrolidone | 12.5 parts |
| Diethylene glycol | 12.5 parts |
| Octanediol | 1.0 part |
| Cationic surfactant (Cation G50; Sanyo Chemical Industries, Ltd.) | 2.0 parts |
| Benzotriazole | 1.0 part |
| Antiseptic-antimold agent (PROXEL LV(s); Avecia Ltd.) | 0.2 part |
| Water | balance |

The above composition was adjusted to pH 3.9 with acetic acid before use.

### <Treating liquid composition 5>

Treating liquid composition 5 was prepared by the procedure of Example (1) in JP-B No. 2711098.

| | |
|---|---|
| Quaternary ammonium salt | 3.0 parts |
| Glycerol | 10.0 parts |
| Diethylene glycol | 20.0 parts |
| Water | balance |

### <Treating liquid composition 6>

Treating liquid composition 6 was prepared by the procedure of Example P-1 of JP-B No. 2667401.

| | |
|---|---|
| Polyallylamine | 5.0 parts |
| Glycerol | 10.0 parts |
| Ethylene glycol | 11.0 parts |
| Diethylene glycol | 20.0 parts |
| Diethylene glycol monobutyl ether | 12.0 parts |
| Sodium dehydroacetate | 0.1 part |
| Water | balance |

### <Treating liquid composition 7>

Treating liquid composition 7 was prepared by the procedure of the production example of Liquid Composition A in the examples of JP-A No. 2001-199149.

| | |
|---|---|
| Alumina hydrate | 10.0 parts |
| Glycerol | 7.5 parts |
| Diethylene glycol | 7.5 parts |
| Nitric acid | 0.2 part |
| Water | balance |

### <Treating liquid composition 8>

Treating liquid composition 8 was prepared by the procedure of the production example of Liquid Composition 1 in the examples of JP-A No. 2002-201385.

| | |
|---|---|
| Alumina hydrate | 10.0 parts |
| Glycerol | 7.5 parts |
| Diethylene glycol | 7.5 parts |
| Zirconium oxynitrate dihydrate | 0.4 part |
| Water | balance |

### <Treating liquid composition 9>

Treating liquid composition 9 was prepared by the procedure of the production example of Reaction Liquid A in the examples of JP-A No. 2001-30616.

| | |
|---|---|
| Magnesium nitrate hexahydrate | 25.0 parts |
| Triethylene glycol monobutyl ether | 10.0 parts |
| Glycerol | 10.0 parts |
| Water | balance |

### <Treating liquid composition 10>

| | |
|---|---|
| Cationic colloidal silica (SNOW TEX AK; Nissan Chemical Industries, Ltd.) | 15 parts |
| NaCl | 10 parts |
| 2-pyrrolidone | 12.5 parts |
| Diethylene glycol | 12.5 parts |
| Octanediol | 1.0 part |
| Cationic surfactant (Cation G50; Sanyo Chemical Industries, Ltd.) | 2.0 parts |
| Benzotriazole | 1.0 part |
| Antiseptic-antimold agent (PROXEL LV(s); Avecia Ltd.) | 0.2 part |
| Water | balance |

### <Black Recording liquid composition 1 (anionic pigment-containing recording liquid composition)>

| | |
|---|---|
| Carbon black (Cabojet 300; Cabot Corporation, GA) | 10 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Ion-exchanged water | balance |

The above composition was adjusted to pH 10.5 with an aqueous LiOH solution before use.

### <Yellow Recording liquid composition 1 (anionic pigment-containing recording liquid composition)>

| | |
|---|---|
| Resin-coated yellow pigment dispersion (solid content of yellow pigment 10 parts) | 50 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| sodium dehydroacetate | 0.2 part |
| Sodium thiosulfate | 0.2 part |
| Antiseptic-antimold agent (PROXEL LV(s); Avecia Ltd.) | 0.4 part |
| Ion-exchanged water | balance |

The above composition was adjusted to pH 10.5 with an aqueous LiOH solution before use.

The resin-coated yellow pigment dispersion used in the preparation of Yellow Recording liquid composition 1 (anionic pigment-containing recording liquid composition) was prepared in the following manner.

### Preparation Example of Resin-coated Yellow Pigment Dispersion

### (1) Preparation of Polymer Solution

The inside atmosphere of a 1-liter flask equipped with a mechanical stirrer, thermometer, nitrogen gas feed tube, condenser and dropping funnel was thoroughly replaced with nitrogen gas, and 11.2 g of styrene, 2.8 g of acrylic acid, 12.0 g of lauryl methacrylate, 4.0 g of polyethylene glycol methacrylate, 4.0 g of a styrene macromonomer AS-6 (trade name, available from Toagosei Co., Ltd.) and 0.4 g of mercaptoethanol were placed therein, and the mixture was raised in temperature to 65°C.

Next, a mixture of 100.8 g of styrene, 25.2 g of acrylic acid, 108.0 g of lauryl methacrylate, 36.0 g of polyethylene glycol methacrylate, 60.0 g of hydroxyethyl methacrylate, 36.0 g of a styrene macromonomer AS-6 (trade name, available from Toagosei Co., Ltd.), 3.6 g of mercaptoethanol, 2.4 g of azobisdimethylvaleronitrile and 18 g of methyl ethyl ketone was added dropwise to the above mixture in the flask over 2.5 hours.

After the completion of addition, a mixture of 0.8 g of azobisdimethylvaleronitrile and 18 g of methyl ethyl ketone was added dropwise to the mixture in the flask over 0.5 hour. After aging at 65°C for 1 hour, 0.8 g of azobisdimethylvaleronitrile was further added, followed by aging for further 1 hour. After the completion of the reaction, 364 g of methyl ethyl ketone was added, to yield 800 g of a polymer solution having a concentration of 50%.

Part of the polymer solution was dried and was analyzed by gel permeation chromatography (reference: polystyrene, solvent tetrahydrofuran), to find that the polymer had a weight-average molecular weight of 15000.

### (2) Preparation of Resin-coated Yellow Pigment Dispersion

The above-prepared polymer solution (22.2 g) was thoroughly mixed with 26.0 g of a yellow pigment Symuler Fast Yellow 4181 (trade name, available from Dainippon Ink & Chemicals, Inc.),13.6 g of a 1 mol/liter aqueous lithium hydroxide solution, 20 g of methyl ethyl ketone and 30 g of ion-exchanged water, and the mixture was kneaded in a three-roll mill NR-84A (trade name, available from Noritake Co., Ltd.) twenty times. The paste was thorougly mixed with 200 g of ion-exchanged water, from which methyl ethyl ketone and water were distilled off using an evaporator, to yield 160 g of a resin-coated yellow pigment dispersion having a solid content of 20.0% by weight.

Using the above-prepared yellow pigment dispersion, Yellow Recording liquid composition 1 having the above formulaiton was prepared.

### <Black Recording liquid composition 2 (anionic dye-containing recording liquid composition)>

| | |
|---|---|
| C. I. Direct Black 168 | 4 parts |
| Ethylene glycol | 15 parts |
| Glycerol | 5 parts |
| Surfactant (I) wherein R=C₉H₁₉ and k=12 | 1 part |
| Sodium dehydroacetate | 0.2 part |
| Sodium thiosulfate | 0.2 part |
| Antiseptic-antimold agent (PROXEL LV(s); Avecia Ltd.) | 0.4 part |
| Ion-exchanged water | balance |

The above composition was adjusted to pH 10.5 with an aqueous LiOH solution before use.

### <Yellow Recording liquid composition 2 (anionic dye-containing recording liquid composition)>

| | |
|---|---|
| C. I. Acid Yellow 23 | 4 parts |
| Ethylene glycol | 15 parts |
| Glycerol | 5 parts |
| Surfactant (I) wherein R=C₉H₁₉ and k=12 | 1 part |
| Sodium dehydroacetate | 0.2 part |
| Sodium thiosulfate | 0.2 part |
| Antiseptic-antimold agent (PROXEL LV(s); Avecia Ltd.) | 0.4 part |
| Ion-exchanged water | balance |

The above composition was adjusted to pH 10.5 with an aqueous LiOH solution before use.

### <Black Recording liquid composition 3 (recording liquid composition containing a pigment and cationic dispersant)>

| | |
|---|---|
| Carbon black (MA 7; Mitsubishi Chemical Corp.) | 10 parts |
| Cationic dispersant (N,N-dimethylaminoethyl methacrylate) | 2 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Ion-exchanged water | balance |

The above composition was adjusted to pH 10.5 with an aqueous LiOH solution before use.

### <Yellow Recording liquid composition 3 (recording liquid composition containing a pigment and cationic dispersant)>

| | |
|---|---|
| C. I. Pigment Yellow 1 | 10 parts |
| Cationic dispersant (N,N-dimethylaminoethyl methacrylate) | 2 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Ion-exchanged water | balance |

The above composition was adjusted to pH 10.5 with an aqueous LiOH solution before use.

### <Black Recording liquid composition 4 (cationic dye-containing recording liquid composition)>

| | |
|---|---|
| C. I. Basic Black 2 | 10 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Ion-exchanged water | balance |

The above composition was adjusted to pH 10.5 with an aqueous LiOH solution before use.

### <Yellow Recording liquid composition 4 (cationic dye-containing recording liquid composition)>

| | |
|---|---|
| C. I. Basic Yellow 33 | 10 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Ion-exchanged water | balance |

The above composition was adjusted to pH 10.5 with an aqueous LIOH solution before use.

### <Black Recording liquid composition 5 (anionic pigment-containing recording liquid composition)>

Black Recording liquid composition 5 was prepared acocring to the procedure of the black ink Bk2 in the examples of JP-A No. 2001-199149.

| | |
|---|---|
| Carbon black | 3.0 parts |
| Trimethylolpropane | 6.0 parts |
| Glycerol | 6.0 parts |
| Ethylene glycol | 6.0 parts |
| Water | balance |

### <Yellow Recording liquid composition 5 (anionic pigment-containing recording liquid composition)>

Yellow Recording liquid composition 5 was prepared acocring to the procedure of the yellow ink Y3 in the examples of JP-A No. 2001-199149.

| | |
|---|---|
| C. I. Pigment Yellow 74 | 3.0 parts |
| Glycerol | 10.0 parts |
| Ethylene glycol | 5.0 parts |
| N-methylpyrrolidone | 5.0 parts |
| Ethanol | 2.0 parts |
| Water | balance |

### <Black Recording liquid composition 6 (anionic pigment containing recording liquid composition)>

Black Recording liquid composition 6 was prepared by the procedure of the black ink Bk2 in the examples of JP-A No. 2002-2013859.

| | |
|---|---|
| Carbon black | 3.0 parts |
| Glycerol | 10.0 parts |
| Ethylene glycol | 5.0 parts |
| N-methylpyrrolidone | 5.0 parts |
| Ethanol | 2.0 parts |
| Water | balance |

### <Yellow Recording liquid composition 6 (anionic pigment containing recording liquid composition)>

Yellow Recording liquid composition 6 was prepared by the procedure of the yellow ink Y2 in the examples of JP-A No. 2002-2013859.

| | |
|---|---|
| C. I. Pigment Yellow 74 | 3.0 parts |
| Glycerol | 10.0 parts |
| Ethylene glycol | 5.0 parts |
| N-methylpyrrolidone | 5.0 parts |
| Ethanol | 2.0 parts |
| Water | balance |

### <Black Recording liquid composition 7 (anionic pigment containing recording liquid composition)>

Black Recording liquid composition 7 was prepared by the procedure of the black ink A1 in the examples of JP-A No. 2001-30616.

| | |
|---|---|
| Carbon black (MA 7; Mitsubishi Chemical Corp.) | 5.0 parts |
| Styrene-acrylic acid copolymer | 1.0 part |
| Acrylic resin emulsion | 10.0 parts |
| Glycerol | 10.0 parts |
| Water | balance |

### <Yellow Recording liquid composition 7 (anionic pigment-containing recording liquid composition)>

Yellow Recording liquid composition 7 was prepared by the procedure of the yellow ink A1 in the examples of JP-A No. 2001-30616.

| | |
|---|---|
| C. I. Pigment Yellow 74 | 3.5 parts |
| Styrene-acrylic acid copolymer | 1.0 part |
| Acrylic resin emulsion | 15.0 parts |
| Glycerol | 8.0 parts |
| Water | balance |

### <Black Recording liquid composition 8 (ultraviolet-reactive black pigment-containing recording liquid composition)>

| | |
|---|---|
| Carton black (Cabojet 300; Cabot Corporation, GA) | 10 parts |
| Photo-induced acid generator (WS-Triazine; Sanwa Chemical Co., Ltd.) | 2.0 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Ion-exchanged water | balance |

The above composition was adjusted to pH 10.5 with an aqueous LiOH solution before use.

### <Yellow Recording liquid composition 8 (ultraviolet-reactive yellow pigment-containing recording liquid composition)>

| | |
|---|---|
| Resin-coated yellow pigment dispersion (solid content of yellow pigment 10 parts) | 50 parts |
| Photo-induced acid generator (WS-Triazine; Sanwa Chemical Co., Ltd.) | 2.0 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Ion-exchanged water | balance |

The above composition was adjusted to pH 10.5 with an aqueous LiOH.solution before use.

### Example A-1

Above-prepared Treating liquid composition 1, Yellow Recording liquid composition 1 and Black Recording liquid composition 1 were charged into cartridges for treating liquid composition, for yellow recording liquid composition and for black recording liquid composition, respectively. The cartridges were attached to an image forming apparatus (ink-jet recording apparatus) having the configuration shown in FIG. 7, and printing tests were performed. The main components in the treating liquid composition and recording liquid compositions in Example A-1 are shown in Table 1. The cartridges have identical configuration and dimensions.

The recording medium used in the printing tests was a plain paper My Paper (trade name, available from NBS RICOH Co., Ltd.), except that a canvas for oil painting (fine, available from Sekaido Co., Ltd.) was used in a test on thin line reproducibility. An image was printed by ink-jet system in which the treating liquid composition was first applied to the paper, and each of the color recording liquid compositions were then applied thereto. The amounts of the treating liquid composition and recording liquid compositions on the paper in the tests were roughly adjusted as follows.

| | |
|---|---|
| Amount of recording liquid composition: | 11.0 g/m² |
| Amount of treating liquid composition: | 13.0 g/m² |

The feathering, color bleed, image density, color saturation, drying property, gloss, thin line reproducibility and image-fixing properties of the printed matter (record) were determined by the following processes according to the following criteria. The results are shown in Table 2.

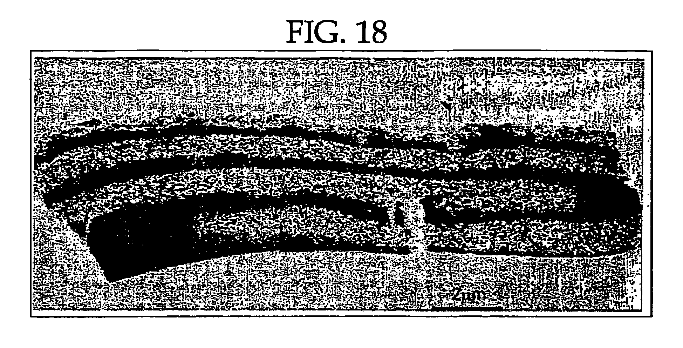

A black solid portion of the record was cut and its cross section was observed with a transmission electron microscope (TEM). The cross sectional transmission electron micrograph is shown in FIG.18, in which a striped pattern in density (dark and light colors) was observed. By further analyzing by an energy dispersive X-ray fluorescence spectrometry (EDX), it was verified that a high-density (dark) portion is a layer of aggregate of the fine particles and a low-density (light) portion is a layer of aggregate of the colorant.

### <Determination Processes>

### (1) Feathering:

The feathering was determined by comparing a black character portion of the print with a rating sample.
- Rating 5:: No bleed
- Rating 4:: Little bleed
- Rating 3:: Some bleed but trivial in practical use
- Rating 2:: Some large bleed
- Rating 1:: Large bleed

### (2) Color Bleed:

The color bleed was determined by printing the character "A" using the yellow recording liquid composition onto a black solid image, and comparing the interface (border) between the two colors with a rating sample.
- Rating 5:: No color mixture
- Rating 4:: Little color mixture
- Rating 3:: Some color mixture but trivial in practical use
- Rating 2:: Some large color mixture
- **Rating 1:**: **Large color mixture**

### (3) Image Density:

The optical density of the surface of a black solid portion of the image was measured, from which the image density was determined.

### (4) Color Saturation:

The L*a*b* of the surface of a yellow solid portion of the image was measured, from which the yellow color saturation was determined.

### (5) Drying Property:

A plain paper My Paper (trade name, available from NBS RICOH Co., Ltd.) was pressed to the print immediately after printing, and the transfer of the ink from a black solid portion of the printed image to the plain paper was observed.
- Good:: No ink transfer
- Failure:: Ink transfer

### (6) Gloss:

The gloss at 60 degrees of the print was measured with a glossimeter 4501 (trade name, available from BYK Gardner).

### (7) Thin Line Reproducibility:

A 0.5-mm line-and-space pattern was printed, and the thin line reproducibility was determined by obserbation according to the following criteria:
- Good:: Adjacent lines are separated
- Failure:: Adjacent lines are fused

### (8) Image-fixing Property:

The surface of the print was rubbed by the hand, and the image-fixing property was determined according to the following criteria:
- Good:: No color migration
- Failure:: Some color migration

### (9) Sectional TEM Observation:

A black solid portion of the print was cut and was observed with a transmission electron microscope (TEM). If the elements distribute unevenly, a striped pattern in density is observed, indicating that the colorant and the fine particles constitute different layers. The distribuition of the colorant and fine particles can be observed more reliably by mapping the elements with different colors.

### Examples A-2 through A-6

Printing tests according to Examples A-2 through A-6 were performed by the procedure of Example A-1, except for using the recording liquid compositions and treating liquid compositions as shown in Table 1 instead of Treating liquid composition 1, Black Recording liquid composition 1 and Yellow Recording liquid composition 1. The results are shown in Table 2.

### Example A-7

Printing tests according to Examples A-7 were performed by the procedure of Example A-1, except for using the recording liquid compositions and treating liquid composition as shown in Table 1 instead of Treating liquid composition 1, Black Recording liquid composition 1 and Yellow Recording liquid composition 1. The results are shown in Table 2.

### Example A-8

Printing tests according to Examples A-8 were performed by the procedure of Example A-1, except for using the recording liquid compositions and treating liquid composition as shown in Table 1 instead of Treating liquid composition 1, Black Recording liquid composition 1 and Yellow Recording liquid composition 1 and for using an ink-jet recording apparatus equipped with the ultraviolet irradiator shown in FIG 8 instead of the ink-jet recording apparatus shown in FIG. 7. The results are shown in Table 2.

### Comparative Examples A-1 through A-7

Printing tests According to Comparative Examples A-1 through A-7 were performed by the procedure of Example A-1, except for using the recording liquid compositions and treating liquid compositions as shown in Table 1 instead of Treating liquid composition 1, Black Recording liquid composition 1 and Yellow Recording liquid composition 1. The results are shown in Table 2.

**[Table 1]**

| | Treating liquid composition | Black Recording liquid composition | Yellow Recording liquid composition | Main Component of Treating liquid composition | Main Component of Black Recording liquid composition | Main Component of Yellow Recording liquid composition | Reference |
|---|---|---|---|---|---|---|---|
| Example A-1 | 1 | 1 | 1 | cationic silica | anionic pigment | anionic pigment | |
| Example A-2 | 2 | 1 | 1 | titanium dioxide | anionic pigment | anionic pigment | |
| Example A-3 | 3 | 1 | 1 | alumina | anionic pigment | anionic pigment | |
| Example A-4 | 1 | 2 | 2 | cationic silica | anionic dye | anionic dye | |
| Example A-5 | 4 | 3 | 3 | anionic silica | cationic dispersant + pigment | cationic dispersant + pigment | |
| Example | 4 | 4 | 4 | anionic silica | cationic dye | cationic dye | |
| Example A-7 | 10 | 2 | 2 | anionic silica + NaCl | anionic dye | anionic dye | |
| Example A-8 | 1 | 8 | 8 | cationic silica | anionic pigment + phobo-induced acid generator | anionic pigment + photo-induced acid generator | |
| Comp. Ex. A-1 | none | 1 | 1 | - | anionic pigment | anionic pigment | |
| Comp. Ex.A-2 | 1 | 3 | 3 | cationic silica | cationic dispersant + pigment | cationic dispersant + pigment. | |
| Comp. Ex. A-3 | 5 | 2 | 2 | quaternary ammonium salt | anionic dye | anionic dye | JP-B No. |
| Comp. Ex. A-4 | 6 | 2 | 2 | polyallylamine | anionic dye | anionic, dye | JP-B No. 2667401 |
| Comp. Ex. A-5 | 7 | 5 | 5 | alumina | anionic pigment | anionic pigment | JP-A No. 2001-199149 |
| Comp. Ex. A-6 | 8 | 6 | 6 | alumina | anionic pigment | anionic pigment | JP-A No. 2002-201385 |
| Comp. Ex.A-7 | 9 | 7 | 7 | magnesium nitrate | anionic pigment + resin | anionic pigment + emulsion | JP-A No. 2001-030616 |

**[Table 2]**

| | Feathering | Color bleed | Image density | Color saturation | Drying property | Gloss | Thin line reproducibility | Image-fixing property | Sectional TEM observation |
|---|---|---|---|---|---|---|---|---|---|
| Example A-1 | 5 | 5 | 1.73 | 104.7 | Good | 3.2 | Good | Good | striped pattern |
| Example A-2 | 5 | 5 | 1.71 | 101.6 | Good | 3.1 | Good | Good | striped pattern |
| Example A-3 | 5 | 5 | 1.69 | 102.3 | Good | 3.1 | Good | Good | striped pattern |
| Example A-4 | 5 | 4 | 1.64 | 95.3 | Good | 2.9 | Good | Good | striped pattern |
| Example A-5 | 5 | 5 | 1.73 | 1021 | Good | 3.1 | Good | Good | striped pattern |
| Example A-6 | 5 | 4 | 1.65 | 95.9 | Good | 2.9 | Good | Good | striped pattern |
| Example A-7 | 5 | 4 | 1.61 | 96.3 | Good | 3.1 | Good | Good | striped pattern |
| Example A-8 | 5 | 5 | 1.69 | 100.3 | Good | 3.1 | Good | Good | striped pattern |
| Comp. Ex. A-1 | 1 | 1 | 1.19 | 90.3 | Good | 1.4 | Failure | Failure | no striped pattern |
| Comp. Ex. A-2 | 1 | 1 | 1.11 | 85.6 | Failure | 1.4 | Failure | Failure | no striped pattern |
| Comp. Ex. A-3 | 2 | 2 | 1.28 | 89.3 | Failure | 1.5 | Failure | Failure | no striped pattern |
| Comp. Ex. A-4 | 2 | 2 | 1.26 | 87.4 | Failure | 1.4 | Failure | Failure | no striped pattern |
| Comp. Ex. A-5 | 4 | 4 | 1.59 | 89.7 | Failure | 2.1 | Failure | Failure | no striped pattern |
| Comp. Ex. A-6 | 4 | 4 | 1.58 | 91.2 | Failure | 1.9 | Failure | Failure | no striped pattern |
| Comp. Ex. A-7 | 4 | 4 | 1.48 | 88.4 | Failure | 1.8 | Failure | Failure | no striped pattern |

The ink sets of Examples A-1 through A-8 using the treating liquid composition and recording liquid compositions according to the present invention prevent bleeding defects such as feathering and color bleed and have a satisfactory image density and color saturation. They show good drying property without ink transfer and have very high gloss. They can reproduce thin lines separately with smooth appearance without jaggies. They show no color migration on the resulting prints when rubbed by the hand and have good image-fixing properties.

The prints according to A-1 through A-8 show a striped pattern in density upon observation of a cross section with a transmission electron microscope (TEM) as shown in Example A-1.

In contrast, the ink sets according to Comparative Examples A-1 through A-7 have inferior properties to those of Examples A-1 through A-8 and show no striped pattern upon observation of a cross section with a transmission electron microscope (TEM).

### Example B

Treating liquid compositions and recording liquid compositions for constituting ink sets according to the present invention, and those according to comparative examples each having the following formulations were prepared. All parts in the formulations are by weight unless otherwise specified and the total amount of each composition is 100 parts by weight.

### <Treating liquid composition 1>

| | |
|---|---|
| Cationic silica (SNOW TEX AK; Nissan Chemical Industries, Ltd.) | 15.0 parts |
| 2-Pyrrolidone | 12.5 parts |
| Diethylene glycol | 12.5 parts |
| Octanediol | 1.0 part |
| Cationic surfactant (Cation G50; Sanyo Chemical Industries, Ltd.) | 2.0 parts |
| Benzotriazole | 1.0 part |
| Antiseptic-antimold agent (PROXEL LV(s); Avecia Ltd.) | 0.2 part |
| Antifoaming agent (KM-72F; Shin-Etsu Chemical Co., Ltd.) | 0.1 part |
| Water | balance |

The composition was adjusted to pH 4.3 with acetic acid before use.

### <Black Recording liquid composition 1 (anionic pigment containing recording liquid composition)>

| | |
|---|---|
| Carbon black (Cabojet 300; Cabot Corporation, GA) | 10 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Antifoaming agent (KM-72F; Shin-Etsu Chemical Co., Ltd.) | 0.1 part |
| Ion-exchanged water | balance |

The above composition was adjusted to pH 10.5 with an aqueous LiOH.solution before use.

### <Yellow Recording liquid composition 1 (anionic pigment-containing recording liquid composition)>

| | |
|---|---|
| Resin-coated yellow pigment dispersion (solid content of yellow pigment 10 parts) | 50 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Antifoaming agent (KM-72F; Shin-Etsu Chemical Co., Ltd.) | 0.1 part |
| Ion-exchanged water | balance |

The above composition was adjusted to pH 10.5 with an aqueous LiOH solution before use.

The resin-coated yellow pigment dispersion used in the preparation of Yellow Recording liquid composition 1 (anionic pigment-containing recording liquid composition) was prepared in the following manner.

### Preparation Example of Resin-coated Yellow Pigment Dispersion

### (1) Preparation of Polymer Solution

The inside atmosphere of a 1-liter flask equipped with a mechanical stirrer, thermometer, nitrogen gas feed tube, condenser and dropping funnel was thoroughly replaced with nitrogen gas, and 11.2 g of styrene, 2.8 g of acrylic acid,12.0 g of lauryl methacrylate, 4.0 g of polyethylene glycol methacrylate, 4.0 g of a styrene macromonomer AS-6 (trade name, available from Toagosei Co., Ltd.) and 0.4 g of mercaptoethanol were placed therein, and the mixture was raised in temperature to 65°C.

Next, a mixture of 100.8 g of styrene, 25.2 g of acrylic acid,108.0 g of lauryl methacrylate, 36.0 g of polyethylene glycol methacrylate, 60.0 g of hydroxyethyl methacrylate, 36.0 g of a styrene macromonomer AS-6 (trade name, available from Toagosei Co., Ltd.), 3.6 g of mercaptoethanol, 2.4 g of azobisdimethylvaleronitrile and 18 g of methyl ethyl ketone was added dropwise to the above mixture in the flask over 2.5 hours.

After the completion of addition, a mixture of 0.8 g of azobisdimethylvaleronitrile and 18 g of methyl ethyl ketone was added dropwise to the mixture in the flask over 0.5 hour. After aging at 65°C for 1 hour, 0.8 g of azobisdimethylvaleronitrile was further added, followed by aging for further 1 hour. After the completion of the reaction, 364 g of methyl ethyl ketone was added, to yield 800 g of a polymer solution having a concentration of 50%.

Part of the polymer solution was dried and was analyzed by gel permeation chromatography (reference: polystyrene, solvent: tetrahydrofuran), to find that the polymer had a weight-average molecular weight of 15000.

### (2) Preparation of Resin-coated Yellow Pigment Dispersion

The above-prepared polymer solution (22.2 g) was thoroughly mixed with 26.0 g of yellow pigment Symuler Fast Yellow 4181 (trade name, available from Dainippon Ink & Chemicals, Inc.), 13.6 g of a 1 mol/liter aqueous lithium hydroxide solution, 20 g of methyl ethyl ketone and 30 g of ion-exchanged water, and the mixture was kneaded in a three-roll mill NR-84A (trade name, available from Noritake Co., Ltd.) twenty times. The paste was thorougly mixed with 200 g of ion-exchanged water, from which methyl ethyl ketone and water were distilled off using an evaporator, to yield 160 g of a resin-coated yellow pigment dispersion having a solid content of 20.0% by weight.

Using the above-prepared yellow pigment dispersion, Yellow Recording liquid composition 1 having the above formulation was prepared.

### Example B-1

Above-prepared Treating liquid composition 1, Yellow Recording liquid composition 1 and Black Recording liquid composition 1 were charged into cartridges for treating liquid composition, for yellow recording liquid composition and for black recording compisiton, respectively. The cartridges were attached to an image forming apparatus (ink-jet recording apparatus) having the configuration shown in FIG. 7, and printing tests were performed. The main components in the treating liquid composition and recording liquid compositions in Example B-1 are shown in Table 5. The cartridges have identical configuration and dimensions.

The recording medium used in the printing tests was a plain paper My Paper (trade name, available from NBS RICOH Co., Ltd.), except that a canvas for oil painting (fine, available from Sekaido Co., Ltd.) was used in a test on thin line reproducibility. An image was printed by ink-jet system in which the treating liquid composition was first applied to the paper, and each of the color recording liquid compositions were then applied thereto. The amounts of the recording liquid compositions and treating liquid composition in printing were adjusted to the amounts shown in Table 5 by controlling the driving waveform and voltage applied to the ink-jet head.

The feathering, color bleed, image density, color saturation, drying property, gloss, thin line reproducibility and image-fixing properties of the printed matter (record) were determined by the following processes according to the following criteria. The results are shown in Table 5.

A black solid portion of the record according to Example B-1 was cut and its cross section was observed with a transmission electron microscope (TEM). FIGS. 13 and 14 are each a sectional transmission electron micrograph of a record formed by one-pass printing in which the ink-jet recording head is scanned once, and by multi-pass printing in which the ink-jet recording head is scanned plural times, respectively. These micrographs show a striped pattern in density. Further analysis by energy dispersive X-ray fluorescence spectrometry (EDX) shows that a high-density portion is a layer of the treating liquid composition (a layer of aggregate of the fine particles) and a low-density portion is a layer of the recording liquid composition (a layer of aggregate of the colorant).

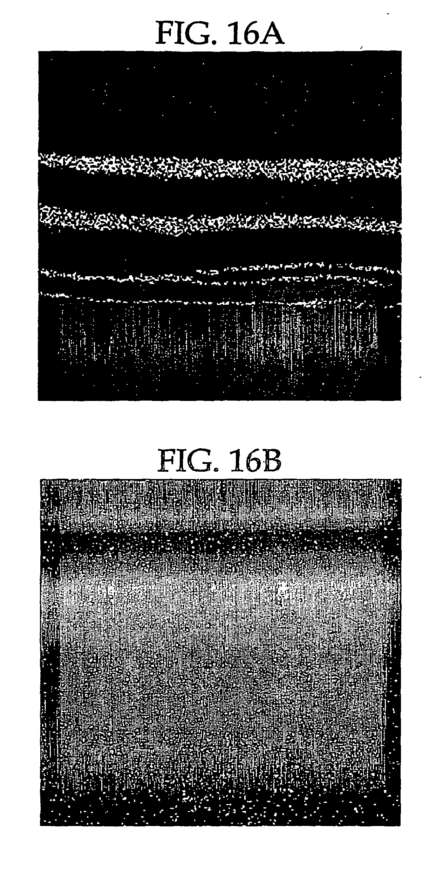

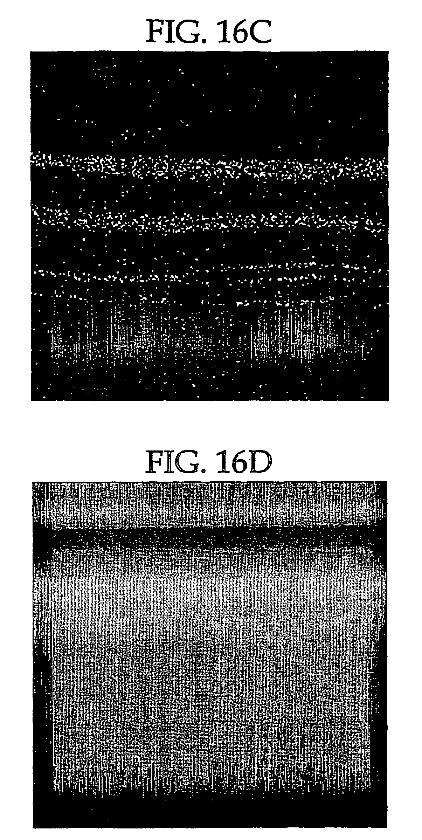

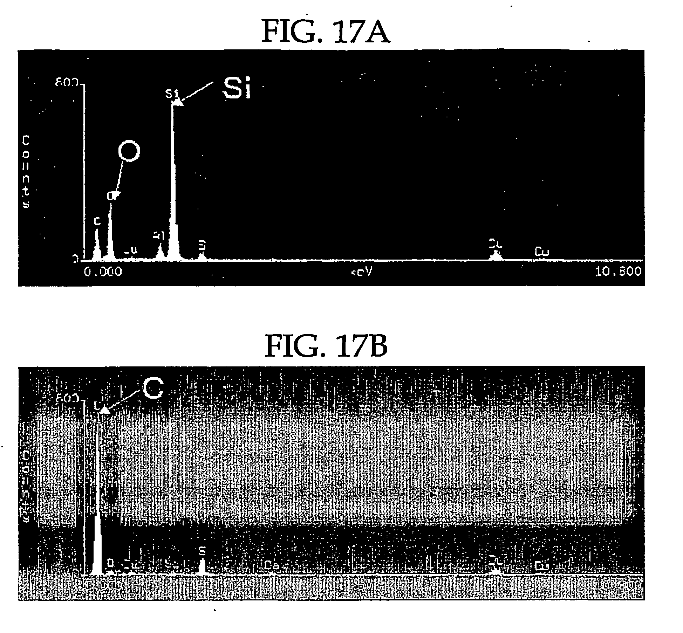

In addition, a high-density (dark-colored) portion 61 and a low-density (light-colored) portion 62 in the scanning-transmission electron micrograph of FIG. 15 were analyzed by energy dispersive X-ray fluorescence spectrometry (EDX) to form a mapping of elements such as Si, S, O, C, Al, Cu and Ca (FIGS. 16A, 16B, 16C and 16D) and its intensity spectrum (FIGS.17A and 17B). Specifically, FIGS. 16A, 16B, 16C and 16D are elemental mapping images of FIG. 15 micrograph in terms of silicon, sulfur, oxygen, and carbon, respectively. FIG.17A is the intensity spectrum of high-density portion 61, and FIG.17B is the intensity spectrum of low-density portion 62. Based on these, the following analytical results were obtained, verifying that the high-density portion is the layer of the treating liquid composition (layer of aggregate of the fine particles) and the low-density portion is the layer of the recording liquid composition (layer of aggregate of the colorant).

**[Table 3]**

| EDX Analysis (including O and C) | | | | |
|---|---|---|---|---|
| Measuring point | Si (%) | S (%) | O (%) | C (%) |
| 1 | 14.6 | 0.7 | 18.0 | 66.7 |
| 2 | 0.1 | 0.5 | 0.4 | 99.0 |

**[Table 4]**

| EDX Analysis (excluding O and C) | | |
|---|---|---|
| Measuring point | Si(%) | S (%) |
| 1 | 95.4 | 4.6 |
| 2 | 8.1 | 91.9 |

### <Determination Processes>

### (1) Feathering:

The feathering was determined by comparing a black character portion of the print with a rating sample.
- Rating 5:: No bleed
- Rating 4:: Little bleed
- Rating 3:: Some bleed but trivial in practical use
- Rating 2:: Some large bleed
- Rating 1:: Large bleed

### (2) Color Bleed:

The color bleed was determined by printing the character "A" using the yellow recording liquid composition onto a black solid image, and comparing the interface between the two colors with a rating sample.
- Rating 5:: No color mixture
- Rating 4:: Little color mixture
- Rating 3:: Some color mixture but trivial in practical use
- Rating 2:: Some large color mixture
- Rating 1:: Large color mixture

### (3) Image Density:

The optical density of the surface of a black solid portion of the image was measured, from which the image density was determined.

### (4) Color Saturation:

The L*a*b* of the surface of a yellow solid portion of the image was measured, from which the yellow color saturation was determined.

### (5) Drying Property:

A plain paper My Paper (trade name, available from NBS RICOH Co., Ltd.) was pressed to the print immediately after printing, and the transfer of the ink from a black solid portion of the printed image to the plain paper was observed.
- Good:: No ink transfer
- Failure:: Ink transfer

### (6) Gloss:

The gloss at 60 degrees of the print was measured with a glossimeter 4501 (trade name, available from BYK Gardner).

### (7) Thin Line Reproducibility:

A 0.5-mm line-and-space pattern was printed on a canvas for oil painting (fine, available from Sekaido Co., Ltd.), and the thin line reproducibility was determined by obserbation according to the following criteria:
- Good:: Adjacent lines are separated
- Failure:: Adjacent lines are fused

### (8) Image-fixing Property:

The surface of the print was rubbed by fingers 24 hours after printing, and the image-fixing property was determined depending on whether the colorant was transferred or migrated to the fingers.
- Good:: No color migration
- Failure:: Some color migration

### (9) Sectional TEM Observation:

A black solid portion of the print was cut and was observed with a transmission electron microscope (TEM). If the elements distribute unevenly, a striped pattern in density is observed, indicating that the colorant and the fine particles constitute different layers. The distribuition of the colorant and fine particles can be observed more reliably by mapping the elements with different colors.

### Examples B-2 through B-14

Printing tests according to Examples B-2 through B-14 were performed by the procedure of Example B-1, except for using the recording liquid compositions and treating liquid composition as shown in Table 5 instead of Treating liquid composition 1, Black Recording liquid composition 1 and Yellow Recording liquid composition 1. The results are shown in Table 5.

### Comparative Example B-1

Printing tests according to Comparative Example B-1 were performed by the procedure of Example B-1, except for using the recording liquid compositions and treating liquid composition as shown in Table 5 instead of Treating liquid composition 1, Black Recording liquid composition 1 and Yellow Recording liquid composition 1. The results are shown in Table 5.

**[Table 5-1]**

| | Treating liquid composition | | Black Recording liquid composition | | Yellow Recording liquid composition | | Sectional TEM observation | Thickness of layer of fine particles (µm) | | Thickness of layer of colorant (black) (µm) | |
|---|---|---|---|---|---|---|---|---|---|---|---|
| | No. | Amount (g/m²) | No. | Amount (g/m²) | No. | Amount (g/m²) | | Minimum | Maximum | Minimum | Maximum |
| Example B-1 | 1 | 0.51 | 1 | 5.86 | 1 | 6.12 | striped pattern | 0.02 | 0.06 | 0.54 | 0.64 |
| Example B-2 | 1 | 1.03 | 1 | 5.86 | 1 | 6.12 | striped pattern | 0.12 | 0.16 | 0.51 | 0.63 |
| Example B-3 | 1 | 10.02 | 1 | 5.86 | 1 | 6.12 | striped pattern | 1.23 | 1.65 | 0.55 | 0.70 |
| Example B-4 | 1 | 20.19 | 1 | 5.86 | 1 | 6.12 | striped pattern | 2.85 | 3.13 | 0.50 | 0.62 |
| Example B-5 | 1 | 50.60 | 1 | 5.86 | 1 | 6.12 | striped pattern | 7.23 | 7.71 | 0.54 | 0.63 |
| Example B-6 | 1 | 6.45 | 1 | 0.53 | 1 | 0.51 | striped pattern | 0.92 | 0.96 | 0.02 | 0.09 |
| Example B-7 | 1 | 6.45 | 1 | 1.09 | 1 | 1.05 | striped pattern | 0.93 | 1.01 | 0.12 | 0.16 |
| Example B-8 | 1 | 6.45 | 1 | 10.16 | 1 | 10.12 | striped pattern | 0.91 | 0.99 | 0.92 | 1.05 |
| Example B-9 | 1 | 6.45 | 1 | 20.39 | 1 | 20.98 | striped pattern | 0.93 | 1.02 | 1.85 | 2.13 |
| Example B-10 | 1 | 6.45 | 1 | 51.02 | 1 | 50.03 | striped pattern | 0.96 | 0.99 | 4.75 | 5.26 |
| Example B-11 | 1 | 0.11 | 1 | 5.86 | 1 | 6.12 | striped pattern | 0.006 | 0.008 | 0.53 | 0.62 |
| Example B-12 | 1 | 81.26 | 1 | 5.86 | 1 | 6.12 | striped pattern | 10.23 | 12.45 | 0.46 | 0.58 |
| Example B-13 | 1 | 6.45 | 1 | 0.09 | 1 | 0.12 | striped pattern | 0.91 | 0.99 | 0.005 | 0.008 |
| Example B-14 | 1 | 6.45 | 1 | 100.99 | 1 | 100.30 | striped pattern | 0.93 | 0.95 | 10.16 | 11.69 |
| Comp.Ex.B-1 | none | - | 1 | 5.86 | 1 | 6.12 | no striped pattern | - | - | - | - |

**[Table 5-2]**

| | Feathering | Color bleed | Image density (black) | Color saturation (yellow) | Drying property (immediately after printing) | Image-fixing property (24 hr after printing) | Gloss property | Thin line reproducibility |
|---|---|---|---|---|---|---|---|---|
| Example B-1 | 4 | 4 | 1.23 | 85.3 | Good | Good | 2.1 | Good |
| Example B-2 | 5 | 5 | 1.31 | 89.6 | Good | Good | 2.8 | Good |
| ExampleB-3 | 5 | 5 | 1.39 | 90.9 | Good | Good | 3.1 | Good |
| Example B-4 | 5 | 5 | 1.46 | 93.5 | Good | Good | 3.3 | Good |
| Example B-5 | 4 | 4 | 1.49 | 94.6 | Good | Good | 3.4 | Good |
| Example B-6 | 5 | 5 | 0.85 | 58.1 | Good | Good | 2.3 | Good |
| Example B-7 | 5 | 5 | 0.95 | 76.1 | Good | Good | 2.6 | Good |
| Example B-8 | 5 | 5 | 1.49 | 94.1 | Good | Good | 2.7 | Good |
| Example B-9 | 5 | 5 | 1.76 | 109.6 | Good | Good | 2.9 | Good |
| Example B-10 | 4 | 4 | 1.86 | 109.6 | Good | Good | 3.0 | Good |
| Example B-11 | 2 | 2 | 1.01 | 78.3 | Failure | Failure | 1.5 | Failure |
| Example B-12 | 2 | 2 | 1.53 | 95.3 | Good | Good | 3.5 | Failure |
| Example B-13 | 5 | 5 | 0.12 | 42.3 | Good | Good | 1.8 | Good |
| Example B-14 | 1 | 1 | 1.95 | 115.1 | Failure | Failure | 3.1 | Failure |
| Comp.Ex.B-1 | 1 | 1 | 0.95 | 75.3 | Failure | Failure | 1.4 | Failure |

The ink sets of Examples B-1 through B-14 using the treating liquid composition and recording liquid compositions according to the present invention prevent bleeding defects such as feathering and color bleed and have a satisfactory image density. They show good gloss. They can reproduce thin lines separately with smooth appearance without jaggies.

The prints according to B-1 through B-14 show a striped pattern in density upon observation of a cross section with a transmission electron microscope (TEM) as shown in Example B-1.

In contrast, the ink sets according to Comparative Example B-1 has inferior properties to those of Examples B-1 through B-14 and show no striped pattern upon observation of a cross section with a transmission electron microscope (TEM).

### Example C

Treating liquid compositions and recording liquid compositions for constituting ink sets according to the present invention, each having the following formulations were prepared. All parts in the formulations are by weight unless otherwise specified and the total amount of each composition is 100 parts by weight.

### <Preparation Example 1: Treating liquid composition 1>

The following components were mixed and were filtered through a 0.8-µm Teflon (registered trademark) filter to yield Treating liquid composition 1 of Preparation Example.

| | |
|---|---|
| Cationic silica (average particle diameter: 5.2nm) | 15.0 parts |
| 2-Pyrrolidone | 12.5 parts |
| Diethylene glycol | 12.5 parts |
| Octanediol | 1.0 part |
| Cationic surfactant (Cation G50; Sanyo Chemical Industries, Ltd.) | 2.0 parts |
| Benzotriazole | 1.0 part |
| Antiseptic-antimold agent (PROXEL LV(s); Avecia Ltd.) | 0.2 part |
| Antifoaming agent (KM-72F; Shin Etsu Chemical Co., Ltd.) | 0.1 part |
| Water | balance |

The above composition was adjusted to pH 4.3 with acetic acid before use.

The cationic silica used in Treating liquid composition 1 was prepared in the following manner.

### Preparation Example of Cationic Colloidal Silica

Fumed silica (20.0 g) having an average particle diameter of 5.1 nm was placed in a mixer, and a solution of 4.0 g of γ-aminopropyltriethoxysilane (available from Nippon Unicar Co., Ltd.) in 20.0 g of ethanol was added dropwise to the silica stirred at 8000 rpm using a dropping pippet. After the completion of addition, the mixture was stirred for further 3 minutes, and the dispersion was transported into a tray and was dried in a drier at 110°C in an atmosphere of nitrogen gas for 1 hour to remove ethanol and thereby yielded 24.0 g of the cationic silica having an average particle diameter of 5.2 nm.

### <Preparation Examples 2 to 6: Treating liquid compositions 2 to 6>

Treating liquid compositions 2 to 6 were prepared by the procedure of Preparation Example 1, except for using cationic silica products having the following average particle diameters, respectively, instead of the cationic silica having an average particle diameter of 5.2 nm. These cationic silica products were prepared in the same manner as in the cationic silica having an average particle diameter of 5.2 nm.

| | |
|---|---|
| Treating liquid composition 2: | 10.2 nm |
| Treating liquid composition 3: | 32.6 nm |
| Treating liquid composition 4: | 101.1 nm |
| Treating liquid composition 5: | 199.1 nm |
| Treating liquid composition 6: | 252.6 nm . |

### <Preparation Example 1: Black Recording liquid composition 1>

Black Recording liquid composition according to Preparation Example 1 was prepared by mixing the following components and filtering the mixture through a 0.8-µm Teflon (registered trademark) filter.

| | |
|---|---|
| Carbon black (average particle diameter: 256.1 nm) | 10.0 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Antifoaming agent (KM-72F; Shin-Etsu Chemical Co., Ltd.) | 0.1 part |
| Ion-exchanged water | balance |

The above composition was adjusted to pH 10.5 with an aqueous LiOH solution before use.

### <Preparation Example 2: Black Recording liquid composition 2>

Black Recording liquid composition 2 according to Preparation Example 2 was prepared by pulverizing and mixing 100 g of Black Recording liquid composition 1 of Preparation Example 1 and 100 g of zirconia beads with rotation in a pot of a ball mill for 72 hours. Black Recording liquid composition 2 had an average particle diameter of 4.8 nm.

### <Preparation Example 3: Black Recording liquid composition 3>

Black Recording liquid composition 3 according to Preparation Example 3 was prepared by pulverizing and mixing 100 g of Black Recording liquid composition 1 of Preparation Example 1 and 100 g of zirconia beads with rotation in a pot of a ball mill for 48 hours. Black Recording liquid composition 3 had an average particle diameter of 12.6 nm.

### <Preparation Example 4: Black Recording liquid composition 4>

Black Recording liquid composition 4 according to Preparation Example 4 was prepared by pulverizing and mixing 100 g of Black Recording liquid composition 1 of Preparation Example 1 and 100 g of zirconia beads with rotation in a pot of a ball mill for 24 hours. Black Recording liquid composition 4 had an average particle diameter of 51.9 nm.

### <Preparation Example 5: Black Recording liquid composition 5>

Black Recording liquid composition 5 according to Preparation Example 5 was prepared by pulverizing and mixing 100 g of Black Recording liquid composition 1 of Preparation Example 1 and 100 g of zirconia beads with rotation in a pot of a ball mill for 12 hours. Black Recording liquid composition 5 had an average particle diameter of 110.2 nm.

### <Preparation Example 6: Black Recording liquid composition 6>

Black Recording liquid composition 6 according to Preparation Example 6 was prepared by pulverizing and mixing 100 g of Black Recording liquid composition 1 of Preparation Example 1 and 100 g of zirconia beads with rotation in a pot of a ball mill for 5 hours. Black Recording liquid composition 6 had an average particle diameter of 195.3 nm.

### <Preparation Example 1: Yellow Recording liquid composition 1>

Yellow Recording liquid composition 1 according to Preparation Example 1 was prepared by mixing the following components and filtering the mixture through a 0.8-µm Teflon (registered trademark) filter.

| | |
|---|---|
| C.I. Pigment Yellow 74 (average particle diameter: 260.9 nm) | 10.0 parts |
| 1,3-Butanediol | 7.5 parts |
| Glycerol | 2.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Ion-exchanged waster | balance |

The above composition was adjusted to pH 10.5 with an aqueous LiOH solution before use.

### <Preparation Example 2: Yellow Recording liquid composition 2>

Yellow Recording liquid composition 2 according to Preparation Example 2 was prepared by pulverizing and mixing 100 g of Yellow Recording liquid composition 1 of Preparation Example 1 and 100 g of zirconia beads with rotation in a pot of a ball mill for 48 hours. Yellow Recording liquid composition 2 had an average particle diameter of 6.3 nm.

### <Preparation Example 3: Yellow Recording liquid composition 3>

Yellow Recording liquid composition 3 according to Preparation Example 3 was prepared by pulverizing and mixing 100 g of Yellow Recording liquid composition 1 of Preparation Example 1 and 100 g of zirconia beads with rotation in a pot of a ball mill for 24 hours. Yellow Recording liquid composition 2 had an average particle diameter of 11.9 nm.

### <Preparation Example 4: Yellow Recording liquid composition 4>

Yellow Recording liquid composition 4 according to Preparation Example 4 was prepared by pulverizing and mixing 100 g of Yellow Recording liquid composition 1 of Preparation Example 1 and 100 g of zirconia beads with rotation in a pot of a ball mill for 15 hours. Yellow Recording liquid composition 2 had an average particle diameter of 46.2 nm.

### <Preparation Example 5: Yellow Recording liquid composition 5>

Yellow Recording liquid composition 5 according to Preparation Example 5 was prepared by pulverizing and mixing 100 g of Yellow Recording liquid composition 1 of Preparation Example 1 and 100 g of zirconia beads with rotation in a pot of a ball mill for 8 hours. Yellow Recording liquid composition 2 had an average particle diameter of 79.0 nm.

### <Preparation Example 6: Yellow Recording liquid composition 6>

Yellow Recording liquid composition 6 according to Preparation Example 6 was prepared by pulverizing and mixing 100 g of Yellow Recording liquid composition 1 of Preparation Example 1 and 100 g of zirconia beads with rotation in a pot of a ball mill for 4 hours. Yellow Recording liquid composition 2 had an average particle diameter of 194.3 nm.

### Example C-1

Above-prepared Treating liquid composition 2, Yellow Recording liquid composition 5 and Black Recording liquid composition 5 were charged into cartridges for treating liquid composition, for yellow recording liquid composition and for black recording liquid composition, respectively. The cartridges were attached to an image forming apparatus (ink-jet recording apparatus) having the configuration shown in FIG. 7, and printing tests were performed. The main components in the treating liquid composition and recording liquid compositions in Example C-1 are shown in Table 8. The cartridges have identical configuration and dimensions.

The recording medium used in the printing tests was a plain paper My Paper (trade name, available from NBS RICOH Co., Ltd.), except that a canvas for oil painting (fine, available from Sekaido Co., Ltd.) was used in a test on thin line reproducibility. An image was printed by ink-jet system in which the treating liquid composition was first applied to the paper, and each of the color recording liquid compositions were then applied thereto. The amounts of the recording liquid compositions and treating liquid composition in printing were roughly adjusted to the following amounts by controlling the driving waveform and voltage applied ot the ink-jet head.

| | |
|---|---|
| Amount of recording liquid composition: | 11.0 g/m² |
| Amount of treating liquid composition: | 13.0 g/m² |

The feathering, color bleed, image density, color saturation, drying property, gloss, thin line reproducibility and image-fixing properties of the printed matter (record) were determined by the following processes according to the following criteria. The results are shown in Table 8.

A black solid portion of the record according to Example C-1 was cut and its cross section was observed with a transmission electron microscope (TEM). The observation on sectional transmission electron micrographs of a record formed by one-pass printing in which the ink-jet recording head is scanned once, and by multi-pass printing in which the ink-jet recording head is scanned plural times, respectively, shows a striped pattern in density as in Example B-1. Further analysis by energy dispersive X-ray fluorescence spectrometry (EDX) with mapping of elements such as Si, S, O, C, Al, Cu and Ca as mentioned below verifies that the high-density portion is a layer of the treating liquid composition (a layer of aggregate of the fine particles) and the low-density portion is a layer of the recording liquid composition (a layer of aggregate of the colorant), as in Example B-1.

**[Table 6]**

| EDX Analysis (including O and C) | | | | |
|---|---|---|---|---|
| Measuring point | Si (%) | S (%) | O (%) | C (%) |
| 1 | 14.6 | 0.7 | 18.0 | 66.7 |
| 2 | 0.1 | 0.5 | 0.4 | 99.0 |

**[Table 7]**

| EDX Analysis (excluding O and C) | | |
|---|---|---|
| Measuring point | Si (%) | S (%) |
| 1 | 95.4 | 4.6 |
| 2 | 8.1 | 91.9 |

### <Determination Processes>

### (1) Feathering:

The feathering was determined by comparing a black character portion of the print with a rating sample.
- Rating 5:: No bleed
- Rating 4:: Little bleed
- Rating 3:: Some bleed but trivial in practical use
- Rating 2:: Some large bleed
- Rating 1:: Large bleed

### (2) Color Bleed:

The color bleed was determined by printing the character "A" using the yellow recording liquid composition onto a black solid image, and comparing the interface between the two colors with a rating sample.
- Rating 5:: No color mixture
- Rating 4:: Little color mixture
- Rating 3:: Some color mixture but trivial in practical use
- Rating 2:: Some large color mixture
- Rating 1:: Large color mixture

### (3) Image Density:

The optical density of the surface of a black solid portion of the image was measured, from which the image density was determined.

### (4) Color Saturation:

The L*a*b* of the surface of a yellow solid portion of the image was measured, from which the yellow color saturation was determined.

### (5) Drying Property:

A plain paper My Paper (trade name, available from NBS RICOH Co., Ltd.) was pressed to the print immediately after printing, and the transfer of the ink from a black solid portion of the printed image to the plain paper was observed.
- Good:: No ink transfer
- Failure:: Ink transfer

### (6) Gloss:

The gloss at 60 degrees of the print was measured with a glossimeter 4501 (trade name, available from BYK Gardner).

### (7) Thin Line Reproducibility:

A 0.5-mm line-and-space pattern was printed, and the thin line reproducibility was determined by obserbation according to the following criteria:
- Good:: Adjacent lines are separated
- Failure:: Adjacent lines are fused

### (8) Image-fixing Property:

The surface of the print was rubbed by fingers 24 hours after printing, and the image-fixing property was determined depending on whether or not the colorant migrated to the fingers.
- Good:: No color migration
- Failure:: Some color migration

### (9) Sectional TEM Observation:

A black solid portion of the print was cut and was observed with a transmission electron microscope (TEM). If the elements distribute unevenly, a striped pattern in density is observed, indicating that the colorant and the fine particles constitute different layers, respectively. The distribuition of the colorant and fine particles can be observed more reliably by mapping the elements with different colors.

### (10) Discharge Stability:

The print after 100,000 copies output was observed, and the discharge stability was determined based on whether or not an image defect was observed in a black character image.
- Good:: No image defect (no white streak)
- Failure:: Some image defect (white streak)

### Examples C-2 through C-11

Printing tests according to Examples C-2 through C-11 were performed by the procedure of Example C-1, except for using the recording liquid compositions and treating liquid compositions shown in Table 8 instead of Treating liquid composition 2, Black Recording liquid composition 5 and Yellow Recording liquid composition 5. The results are shown in Table 8.

**[Table 8-1]**

| | Treating liquid composition | | Black Recording liquid composition | | Yellow Recording liquid composition | | Sectional TEM observation | Feathering |
|---|---|---|---|---|---|---|---|---|
| | No. | Average particle diameter (nm) | No. | Average particle diameter (nm) | No. | Average particle diameter (nm) | | |
| Example C-1 | 2 | 10.2 | 5 | 110.2 | 5 | 79.0 | striped pattern | 4 |
| Example C-2 | 3 | 32.6 | 5 | 110.2 | 5 | 79.0 | striped pattern | 5 |
| Example C-3 | 4 | 101.1 | 5 | 110.2 | 5 | 79.0 | striped pattern | 5 |
| Example C-4 | 5 | 199.1 | 5 | 110.2 | 5 | 79.0 | striped pattern | 5 |
| Example C-5 | 4 | 32.6 | 3 | 12.6 | 3 | 11.9 | striped pattern | 4 |
| Example C-6 | 4 | 32.6 | 4 | 51.9 | 4 | 46.2 | striped pattern | 5 |
| Example C-7 | 4 | 32.6 | 6 | 195.3 | 6 | 194.3 | striped pattern | 5 |
| Example C-8 | 1 | 5.2 | 5 | 110.2 | 5 | 79.0 | striped pattern | 2 |
| Example C-9 | 6 | 252.6 | 5 | 110.2 | 5 | 79.0 | striped pattern | not determined due to discharge failure |
| Example C-10 | 4 | 32.6 | 2 | 4.8 | 2 | 6.3 | striped pattern | 2 |
| Example C-11 | 4 | 32.6 | 1 | 256.1 | 1 | 260.9 | striped pattern | not determined due to discharge failure |

**[Table 8-2]**

| | Color bleed | Image density (black) | Color saturation (yellow) | Drying property (immediately after printing) | Image-fixing property (24 hr after printing) | Gloss property | Thin line reproducibility | Discharge stability |
|---|---|---|---|---|---|---|---|---|
| Example C-1 | 4 | 1.72 | 102.6 | Good | Good | 3.0 | Good | Good |
| Example C-2 | 5 | 1.74 | 104.2 | Good | Good | 3.2 | Good | Good |
| Example C-3 | 5 | 1.75 | 105.2 | Good | Good | 3.2 | Good | Good |
| Example C-4 | 5 | 1.79 | 107.1 | Good | Good | 3.2 | Good | Good |
| Example C-5 | 4 | 1.72 | 107.5 | Good | Good | 3.0 | Good | Good |
| Example C-6 | 5 | 1.72 | 106.5 | Good | Good | 3.1 | Good | Good |
| Example C-7 | 5 | 1.73 | 104.9 | Good | Good | 3.2 | Good | Good |
| Example C-8 | 2 | 1.65 | 99.1 | Failure | Failure | 2.8 | Failure | Good |
| Example C-9 | not determined due to discharge failure | | | | | | | Failure |
| Example C-10 | 2 | 1.73 | 108.1 | Failure | Failure | 2.5 | Failure | Good |
| Example C-11 | not determined due to discharge failure | | | | | | | Failure |

The ink sets of Examples C-1 through C-7 using the treating liquid composition and recording liquid compositions according to the present invention prevent bleeding defects such as feathering and color bleed and have a satisfactory image density. They show good gloss. They can reproduce thin lines separately with smooth appearance without jaggies.

The ink sets according to Examples C-8 and C-10 are inferior in feathering, color bleed, drying property, image-fixing property and thin line reproducibility to Examples C-1 through C-7. The ink set according to Examples C-9 and C-11 showed image defects such as white streak or uneven density due to discharge failure, and the properties thereof could not be determined.

The observation on the cross sections of the records with a transmission electron microscope (TEM) found that a striped pattern in density was observed in Examples C-1 through C-11.

### Example D

Treating liquid compositions and recording liquid compositions for constituting ink sets according to the present invention each having the following formulation were prepared. All parts in the formulations are by weight unless otherwise specified and the total of the composition is 100 parts by weight.

### <Treating liquid composition 1>

| | |
|---|---|
| Cationic silica (SNOW TEX AK; Nissan Chemical Industries, Ltd.) | 15.0 parts |
| 2-Pyrrolidone | 12.5 parts |
| Diethylene glycol | 12.5 parts |
| Octanediol | 1.0 part |
| Cationic surfactant (Cation G50; Sanyo Chemical Industries, Ltd.) | 2.0 parts |
| Benzotriazole | 1.0 part |
| Antiseptic-antimold agent (PROXEL LV(s); Avecia Ltd.) | 0.2 part |
| Antifoaming agent (KM-72F; Shin-Etsu Chemical Co., Ltd.) | 0.1 part |
| Water | balance |

The composition was adjusted to pH 4.3 with acetic acid before use.

### <Treating liquid composition 2>

| | |
|---|---|
| Cationic silica (SNOW TEX AK; Nissan Chemical Industries, Ltd.) | 15.0 parts |
| 2-Pyrrolidone | 12.5 parts |
| Diethylene glycol | 12.5 parts |
| Octanediol | 1.0 part |
| Cationic surfactant (Cation G50; Sanyo Chemical Industries, Ltd.) | 2.0 parts |
| Benzotriazole | 1.0 part |
| Antiseptic-antimold agent (PROXEL LV(s); Avecia Ltd.) | 0.2 part |
| antifoaming agent (KM-72F; Shin-Etsu Chemical Co., Ltd.) | 0.1 part |
| Water | balance |

The composition was adjusted to pH 6.3 with LiOH before use.

### <Treating liquid composition 3>

| | |
|---|---|
| Cationic silica (SNOW TEX AK; Nissan Chemical Industries, Ltd.) | 15.0 parts |
| 2-Pyrrolidone | 12.5 parts |
| Diethylene glycol | 12.5 parts |
| Octanediol | 1.0 part |
| Cationic surfactant (Cation G50; Sanyo Chemical Industries, Ltd.) | 2.0 parts |
| Benzotriazole | 1.0 part |
| Antiseptic-antimold agent (PROXEL LV(s); Avecia Ltd.) | 0.2 part |
| Antifoaming agent (KM-72F; Shin-Etsu Chemical Co., Ltd.) | 0.1 part |
| Water | balance |

The composition was adjusted to pH 6.5 with LiOH before use.

### <Treating liquid composition 4>

| | |
|---|---|
| Cationic silica (SNOW TEX AK; Nissan Chemical Industries, Ltd.) | 15.0 parts |
| 2-Pyrrolidone | 12.5 parts |
| Diethylene glycol | 12.5 parts |
| Octanediol | 1.0 part |
| Cationic surfactant (Cation G50; Sanyo Chemical Industries, Ltd.) | 2.0 parts |
| Benzotriazole | 1.0 part |
| Antiseptic-antimold agent (PROXEL LV(s); Avecia Ltd.) | 0.2 part |
| Antifoaming agent (KM-72F; Shin-Etsu Chemical Co., Ltd.) | 0.1 part |
| Water | balance |

The composition was adjusted to pH 6.8 with LiOH before use.

### <Black Recording liquid composition 1 (anionic pigment-containing recording liquid composition)>

| | |
|---|---|
| Carbon black (Cabojet 300; Cabot Corporation, GA) | 10 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Antifoaming agent (KM-72F; Shin-Etsu Chemical Co., Ltd.) | 0.1 part |
| Ion-exchanged water | balance |

The above composition was adjusted to pH 10.5 with an aqueous LiOH solution before use.

### <Yellow Recording liquid composition 1 (anionic pigment containing recording liquid composition)>

| | |
|---|---|
| Resin-coated yellow pigment dispersion (solid content of yellow pigment 10 parts) | 50 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Antifoaming agent (KM-72F; Shin-Etsu Chemical Co., Ltd.) | 0.1 part |
| Ion-exchanged water | balance |

The above composition was adjusted to pH 10.5 with an aqueous LiOH solution before use.

The resin-coated yellow pigment dispersion used in the preparation of Yellow Recording liquid composition 1 (anionic pigment-containing recording liquid composition) was prepared in the following manner.

### Preparation Example of Resin-coated Yellow Pigment Dispersion

### (1) Preparation of Polymer Solution

The inside atmosphere of a 1-liter flask equipped with a mechanical stirrer, thermometer, nitrogen gas feed tube, condenser and dropping funnel was thoroughly replaced with nitrogen gas, and 11.2 g of styrene, 2.8 g of acrylic acid, 12.0 g of lauryl methacrylate, 4.0 g of polyethylene glycol methacrylate, 4.0 g of a styrene macromonomer AS-6 (trade name, available from Toagosei Co., Ltd.) and 0.4 g of mercaptoethanol were placed therein, and the mixture was raised in temperature to 65°C.

Next, a mixture of 100.8 g of styrene, 25.2 g of acrylic acid, 108.0 g of lauryl methacrylate, 36.0 g of polyethylene glycol methacrylate, 60.0 g of hydroxyethyl methacrylate, 36.0 g of a styrene macromonomer AS-6 (trade name, available from Toagosei Co., Ltd.), 3.6 g of mercaptoethanol, 2.4 g of azobisdimethylvaleronitrile and 18 g of methyl ethyl ketone was added dropwise to the above mixture in the flask over 2.5 hours.

After the completion of addition, a mixture of 0.8 g of azobisdimethylvaleronitrile and 18 g of methyl ethyl ketone was added dropwise to the mixture in the flask over 0.5 hour. After aging at 65° C for 1 hour, 0.8 g of azobisdimethylvaleronitrile was further added, followed by aging for further 1 hour. After the completion of the reaction, 364 g of methyl ethyl ketone was added, to yield 800 g of a polymer solution having a concentration of 50%.

Part of the polymer solution was dried and was analyzed by gel permeation chromatography (reference: polystyrene, solvent: tetrahydrofuran), to find that the polymer had a weight-average molecular weight of 15000.

### (2) Preparation of Resin-coated Yellow Pigment Dispersion

The above-prepared polymer solution (22.2 g) was thoroughly mixed with 26.0 g of yellow pigment Symuler Fast Yellow 4181 (trade name, available from Dainippon Ink & Chemicals, Inc.), 13.6 g of a 1 mol/liter aqueous lithium hydroxide solution, 20 g of methyl ethyl ketone and 30 g of ion-exchanged water, and the mixture was kneaded in a three-roll mill NR-84A (trade name, available from Noritake Co., Ltd.) twenty times. The paste was thorougly mixed with 200 g of ion-exchanged water, from which methyl ethyl ketone and water were distilled off using an evaporator, to yield 160 g of a resin-coated yellow pigment dispersion having a solid content of 20.0% by weight.

Using the above-prepared yellow pigment dispersion, Yellow Recording liquid composition 1 having the above formulaiton was prepared.

### <Black Recording liquid composition 2 (anionic pigment-containing recording liquid composition)>

| | |
|---|---|
| Carbon black (Cabojet 300; Cabot Corporation, GA) | 10 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Antifoaming agent (KM-72F; Shin-Etsu Chemical Co., Ltd.) | 0.1 part |
| Ion-exchanged water | balance |

The above composition was adjusted to pH 9.5 with an aqueous LiOH solution before use.

### <Black Recording liquid composition 3 (anionic pigment-containing recording liquid composition)>

| | |
|---|---|
| Carbon black (Cabojet 300; Cabot Corporation, GA) | 10 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Antifoaming agent (KM-72F; Shin-Etsu Chemical Co., Ltd.) | 0.1 part |
| Ion-exchanged water | balance |

The above composition was adjusted to pH 8.8 with an aqueous LiOH solution before use.

### <Black Recording liquid composition 4 (anionic pigment-containing recording liquid composition)>

| | |
|---|---|
| Carbon black (Cabojet 300; Cabot Corporation, GA) | 10 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Antifoaming agent (KM-72F; Shin-Etsu Chemical Co., Ltd.) | 0.1 part |
| Ion-exchanged water | balance |

The above composition was adjusted to pH 8.3 with an aqueous LiOH solution before use.

### <Yellow Recording liquid composition 2 (anionic pigment-containing recording liquid composition)>

| | |
|---|---|
| Resin-coated yellow pigment dispersion (solid content of yellow pigment 10 parts) | 50 parts |
| 1,3-Butanediol . | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Antifoaming agent (KM-72F; Shin-Etsu Chemical Co., Ltd.) | 0.1 part |
| Ion-exchanged water | Balance |

The above composition was adjusted to pH 9.5 with an aqueous LiOH solution before use.

### <Yellow Recording liquid composition 3 (anionic pigment-containing recording liquid composition)>

| | |
|---|---|
| Resin-coated yellow pigment dispersion (solid content of yellow pigment 10 parts) | 50 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Antifoaming agent (KM-72F; Shin-Etsu Chemical Co., Ltd.) | 0.1 part |
| Ion-exchanged water | balance |

The above composition was adjusted to pH 8.8 with an aqueous LiOH solution before use.

### <Yellow Recording liquid composition 4 (anionic pigment-containing recording liquid composition)>

| | |
|---|---|
| Resin-coated yellow pigment dispersion (solid content of yellow pigment 10 parts) | 50 parts |
| 1,3-Butanediol | 22.5 parts |
| Glycerol | 7.5 parts |
| Surfactant (I) wherein R=C₉H₁₉ and k=12 | 1 part |
| 2-Pyrrolidone | 2 parts |
| Sodium dehydroacetate | 0.2 part |
| Sodium thiosulfate | 0.2 part |
| Antiseptic-antimold agent (PROXEL LV(s); Avecia Ltd.) | 0.4 part |
| Antifoaming agent (KM-72F; Shin-Etsu Chemical Co., Ltd.) | 0.1 part |
| Ion-exchanged water | balance |

The above composition was adjusted to pH 8.3 with an aqueous LiOH solution before use.

### Example D-1

Above-prepared Treating liquid composition 1, Yellow Recording liquid composition 1 and Black Recording liquid composition 1 were charged into cartridges for treating liquid composition, for yellow recording liquid composition and for black recording liquid composition, respectively. The cartridges were attached to an image forming apparatus (ink-jet recording apparatus) having the configuration shown in FIG. 7, and printing tests were performed. The main components in the treating liquid composition and recording liquid compositions in Example D-1 are shown in Table 11. The cartridges have identical configuration and dimensions.

The recording medium used in the printing tests was a plain paper My Paper (trade name, available from NBS RICOH Co., Ltd.), except that a canvas for oil painting (fine, available from Sekaido Co., Ltd.) was used in a test on thin line reproducibility. An image was printed by ink-jet system in which the treating liquid composition was first applied to the paper, and each of the color recording liquid compositions were then applied thereto. The amounts of the recording liquid compositions and treating liquid composition in printing were roughly adjusted to the following amounts by controlling the driving waveform and voltage applied ot the ink jet head.

| | |
|---|---|
| Amount of recording liquid composition: | 11.0g/m² |
| Amount of treating liquid composition: | 13.0g/m² |

The feathering, color bleed, image density, color saturation, drying property, gloss, thin line reproducibility and image-fixing properties of the printed matter (record) were determined by the following processes according to the following criteria. The results are shown in Table 11.

A black solid portion of the record according to Example D-1 was cut and its cross section was observed with a transmission electron microscope (TEM). The observation on sectional transmission electron micrographs of a record formed by one-pass printing in which the ink-jet recording head is scanned once, and by multi-pass printing in which the ink-jet recording head is scanned plural times, respectively, shows a striped pattern in density as in Example B-1. Further analysis by energy dispersive X-ray fluorescence spectrometry (EDX) with mapping of elements such as Si, S, O, C, Al, Cu and Ca as mentioned below verifies that the high-density portion is a layer of the treating liquid composition (a layer of aggregate of the fine particles) and the low-density portion is a layer of the recording liquid composition (a layer of aggregate of the colorant), as in Example B-1.

**[Table 9]**

| EDX Analysis (including O and C) | | | | |
|---|---|---|---|---|
| Measuring point | Si (%) | S (%) | O (%) | C (%) |
| 1 | 14.6 | 0.7 | 18.0 | 66.7 |
| 2 | 0.1 | 0.5 | 0.4 | 99.0 |

**[Table 10]**

| EDX Analysis (excluding O and C) | | |
|---|---|---|
| Measuring point | Si (%) | S (%) |
| 1 | 95.4 | 4.6 |
| 2 | 8.1 | 91.9 |

### <Determination Processes>

### (1) Feathering:

The feathering was determined by comparing a black character portion of the print with a rating sample.
- Rating 5:: No bleed
- Rating 4:: Little bleed
- Rating 3:: Some bleed but trivial in practical use
- Rating 2:: Some large bleed
- Rating 1:: Large bleed

### (2) Color Bleed:

The color bleed was determined by printing the character "A" using the yellow recording liquid composition onto a black solid image, and comparing the interface between the two colors with a rating sample.
- Rating 5:: No color mixture
- Rating 4:: Little color mixture
- Rating 3:: Some color mixture but trivial in practical use
- Rating 2:: Some large color mixture
- Rating 1:: Large color mixture

### (3) Image Density:

The optical density of the surface of a black solid portion of the image was measured, from which the image density was determined.

### (4) Color Saturation:

The L*a*b* of the surface of a yellow solid portion of the image was measured, from which the yellow color saturation was determined.

### (5) Drying Property:

A plain paper My Paper (trade name, available from NBS RICOH Co., Ltd.) was pressed to the print immediately after printing, and the transfer of the ink from a black solid portion of the printed image to the plain paper was observed.
- Good:: No ink transfer
- Failure:: Ink transfer

### (6) Gloss:

The gloss at 60 degrees of the print was measured with a glossimeter 4501 (trade name, available from BYK Gardner).

### (7) Thin Line Reproducibility:

A 0.5-mm line-and-space pattern was printed on a canvas for oil painting (fine, available from Sekaido Co., Ltd.), and the thin line reproducibility was determined by obserbation according to the following criteria:
- Good:: Adjacent lines are separated
- Failure:: Adjacent lines are fused

### (8) Image-fixing Property:

The surface of the print was rubbed by fingers 24 hours after printing, and the image-fixing property was determined depending on whether the colorant was transferred or migrated to the fingers.
- Good:: No color migration
- Failure:: Some color migration

### (9) Sectional TEM Observation:

A black solid portion of the print was cut and was observed with a transmission electron microscope (TEM). If the elements distribute unevenly, a striped pattern in density is observed, indicating that the colorant and the fine particles constitute different layers, respectively. The distribuition of the colorant and fine particles can be observed more reliably by mapping the elements with different colors as described above.

### Example D-2 through D-4

Printing tests according to Examples D-2 through D-4 were performed by the procedure of Example D-1, except for using the recording liquid compositions and treating liquid compositions shown in Table 11 instead of Treating liquid composition 1, Black Recording liquid composition 1 and Yellow Recording liquid composition 1. The results are shown in Table 11.

**[Table 11-1]**

| | Treating liquid composition | | Black Recording liquid composition | | Yellow Recording liquid composition | | difference in pH between the treating liquid composition and the recording liquid composition | Sectional TEM observation | Feathering | Color bleed | Image density (black) | Color saturation (yellow) | Drying property (immediately after printing) | Image-fixing property (24 hr after printing) |
|---|---|---|---|---|---|---|---|---|---|---|---|---|---|---|
| | No. | pH | No. | pH | No. | pH | | | | | | | | |
| Example D-1 | 1 | 4.3 | 1 | 10.5 | 1 | 10.5 | 6.2 | striped pattern | 5 | 5 | 1.72 | 104.9 | Good | Good |
| Example D-2 | 2 | 6.3 | 2 | 9.5 | 2 | 9.5 | 3.2 | striped pattern | 4 | 4 | 1.69 | 101.1 | Good | Good |
| Example D-3 | 3 | 6.5 | 3 | 8.8 | 3 | 8.8 | 2.3 | striped pattern | 3 | 3 | 1.65 | 98.3 | Good | Good |
| Example D-4 | 4 | 6.8 | 4 | 8.3 | 4 | 8.3 | 1.5 | unclear striped pattern | 1 | 1 | 1.49 | 85.2 | Failure | Failure |

**[Table 11-2]**

| | Gloss property | Thin line reproducibility | Treating liquid composition | | | Black Recording liquid composition | | | Yellow Recording liquid composition | | |
|---|---|---|---|---|---|---|---|---|---|---|---|
| | | | No. | pH | Zeta potential (mV) | No. | pH | Zeta potential (mV) | No. | pH | Zeta potential (mV) |
| Example D-1 | 3.2 | Good | 1 | 4.3 | +70.3 | 1 | 10.5 | -60.5 | 1 | 10.5 | -58.3 |
| Example D-2 | 3.1 | Good | 2 | 6.3 | +55.2 | 2 | 9.5 | -48.3 | 2 | 9.5 | -45.2 |
| Example D-3 | 2.9 | Good | 3 | 6.5 | +20.8 | 3 | 8.8 | -12.5 | 3 | 8.8 | -15.3 |
| Example D-4 | 2.5 | Failure | 4 | 6.8 | +4.3 | 4 | 8.3 | -4.8 | 4 | 8.3 | -3.3 |

The ink sets of Examples D-1 through D-3 using the treating liquid composition and recording liquid compositions according to the present invention prevent bleeding defects such as feathering and color bleed and have a satisfactory image density. They show good gloss. They can reproduce thin lines separately with smooth appearance without jaggies.

The prints according to D-1 through D-3 show a striped pattern in density upon observation of a cross section with a transmission electron microscope (TEM) as shown in Example D-1.

In contrast, the ink set according to Example D-4 had properties inferior to the ink sets of Examples D-1, D-2 and D-3 but showed unclear striped pattern in density upon cross sectional observation with a transmission electron microscope (TEM).

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. An ink set, comprising:
a treating liquid composition comprising fine particles being so configured that their dispersion is one of kept and broken by an external factor; and
a recording liquid composition comprising a colorant being so configured that one of dispersion of the colorant and dissolution of the colorant is one of kept and broken by the external factor,
wherein the colorant is one of anionic and cationic, and the fine particles are one of anionic and cationic, wherein a charge of the fine particles is opposite from a charge of the colorant and the fine particles and the colorant are suitable to aggregate separately on a recording medium as a result of the break of the dispersion of the treating liquid composition and at least one of the dispersion of the recording liquid composition and dissolution of the recording liquid composition, without the colorant being substantially mixed with the fine particles so that a layer formed from the fine particles and another layer formed from the colorant are formed separately, to thereby form an image.

2. An ink set according to Claim 1, wherein the treating liquid composition and recording liquid composition are each aqueous liquids.

3. An ink set according to Claim 1, wherein the colorant in the recording liquid composition comprises one of:
an anionic group;
a cationic group; and
a compound directly or indirectly coating a surface of the colorant, the compound having one of:
an anionic group; and
a cationic group.

4. An ink set according to Claim 1, wherein the fine particles in the treating liquid composition comprise one of:
an anionic group;
a cationic group; and
a compound directly or indirectly coating a surface of the colorant, the compound having one of:
an anionic group; and
a cationic group.

5. An ink set according to Claim 1, wherein a contact between the treating liquid composition and the recording liquid composition changes the external factor and then the external factor breaks at least one of the dispersion of the treating liquid composition, dispersion of the recording liquid composition, and dissolution of the recording liquid composition.

6. An ink set according to Claim 1, wherein the external factor is the change of pH.

7. An ink set according to Claim 1, wherein the colorant and the fine particles independently have an average particle diameter of 10 nm to 200 nm.

8. An ink set according to Claim 1, wherein a difference in pH between the treating liquid composition and the recording liquid composition is 2 or more.

9. An ink set according to Claim 8, wherein the recording liquid composition has an absolute value of its zeta potential of from 5 mV to 90 mV.

10. An ink set according to Claim 8, wherein the recording liquid composition has pH of from 8.5 to 12.0.

11. An ink set according to Claim 8, wherein the treating liquid composition has an absolute value of its zeta potential of from 5 mV to 90 mV.

12. An ink set according to Claim 8, wherein the treating liquid composition has pH of from 2.0 to 6.5.

13. An ink set according to Claim 8, wherein the treating liquid composition further comprises from 0.001% by weight to 10% by weight of an antifoaming agent.

14. An image forming process, comprising the steps of:
providing an ink set according to claim 1,
contacting the treating liquid composition with the recording liquid composition;
causing a condition change in each of the treating liquid composition and the recording liquid composition, as a result of contacting;
causing the fine particles to aggregate as a result of the condition change; and
causing the colorant to aggregate as a result of the condition change.

15. An image forming process according to Claim 14, wherein the aggregation of the fine particles in the treating liquid composition is a result of a surface potential change of the fine particles; and
the aggregation of the colorant in the recording liquid composition is a result of a surface potential change of the colorant.

16. An image forming process according to Claim 14, wherein a layer consisting essentially of the fine particles is formed as a result of the aggregation of the fine particles; and
a layer consisting essentially of the colorant is formed as a result of the aggregation of the colorant.

17. An image forming process according to Claim 15, a layer consisting essentially of the fine particles is formed as a result of the aggregation of the fine particles; and
a layer consisting essentially of the colorant is formed as a result of the aggregation of the colorant.

18. An image forming process according to Claim 14, wherein the condition changes are caused by ionic migration between the treating liquid composition and the recording liquid composition.

19. An image forming process according to Claim 15, wherein the condition changes are caused by ionic migration between the treating liquid composition and the recording liquid composition.

20. An image forming process according to Claim 14, wherein the aggregate formed from the fine particles fixes to the recording medium; and
the aggregate formed from the colorant fixes to one of the recording medium and the aggregate formed from the fine particles.

21. An image forming process according to Claim 14, wherein, when the treating liquid composition and the recording liquid composition are discharged from an ink-jet head and are superimposed onto the recording medium to form a record having a recorded area, the recorded area has a layer consisting essentially of the colorant and another layer consisting essentially of the fine particles, separately.

22. An image forming process according to Claim 21, wherein the layer consisting essentially of the colorant and the layer consisting essentially of the fine particles independently have a thickness of from 0.01 µm to 10 µm.

23. A set of cartridges to be housed in a housing unit of an image forming apparatus, comprising the ink set of claim 1, wherein
a first cartridge comprises a tank housing the treating liquid composition according to claim 1; and
a second cartridge comprises a tank housing the recording liquid composition according to claim 1.

24. An image forming apparatus, comprising the set of cartridges according to claim 23, wherein the image forming apparatus comprises:
a housing unit housing the set of cartridges according to claim 23; and
a discharging unit for discharging the treating liquid composition and the recording liquid composition separately.

25. An image forming apparatus according to Claim 24, which is configured to form an image on the recording medium by a process comprising the steps of:
contacting the treating liquid composition with the recording liquid composition;
causing a condition change each of the treating liquid composition and the recording liquid composition, as a result of contacting;
causing the fine particles in the treating liquid composition to aggregate as a result of the condition change; and
causing the colorant in the recording liquid composition to aggregate as a result of the condition change.

26. An image forming apparatus according to Claim 24, wherein the discharging unit is an ink-jet recording head.

27. An image forming apparatus according to Claim 26, wherein the ink-jet recording head discharges the compositions by thermal energy.

28. A record, comprising:
a recording medium, and
an image formed by the ink set according to claim 1; wherein the image comprises
a layer consisting essentially of the fine particles in the treating liquid composition; and
a layer consisting essentially of the colorant in the recording liquid composition.

29. A record according to Claim 28, wherein the fine particles are so configured that the dispersion of the fine particles is one of kept and broken by an external factor; and
the colorant are so configured that one of the dispersion of the colorant and dissolution of the colorant is one of kept and broken by the external factor,
wherein the dispersion of the treating liquid composition and one of dispersion of the recording liquid composition and dissolution of the recording liquid composition are broken to cause them to aggregate separately on a recording medium without the colorant being substantially mixed with the fine particles to thereby form the image.

30. A record according to Claim 28,
wherein the layer consisting essentially of the fine particles is formed by a process comprising the steps of:
contacting the treating liquid composition with the recording liquid composition,
causing a condition change in the treating liquid composition as a result of the contact, and
causing the fine particles to aggregate as a result of the condition change; and
wherein the layer consisting essentially of the colorant is formed by a process comprising the steps of:
contacting the recording liquid composition with the treating liquid composition,
causing a condition change in the recording liquid composition as a result of the contact, and
causing the colorant to aggregate as a result of the condition change.

31. A record according to Claim 28,
wherein the layer consisting essentially of the fine particles is formed by a process comprising the steps of:
contacting the treating liquid composition with the recording liquid composition,
causing a condition change in the treating liquid composition as a result of the contact,
causing a change in surface potential of the fine particles as a result of the condition change, and
causing the fine particles to aggregate as a result of the surface potential change, and
wherein the layer consisting essentially of the colorant is formed by a process comprising the steps of:
contacting the recording liquid composition with the treating liquid composition,
causing a condition change in the recording liquid composition as a result of the contact,
causing a change in surface potential of the colorant as a result of the condition change, and
causing the colorant to aggregate as a result of the surface potential change.

32. A record according to Claim 28,
wherein the layer consisting essentially of the fine particles is formed by a process comprising the steps of:
contacting the treating liquid composition with the recording liquid composition,
causing ionic migration between the recording liquid composition and the treating liquid composition as a result of the contact,
causing a condition change in the treating liquid composition as a result of the ionic migration, and
causing the fine particles to aggregate as a result of the condition change, and
wherein the layer consisting essentially of the colorant is formed by a process comprising the steps of:
contacting the recording liquid composition with the treating liquid composition,
causing ionic migration between the treating liquid composition and the recording liquid composition as a result of the contact,
causing a condition change in the recording liquid composition as a result of the ionic migration, and
causing the colorant to aggregate as a result of the condition change.

33. A record according to Claim 28,
wherein the layer consisting essentially of the fine particles is formed by a process comprising the steps of:
contacting the treating liquid composition with the recording liquid composition,
causing ionic migration between the recording liquid composition and the treating liquid composition as a result of the contact,
causing a condition change in the treating liquid composition as a result of the ionic migration,
causing a change in surface potential of the fine particles as a result of the condition change, and
causing the fine particles to aggregate as a result of the surface potential change, and
wherein the layer consisting essentially of the colorant is formed by a process comprising the steps of:
contacting the recording liquid composition with the treating liquid composition,
causing ionic migration between the treating liquid composition and the recording liquid composition as a result of the contact,
causing a condition change in the recording liquid composition as a result of the ionic migration,
causing a change in surface potential of the colorant as a result of the condition change, and
causing the colorant to aggregate as a result of the surface potential change.

## Patentansprüche

1. Tintensatz, umfassend:
eine Behandlungsflüssigkeits-Zusammensetzung, umfassend feine Teilchen, die so konfiguriert ist, dass deren Dispersion durch einen externen Faktor entweder beibehalten oder zerstört wird; und
eine Aufzeichnungsflüssigkeits-Zusammensetzung, umfassend ein farbgebendes Mittel, die so konfiguriert ist, dass entweder die Dispersion des farbgebenden Mittels oder die Lösung des farbgebenden Mittels durch den externen Faktor entweder beibehalten oder zerstört wird,
wobei das farbgebende Mittel entweder anionisch oder kationisch ist und die feinen Teilchen entweder anionisch oder kationisch sind, wobei die Ladung der feinen Teilchen entgegengesetzt zu der Ladung des farbgebenden Mittels ist und die feinen Teilchen und das farbgebende Mittel dazu geeignet sind, als ein Ergebnis der Zerstörung der Dispersion der Behandlungsflüssigkeits-Zusammensetzung und der Dispersion der Aufzeichnungsflüssigkeits-Zusammensetzung und/oder der Lösung der Aufzeichnungsflüssigkeits-Zusammensetzung getrennt voneinander auf einem Aufzeichnungsmedium zu aggregieren, ohne dass das farbgebende Mittel im Wesentlichen mit den feinen Teilchen gemischt ist, so dass eine aus den feinen Teilchen gebildete Schicht und eine andere, aus dem farbgebenden Mittel gebildete Schicht getrennt voneinander gebildet werden, um **dadurch** ein Bild zu erzeugen.

2. Tintensatz gemäß Anspruch 1, wobei die Behandlungsflüssigkeits-Zusammensetzung und die Aufzeichnungsflüssigkeits-Zusammensetzung jeweils wässrige Flüssigkeiten sind.

3. Tintensatz gemäß Anspruch 1, wobei das farbgebende Mittel in der Aufzeichnungsflüssigkeits-Zusammensetzung eine umfasst aus:
einer anionischen Gruppe;
einer kationischen Gruppe; und
einer direkt oder indirekt eine Oberfläche des farbgebenden Mittels beschichtenden Verbindung, wobei die Verbindung aufweist eine aus:
einer anionischen Gruppe; und
einer kationischen Gruppe.

4. Tintensatz gemäß Anspruch 1, wobei die feinen Teilchen in der Behandlungsflüssigkeits-Zusammensetzung eine umfassen aus:
einer anionischen Gruppe;
einer kationischen Gruppe; und
einer direkt oder indirekt eine Oberfläche des farbgebenden Mittels beschichtenden Verbindung, wobei die Verbindung aufweist eine aus:
einer anionischen Gruppe; und
einer kationischen Gruppe.

5. Tintensatz gemäß Anspruch 1, wobei ein Kontakt zwischen der Behandlungsflüssigkeits-Zusammensetzung und der Aufzeichnungsflüssigkeits-Zusammensetzung den externen Faktor verändert und dann der externe Faktor mindestens eines aus der Dispersion der Behandlungsflüssigkeits-Zusammensetzung, der Dispersion der Aufzeichnungsflüssigkeits-Zusammensetzung und der Lösung der Aufzeichnungsflüssigkeits-Zusammensetzung zerstört.

6. Tintensatz gemäß Anspruch 1, wobei der externe Faktor die Änderung des pH-Wertes ist.

7. Tintensatz gemäß Anspruch 1, wobei das farbgebende Mittel und die feinen Teilchen unabhängig voneinander einen mittleren Teilchendurchmesser von 10 nm bis 200 nm haben.

8. Tintensatz gemäß Anspruch 1, wobei der Unterschied im pH-Wert zwischen der Behandlungsflüssigkeits-Zusammensetzung und der Aufzeichnungsflüssigkeits-Zusammensetzung 2 oder mehr ist.

9. Tintensatz gemäß Anspruch 8, wobei die Aufzeichnungsflüssigkeits-Zusammensetzung einen Absolutwert ihres Zeta-Potentials von 5 mV bis 90 mV hat.

10. Tintensatz gemäß Anspruch 8, wobei die Aufzeichnungsflüssigkeits-Zusammensetzung einen pH-Wert von 8,5 bis 12,0 hat.

11. Tintensatz gemäß Anspruch 8, wobei die Behandlungsflüssigkeits-Zusammensetzung einen Absolutwert ihres Zeta-Potentials von 5 mV bis 90 mV hat.

12. Tintensatz gemäß Anspruch 8, wobei die Behandlungsflüssigkeits-Zusammensetzung einen pH-Wert von 2,0 bis 6,5 hat.

13. Tintensatz gemäß Anspruch 8, wobei die Behandlungsflüssigkeits-Zusammensetzung ferner 0,001 Gew.-% bis 10 Gew.-% eines Entschäumungsmittels umfasst.

14. Bilderzeugungsverfahren, umfassend die Schritte von:
Bereitstellen eines Tintensatzes gemäß Anspruch 1,
Kontaktieren der Behandlungsflüssigkeits-Zusammensetzung mit der Aufzeichnungsflüssigkeits-Zusammensetzung;
Veranlassen einer Zustandsänderung in der Behandlungsflüssigkeits-Zusammensetzung und auch in der Aufzeichnungsflüssigkeits-Zusammensetzung als ein Ergebnis des Kontaktierens;
Veranlassen, dass die feinen Teilchen als ein Ergebnis der Zustandsänderung aggregieren; und
Veranlassen, dass das farbgebende Mittel als ein Ergebnis der Zustandsänderung aggregiert.

15. Bilderzeugungsverfahren gemäß Anspruch 14, wobei die Aggregation der feinen Teilchen in der Behandlungsflüssigkeits-Zusammensetzung ein Ergebnis einer Änderung des Oberflächenpotentials der feinen Teilchen ist;
und
die Aggregation des farbgebenden Mittels in der Aufzeichnungsflüssigkeits-Zusammensetzung ein Ergebnis einer Änderung des Oberflächenpotentials des farbgebenden Mittels ist.

16. Bilderzeugungsverfahren gemäß Anspruch 14, wobei eine im Wesentlichen aus den feinen Teilchen bestehende Schicht als ein Ergebnis der Aggregation der feinen Teilchen erzeugt wird; und
eine im Wesentlichen aus dem farbgebenden Mittel bestehende Schicht als ein Ergebnis der Aggregation des farbgebenden Mittels erzeugt wird.

17. Bilderzeugungsverfahren gemäß Anspruch 15, wobei eine im Wesentlichen aus den feinen Teilchen bestehende Schicht als ein Ergebnis der Aggregation der feinen Teilchen erzeugt wird; und
eine im Wesentlichen aus dem farbgebenden Mittel bestehende Schicht als ein Ergebnis der Aggregation des farbgebenden Mittels erzeugt wird.

18. Bilderzeugungsverfahren gemäß Anspruch 14, wobei die Zustandsänderungen durch Ionenwanderung zwischen der Behandlungsflüssigkeits-Zusammensetzung und der Aufzeichnungsflüssigkeits-Zusammensetzung verursacht werden.

19. Bilderzeugungsverfahren gemäß Anspruch 15, wobei die Zustandsänderungen durch Ionenwanderung zwischen der Behandlungsflüssigkeits-Zusammensetzung und der Aufzeichnungsflüssigkeits-Zusammensetzung verursacht werden.

20. Bilderzeugungsverfahren gemäß Anspruch 14, wobei das aus den feinen Teilchen gebildete Aggregat an dem Aufzeichnungsmedium festgelegt wird; und
das aus dem farbgebenden Mittel gebildete Aggregat entweder an dem Aufzeichnungsmedium oder an dem aus den feinen Teilchen gebildeten Aggregat festgelegt wird.

21. Bilderzeugungsverfahren gemäß Anspruch 14, wobei wenn die Behandlungsflüssigkeits-Zusammensetzung und die Aufzeichnungsflüssigkeits-Zusammensetzung von einem Tintenstrahlkopf freigesetzt und auf dem Aufzeichnungsmedium überlagert werden, um eine Aufzeichnung mit einem Aufzeichnungsgebiet zu bilden, das Aufzeichnungsgebiet eine im Wesentlichen aus dem farbgebenden Mittel bestehende Schicht und auf getrennte Weise eine andere, im Wesentlichen aus den feinen Teilchen bestehende Schicht aufweist.

22. Bilderzeugungsverfahren gemäß Anspruch 21, wobei die im Wesentlichen aus dem farbgebenden Mittel bestehende Schicht und die im Wesentlichen aus den feinen Teilchen bestehende Schicht unabhängig voneinander eine Dicke von 0,01 µm bis 10 µm haben.

23. Satz von Kartuschen zur Unterbringung in einer Unterbringungseinheit einer Bilderzeugungsvorrichtung, umfassend den Tintensatz gemäß Anspruch 1, wobei
eine erste Kartusche einen die Behandlungsflüssigkeits-Zusammensetzung gemäß Anspruch 1 beherbergenden Tank umfasst; und
eine zweite Kartusche einen die Aufzeichnungsflüssigkeits-Zusammensetzung gemäß Anspruch 1 beherbergenden Tank umfasst.

24. Bilderzeugungsvorrichtung, umfassend den Satz von Kartuschen gemäß Anspruch 23, wobei die Bilderzeugungsvorrichtung umfasst:
eine Unterbringungseinheit, welche den Satz von Kartuschen gemäß Anspruch 23 beherbergt; und
eine Freisetzungseinheit zum getrennten Freisetzen der Behandlungsflüssigkeits-Zusammensetzung und der Aufzeichnungsflüssigkeits-Zusammensetzung.

25. Bilderzeugungsvorrichtung gemäß Anspruch 24, welche konfiguriert ist, ein Bild auf dem Aufzeichnungsmedium zu erzeugen durch ein Verfahren umfassend die Schritte von:
Kontaktieren der Behandlungsflüssigkeits-Zusammensetzung mit der Aufzeichnungsflüssigkeits-Zusammensetzung;
Veranlassen einer Zustandsänderung der Behandlungsflüssigkeits-Zusammensetzung und auch der Aufzeichnungsflüssigkeits-Zusammensetzung als ein Ergebnis des Kontaktierens;
Veranlassen, dass die feinen Teilchen in der Behandlungsflüssigkeits-Zusammensetzung als ein Ergebnis der Zustandsänderung aggregieren; und
Veranlassen, dass das farbgebende Mittel in der Aufzeichnungsflüssigkeits-Zusammensetzung als ein Ergebnis der Zustandsänderung aggregiert.

26. Bilderzeugungsvorrichtung gemäß Anspruch 24, wobei die Freisetzungseinheit ein Tintenstrahl-Aufzeichnungskopf ist.

27. Bilderzeugungsvorrichtung gemäß Anspruch 26, wobei der Tintenstrahl-Aufzeichnungskopf die Zusammensetzungen mittels Wärmeenergie freisetzt.

28. Aufzeichnung, umfassend:
ein Aufzeichnungsmedium, und
ein Bild, erzeugt mit dem Tintensatz gemäß Anspruch 1; wobei das Bild umfasst
eine im Wesentlichen aus den feinen Teilchen in der Behandlungsflüssigkeits-Zusammensetzung bestehende Schicht; und
eine im Wesentlichen aus dem farbgebenden Mittel in der Aufzeichnungsflüssigkeits-Zusammensetzung bestehende Schicht.

29. Aufzeichnung gemäß Anspruch 28, wobei die feinen Teilchen so konfiguriert sind, dass die Dispersion der feinen Teilchen durch einen externen Faktor entweder beibehalten oder zerstört wird; und
das farbgebende Mittel so konfiguriert ist, dass entweder die Dispersion des farbgebenden Mittels oder die Lösung des farbgebenden Mittels durch den externen Faktor entweder beibehalten oder zerstört wird,
wobei die Dispersion der Behandlungsflüssigkeits-Zusammensetzung und entweder die Dispersion der Aufzeichnungsflüssigkeits-Zusammensetzung oder die Lösung der Aufzeichnungsflüssigkeits-Zusammensetzung zerstört werden, um zu veranlassen, dass diese getrennt auf einem Aufzeichnungsmedium aggregieren, ohne dass das farbgebende Mittel im Wesentlichen mit den feinen Teilchen vermischt wird, um **dadurch** das Bild zu erzeugen.

30. Aufzeichnung gemäß Anspruch 28,
wobei die im Wesentlichen aus den feinen Teilchen bestehende Schicht erzeugt wird durch ein Verfahren umfassend die Schritte von:
Kontaktieren der Behandlungsflüssigkeits-Zusammensetzung mit der Aufzeichnungsflüssigkeits-Zusammensetzung;
Veranlassen einer Zustandsänderung in der Behandlungsflüssigkeits-Zusammensetzung als ein Ergebnis des Kontakts;
Veranlassen, dass die feinen Teilchen als ein Ergebnis der Zustandsänderung aggregieren; und
wobei die im Wesentlichen aus dem farbgebenden Mittel bestehende Schicht erzeugt wird durch ein Verfahren umfassend die Schritte von:
Kontaktieren der Aufzeichnungsflüssigkeits-Zusammensetzung mit der Behandlungsflüssigkeits-Zusammensetzung;
Veranlassen einer Zustandsänderung in der Aufzeichnungsflüssigkeits-Zusammensetzung als ein Ergebnis des Kontakts, und
Veranlassen, dass das farbgebende Mittel als ein Ergebnis der Zustandsänderung aggregiert.

31. Aufzeichnung gemäß Anspruch 28,
wobei die im Wesentlichen aus den feinen Teilchen bestehende Schicht erzeugt wird durch ein Verfahren umfassend die Schritte von:
Kontaktieren der Behandlungsflüssigkeits-Zusammensetzung mit der Aufzeichnungsflüssigkeits-Zusammensetzung,
Veranlassen einer Zustandsänderung in der Behandlungsflüssigkeits-Zusammensetzung als ein Ergebnis des Kontakts;
Veranlassen einer Änderung des Oberflächenpotentials der feinen Teilchen als ein Ergebnis der Zustandsänderung, und
Veranlassen, dass die feinen Teilchen als ein Ergebnis der Änderung des Oberflächenpotentials aggregieren, und
wobei die im Wesentlichen aus dem farbgebenden Mittel bestehende Schicht erzeugt wird durch ein Verfahren umfassend die Schritte von:
Kontaktieren der Aufzeichnungsflüssigkeits-Zusammensetzung mit der Behandlungsflüssigkeits-Zusammensetzung;
Veranlassen einer Zustandsänderung in der Aufzeichnungsflüssigkeits-Zusammensetzung als ein Ergebnis des Kontakts,
Veranlassen einer Änderung des Oberflächenpotentials des farbgebenden Mittels als ein Ergebnis der Zustandsänderung, und
Veranlassen, dass das farbgebende Mittel als ein Ergebnis der Änderung des Oberflächenpotentials aggregiert.

32. Aufzeichnung gemäß Anspruch 28,
wobei die im Wesentlichen aus den feinen Teilchen bestehende Schicht erzeugt wird durch ein Verfahren umfassend die Schritte von:
Kontaktieren der Behandlungsflüssigkeits-Zusammensetzung mit der Aufzeichnungsflüssigkeits-Zusammensetzung,
Veranlassen von Ionenwanderung zwischen der Aufzeichnungsflüssigkeits-Zusammensetzung und der Behandlungsflüssigkeits-Zusammensetzung als ein Ergebnis des Kontakts,
Veranlassen einer Zustandsänderung in der Behandlungsflüssigkeits-Zusammensetzung als ein Ergebnis der Ionenwanderung, und
Veranlassen, dass die feinen Teilchen als ein Ergebnis der Zustandsänderung aggregieren, und
wobei die im Wesentlichen aus dem farbgebenden Mittel bestehende Schicht erzeugt wird durch ein Verfahren umfassend die Schritte von:
Kontaktieren der Aufzeichnungsflüssigkeits-Zusammensetzung mit der Behandlungsflüssigkeits-Zusammensetzung,
Veranlassen von Ionenwanderung zwischen der Behandlungsflüssigkeits-Zusammensetzung und der Aufzeichnungsflüssigkeits-Zusammensetzung als ein Ergebnis des Kontakts,
Veranlassen einer Zustandsänderung in der Aufzeichnungsflüssigkeits-Zusammensetzung als ein Ergebnis der Ionenwanderung, und
Veranlassen, dass das farbgebende Mittel als ein Ergebnis der Zustandsänderung aggregiert.

33. Aufzeichnung gemäß Anspruch 28,
wobei die im Wesentlichen aus den feinen Teilchen bestehende Schicht erzeugt wird durch ein Verfahren umfassend die Schritte von:
Kontaktieren der Behandlungsflüssigkeits-Zusammensetzung mit der Aufzeichnungsflüssigkeits-Zusammensetzung,
Veranlassen von Ionenwanderung zwischen der Aufzeichnungsflüssigkeits-Zusammensetzung und der Behandlungsflüssigkeits-Zusammensetzung als ein Ergebnis des Kontakts,
Veranlassen einer Zustandsänderung in der Behandlungsflüssigkeits-Zusammensetzung als ein Ergebnis der Ionenwanderung,
Veranlassen einer Änderung des Oberflächenpotentials der feinen Teilchen als ein Ergebnis der Zustandsänderung, und
Veranlassen, dass die feinen Teilchen als ein Ergebnis der Änderung des Oberflächenpotentials aggregieren, und
wobei die im Wesentlichen aus dem farbgebenden Mittel bestehende Schicht erzeugt wird durch ein Verfahren umfassend die Schritte von:
Kontaktieren der Aufzeichnungsflüssigkeits-Zusammensetzung mit der Behandlungsflüssigkeits-Zusammensetzung,
Veranlassen von Ionenwanderung zwischen der Behandlungsflüssigkeits-Zusammensetzung und der Aufzeichnungsflüssigkeits-Zusammensetzung als ein Ergebnis des Kontakts,
Veranlassen einer Zustandsänderung in der Aufzeichnungsflüssigkeits-Zusammensetzung als ein Ergebnis der Ionenwanderung,
Veranlassen einer Änderung des Oberflächenpotentials des farbgebenden Mittels als ein Ergebnis der Zustandsänderung, und
Veranlassen, dass das farbgebende Mittel als ein Ergebnis der Änderung des Oberflächenpotentials aggregiert.

## Revendications

1. Jeu d'encre, comprenant :
une composition de liquide de traitement comprenant de fines particules configurées de sorte que leur dispersion est une parmi une conservée et une rompue par un facteur externe ; et
une composition de liquide d'enregistrement comprenant un colorant configurée de telle sorte qu'une parmi une dispersion du colorant et une dissolution du colorant est une parmi une conservée et une rompue par le facteur externe,
dans lequel le colorant est un parmi un colorant anionique et cationique, et les fines particules sont unes parmi des particules anioniques et cationiques, dans lequel une charge des fines particules est opposée à une charge du colorant et les fines particules et le colorant sont appropriés pour être agrégés séparément sur un support d'enregistrement comme un résultat de la rupture de la dispersion de la composition de liquide de traitement et d'au moins une parmi la dispersion de la composition de liquide d'enregistrement et la dissolution de la composition de liquide d'enregistrement, sans que le colorant ne soit sensiblement mélangé avec les fines particules de sorte qu'une couche constituée des fines particules et une autre couche constituée du colorant sont formées séparément, pour former par là une image.

2. Jeu d'encre selon la revendication 1, dans lequel la composition de liquide de traitement et la composition de liquide d'enregistrement sont chacune des liquides aqueux.

3. Jeu d'encre selon la revendication 1, dans lequel le colorant dans la composition de liquide d'enregistrement comprend un parmi :
un groupe anionique ;
un groupe cationique ; et
un composé recouvrant directement ou indirectement une surface du colorant, le composé présentant un parmi :
un groupe anionique ; et
un groupe cationique.

4. Jeu d'encre selon la revendication 1, dans lequel les fines particules dans la composition de liquide de traitement comprennent un parmi :
un groupe anionique ;
un groupe cationique ; et
un composé recouvrant directement ou indirectement une surface du colorant, le composé présentant un parmi :
un groupe anionique ; et
un groupe cationique.

5. Jeu d'encre selon la revendication 1, dans lequel un contact entre la composition de liquide de traitement et la composition de liquide d'enregistrement modifie le facteur externe et le facteur externe rompt alors au moins une parmi la dispersion de la composition de liquide de traitement, la dispersion de la composition de liquide d'enregistrement, et la dissolution de la composition de liquide d'enregistrement.

6. Jeu d'encre selon la revendication 1, dans lequel le facteur externe est la modification de pH.

7. Jeu d'encre selon la revendication 1, dans lequel le colorant et les fines particules présentent indépendamment un diamètre moyen de particules de 10 nm à 200 nm.

8. Jeu d'encre selon la revendication 1, dans lequel une différence de pH entre la composition de liquide de traitement et la composition de liquide d'enregistrement est égale à 2 ou plus.

9. Jeu d'encre selon la revendication 8, dans lequel la composition de liquide d'enregistrement présente une valeur absolue de son potentiel zéta de 5 mV à 90 mV.

10. Jeu d'encre selon la revendication 8, dans lequel la composition de liquide d'enregistrement présente un pH de 8,5 à 12,0.

11. Jeu d'encre selon la revendication 8, dans lequel la composition de liquide de traitement présente une valeur absolue de son potentiel zéta de 5 mV à 90 mV.

12. Jeu d'encre selon la revendication 8, dans lequel la composition de liquide de traitement présente un pH de 2,0 à 6,5.

13. Jeu d'encre selon la revendication 8, dans lequel la composition de liquide de traitement comprend de plus de 0,001 % en poids à 10 % en poids d'un agent antimousse.

14. Procédé pour la formation d'une image comprenant les étapes consistant :
à fournir un jeu d'encre selon la revendication 1,
à mettre la composition de liquide de traitement en contact avec la composition de liquide d'enregistrement ;
à occasionner une modification d'état de chacune de la composition de liquide de traitement et de la composition de liquide d'enregistrement, comme un résultat de la mise en contact ;
à occasionner l'agrégation des fines particules comme un résultat de la modification de l'état ; et
à occasionner l'agrégation du colorant comme un résultat de la modification de l'état.

15. Procédé pour la formation d'une image selon la revendication 14, dans lequel l'agrégation des fines particules dans la composition de liquide de traitement est le résultat d'une modification du potentiel de surface des fines particules ; et
l'agrégation du colorant dans la composition de liquide d'enregistrement est un résultat d'une modification du potentiel de surface du colorant.

16. Procédé pour la formation d'une image selon la revendication 14, dans lequel une couche essentiellement constituée des fines particules est formée comme un résultat de l'agrégation des fines particules ; et
une couche essentiellement constituée du colorant est formée comme un résultat de l'agrégation du colorant.

17. Procédé pour la formation d'une image selon la revendication 15, une couche constituée essentiellement des fines particules est formée comme un résultat de l'agrégation des fines particules ; et
une couche essentiellement constituée du colorant est formée comme un résultat de l'agrégation du colorant.

18. Procédé pour la formation d'une image selon la revendication 14, dans lequel les modifications de condition sont occasionnées par une migration ionique entre la composition liquide de traitement et la composition liquide d'enregistrement.

19. Procédé pour la formation d'une image selon la revendication 15, dans lequel les modifications de condition sont occasionnées par une migration ionique entre la composition liquide de traitement et la composition liquide d'enregistrement.

20. Procédé pour la formation d'une image selon la revendication 14, dans lequel l'agrégat formé par les fines particules se fixe au support d'enregistrement ; et
l'agrégat formé par le colorant se fixe sur l'un parmi le support d'enregistrement et l'agrégat formé par les fines particules.

21. Procédé pour la formation d'une image selon la revendication 14, dans lequel, lorsque la composition de liquide de traitement et la composition de liquide d'enregistrement sont déchargées d'une tête de jet d'encre et sont superposées sur le support d'enregistrement pour former un enregistrement présentant une surface enregistrée, la surface enregistrée présente une couche essentiellement constituée du colorant et une autre couche essentiellement constituée des fines particules, séparément.

22. Procédé pour la formation d'une image selon la revendication 21, dans lequel la couche essentiellement constituée du colorant et la couche essentiellement constituée des fines particules présentent indépendamment une épaisseur de 0,01 µm à 10 µm.

23. Jeu de cartouches à loger dans une unité de boîtier d'un appareil pour la formation d'une image, comprenant le jeu d'encre selon la revendication 1, dans lequel
une première cartouche comprend un récipient logeant la composition de liquide de traitement selon la revendication 1 ; et
une seconde cartouche comprend un récipient logeant la composition de liquide d'enregistrement selon la revendication 1.

24. Appareil pour la formation d'une image comprenant le jeu de cartouches selon la revendication 23, dans lequel l'appareil pour la formation d'une image comprend :
une unité de logement logeant le jeu de cartouches selon la revendication 23 ; et
une unité de décharge pour décharger la composition de liquide de traitement et la composition de liquide d'enregistrement séparément.

25. Appareil pour la formation d'une image selon la revendication 24, lequel est configuré pour former une image sur le support d'enregistrement par un procédé comprenant les étapes consistant :
à mettre la composition de liquide de traitement en contact avec la composition de liquide d'enregistrement ;
à occasionner une modification de condition de chacune de la composition de liquide de traitement et de la composition de liquide d'enregistrement, comme un résultat de la mise en contact ;
à occasionner l'agrégation des fines particules dans la composition de liquide de traitement comme un résultat de la modification de condition ; et
à occasionner l'agrégation du colorant dans la composition de liquide d'enregistrement comme un résultat de la modification de condition.

26. Appareil pour la formation d'une image selon la revendication 24, dans lequel l'unité de décharge est une tête d'enregistrement à jet d'encre.

27. Appareil pour la formation d'une image selon la revendication 26, dans lequel la tête d'enregistrement à jet d'encre décharge les compositions par énergie thermique.

28. Enregistrement comprenant :
un support d'enregistrement, et
une image formée par le jeu d'encre selon la revendication 1 ; dans lequel l'image comprend
une couche essentiellement constituée des fines particules dans la composition liquide de traitement ; et
une couche essentiellement constituée du colorant dans la composition de liquide d'enregistrement.

29. Enregistrement selon la revendication 28, dans lequel les fines particules sont configurées de telle sorte que la dispersion des fines particules est une parmi une conservée et une rompue par un facteur externe ; et
le colorant est configuré de sorte qu'une parmi la dispersion du colorant et la dissolution du colorant est une parmi une conservée et une rompue par le facteur externe,
dans lequel la dispersion de la composition de liquide de traitement et une parmi la dispersion de la composition de liquide d'enregistrement et la dissolution de la composition de liquide d'enregistrement sont rompues pour occasionner l'agrégation de celles-ci séparément sur un support d'enregistrement sans que le colorant ne soit sensiblement mélangé avec les fines particules pour former par là l'image.

30. Enregistrement selon la revendication 28,
dans lequel la couche essentiellement constituée des fines particules est formée par un procédé comprenant les étapes consistant :
à mettre la composition de liquide de traitement en contact avec la composition de liquide d'enregistrement,
à occasionner une modification de condition dans la composition de liquide de traitement comme un résultat de la mise en contact, et
à occasionner l'agrégation des fines particules comme un résultat de la modification de condition ; et
dans lequel la couche essentiellement constituée du colorant est formée par un procédé comprenant les étapes consistant :
à mettre la composition liquide d'enregistrement en contact avec la composition liquide de traitement,
à occasionner une modification de condition dans la composition liquide d'enregistrement comme un résultat de la mise en contact, et
à occasionner l'agrégation du colorant comme un résultat de la modification de condition.

31. Enregistrement selon la revendication 28,
dans lequel la couche essentiellement constituée des fines particules est formée par un procédé comprenant les étapes consistant :
à mettre la composition de liquide de traitement en contact avec la composition de liquide d'enregistrement,
à occasionner une modification de condition dans la composition de liquide de traitement comme un résultat de la mise en contact,
à occasionner une modification du potentiel de surface des fines particules comme un résultat de la modification de condition, et
à occasionner l'agrégation des fines particules comme un résultat de la modification du potentiel de surface, et
dans lequel la couche essentiellement constituée du colorant est formée par un procédé comprenant les étapes consistant :
à mettre la composition liquide d'enregistrement en contact avec la composition liquide de traitement,
à occasionner une modification de condition dans la composition liquide d'enregistrement comme un résultat de la mise en contact,
à occasionner une modification du potentiel de surface du colorant comme un résultat de la modification de condition, et
à occasionner l'agrégation du colorant comme un résultat de la modification du potentiel de surface.

32. Enregistrement selon la revendication 28,
dans lequel la couche essentiellement constituée des fines particules est formée par un procédé comprenant les étapes consistant :
à mettre la composition de liquide de traitement en contact avec la composition de liquide d'enregistrement,
à occasionner une migration ionique entre la composition liquide d'enregistrement et la composition liquide de traitement comme un résultat de la mise en contact,
à occasionner une modification de condition dans la composition de liquide de traitement comme un résultat de la migration ionique, et
à occasionner l'agrégation des fines particules comme un résultat de la modification de condition, et
dans lequel la couche essentiellement constituée du colorant est formée par un procédé comprenant les étapes consistant :
à mettre la composition liquide d'enregistrement en contact avec la composition liquide de traitement,
à occasionner une migration ionique entre la composition liquide de traitement et la composition liquide d'enregistrement comme un résultat de la mise en contact,
à occasionner une modification de condition dans la composition liquide d'enregistrement comme un résultat de la migration ionique, et
à occasionner l'agrégation du colorant comme un résultat de la modification de condition.

33. Enregistrement selon la revendication 28,
dans lequel la couche essentiellement constituée des fines particules est formée par un procédé comprenant les étapes consistant :
à mettre la composition liquide de traitement en contact avec la composition liquide d'enregistrement,
à occasionner une migration ionique entre la composition liquide d'enregistrement et la composition liquide de traitement comme un résultat de la mise en contact,
à occasionner une modification de condition dans la composition liquide de traitement comme un résultat de la migration ionique,
à occasionner une modification du potentiel de surface des fines particules comme un résultat de la modification de condition, et
à occasionner l'agrégation des fines particules comme un résultat de la modification du potentiel de surface, et
dans lequel la couche essentiellement constituée du colorant est formée par un procédé comprenant les étapes consistant :
à mettre la composition liquide d'enregistrement en contact avec la composition liquide de traitement,
à occasionner une migration ionique entre la composition liquide de traitement et la composition liquide d'enregistrement comme un résultat de la mise en contact,
à occasionner une modification de condition dans la composition liquide d'enregistrement comme un résultat de la migration ionique,
à occasionner une modification du potentiel de surface du colorant comme un résultat de la modification de condition, et
à occasionner l'agrégation du colorant comme un résultat de la modification du potentiel de surface.
